# EUROPEAN PATENT APPLICATION

(11) **EP 2 952 958 A1**
(43) Date of publication of application: **09.12.2015**
(21) Application number: 14745547.1
(22) Date of filing: 03.02.2014
(51) Int. Cl.: G02F 1/167, G09G 3/34

(54) **REFLECTIVE DISPLAY DEVICE AND METHOD FOR CONTROLLING SAME**

(30) Priority: 01.02.2013 KR 20130011748; 09.05.2013 KR 20130052275; 10.06.2013 KR 20130066129; 13.09.2013 KR 20130110700
(71) Applicant: Nanobrick Co., Ltd., Suwon-si, Gyeonggi-do 443-270 (KR)
(72) Inventor: JOO, Jae Hyun, Suwon-si Gyeonggi-do 443-270 (KR); LEE, Dong Jin, Suwon-si Gyeonggi-do 443-270 (KR)
(74) Representative: Zardi, Marco
(86) International application number: PCT/KR2014/000912
(87) International publication number: WO 2014/119964

(57) **Abstract**

A reflective display device according to the present invention comprises a first unit cell containing a first fluid in which first charged particles are dispersed; a second unit cell containing a second fluid in which second charged particles are dispersed; an electric field applying unit for applying an electric field to the first and second unit cells; and a control unit for controlling colors displayed from the first and second unit cells by adjusting an intensity of the applied electric field, wherein the first and second particles do not move when the electric field is applied with an intensity less than each of threshold values thereof, and move when the electric field is applied with an intensity equal to or higher than each of the threshold values thereof, and wherein the threshold values of the first and second particles are set to be different from each other.

## Description

### FIELD OF THE INVENTION

The present invention relates to a reflective display device and a method for controlling the same. More particularly, the present invention relates to a reflective display device and a method for controlling the same, wherein various patterns of electric fields are applied to all of a plurality of particles, the minimum intensities (i.e., threshold values) or minimum application times (i.e., response times) of the electric fields for moving the particles being different from each other, such that light transmittance may be adjusted or various colors may be displayed without providing complicated driving means for independently driving the plurality of particles.

### BACKGROUND OF THE INVENTION

Since reflective display devices have advantages of excellent outdoor visibility, remarkable low-power characteristics and the like, they are widely used in various fields such as e-books, mobile displays, and outdoor displays.

One of the representative techniques for reflective display devices is electrophoretic display (EPD) technique, which allows information to be displayed by adjusting the positions of electrified particles using the electrophoretic principle while the electrified particles are dispersed in a dielectric substance.

However, since the degree of particle movement in a conventional electrophoretic display increases linearly as the intensity of the applied electric field increases, it is difficult to drive the conventional electrophoretic display as a passive array. Thus, there is a limit to the conventional electrophoretic display in that it can only be driven as an active array in which thin film transistors (TFTs) are provided, or in a segment manner that drives each electrode individually.

Meanwhile, the electrophoretic display may be divided into a dry-type in which particles move in a moving air and a wet-type in which particles move in a moving fluid, according to the medium used to move the particles. Further, examples of the techniques for rendering colors in the electrophoretic display may include using a color filter, using color particles or color fluids, and the like. Among the above, the technique of using a color filter has drawbacks of low color reproducibility and increased manufacturing cost, and the technique of using color particles or color fluids has drawbacks in that a precise color addressing technique for selectively injecting the color particles or color fluids is required.

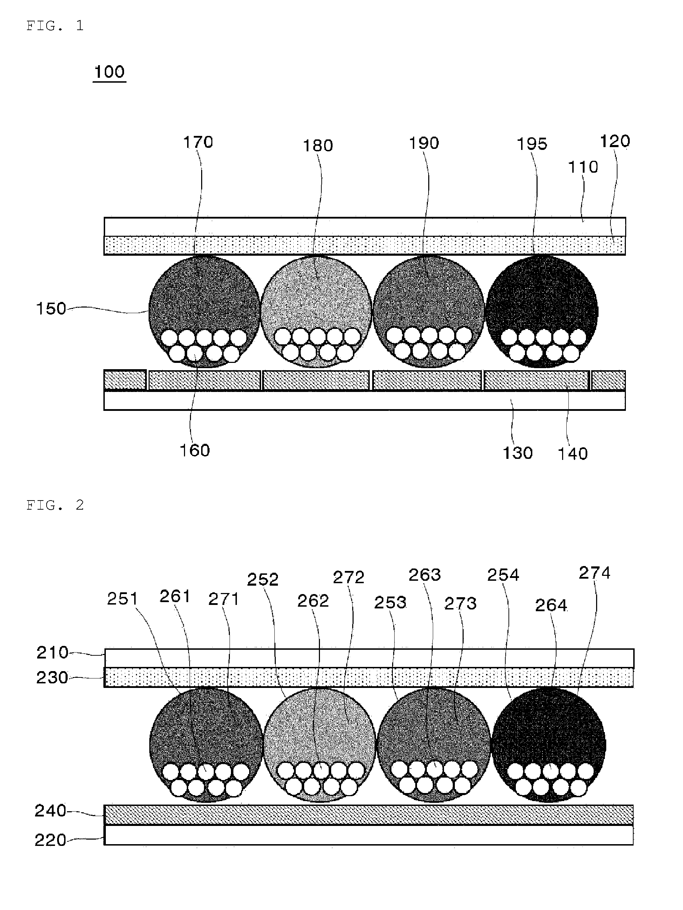

FIG. 1 illustratively shows a configuration of a reflective display device (i.e., an electrophoretic display) according to the prior art. With reference to FIG. 1, a wet-type reflective display device 100 is shown, which renders colors using color fluids 170, 180, 190, 195. The conventional reflective display device 100 shown in FIG. 1 applies an electric field to positively or negatively charged particles 160 dispersed in the color fluids 170, 180, 190, 195 in capsules 150 to allow the particles to move toward a transparent upper substrate 110 and an upper electrode 120 such that the inherent colors of the color fluids 170, 180, 190, 195 or the particles 160 may be displayed. In the conventional reflective display device 100, lower electrodes 140 that may be independently driven for each capsule 150 should be provided in order to independently drive the particles 160 in each of the capsules 150, and the capsules 150 and the corresponding lower electrodes 140 should be correctly addressed, which may cause a problem of complicating the process for manufacturing the reflective display device 100.

### SUMMARY OF THE INVENTION

The present invention is to provide a reflective display device and a method for controlling the same, wherein various patterns of electric fields are applied to all of a plurality of particles, the minimum intensities (i.e., threshold values) or minimum application times (i.e., response times) of the electric fields for moving the particles being different from each other, such that light transmittance may be adjusted or various colors may be displayed without providing complicated driving means for independently driving the plurality of particles or without going through a complicated manufacturing process.

A reflective display device according to the present invention comprises a first unit cell containing a first fluid in which first charged particles are dispersed; a second unit cell containing a second fluid in which second charged particles are dispersed; an electric field applying unit for applying an electric field to the first and second unit cells; and a control unit for controlling colors displayed from the first and second unit cells by adjusting at least one of an intensity and an application time of the applied electric field, wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and wherein the threshold values of the first and second particles are set to be different from each other, and the response times of the first and second particles are set to be different from each other.

Further, a reflective display device according to the present invention comprises first charged particles having a light transmittance equal to or lower than a predetermined value; second charged particles having an inherent color; an electric field applying unit for applying an electric field to the first and second particles; and a control unit for controlling at least one of a light transmittance of incident light to be blocked by the first particles and a color displayed by the second particles, by adjusting at least one of an intensity and an application time of the applied electric field, wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and wherein the threshold values of the first and second particles are set to be different from each other, and the response times of the first and second particles are set to be different from each other.

Furthermore, a reflective display device according to the present invention comprises an upper substrate and a lower substrate; an electrode disposed on at least one of the upper and lower substrates; first charged particles and second charged particles positioned between the upper and lower substrates; a fluid positioned between the upper and lower substrates, in which the first and second particles are dispersed; and a control unit for controlling colors displayed from at least one of the first particles, second particles, fluid, electrode, upper substrate, and lower substrate, by adjusting at least one of an intensity and an application time of an electric field applied to the first particles, second particles and fluid, wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and wherein the threshold values of the first and second particles are set to be different from each other, and the response times of the first and second particles are set to be different from each other.

At least one of the threshold values and the response times of the first and second particles may be set by adjusting at least one of surface charges, zeta potentials, dielectric constants, specific gravities, densities, sizes, shapes, and structures of the first and second particles; a dielectric constant, viscosity, and specific gravity of the fluid in which the first and second particles are dispersed; additives added into the fluid in which the first and second particles are dispersed; an electrode pattern, electrode interval, electrode size, and electrode material of the electric field applying unit; and an electric field substantially applied to the first or second particles by the electric field applying unit.

If the threshold value of the second particles is set to be higher than that of the first particles, none of the first and second particles are moved when the electric field is applied with an intensity lower than the threshold value of the first particles; the first particles are moved by means of an electric force caused by the electric field when the electric field is applied with an intensity equal to or higher than the threshold value of the first particles and lower than that of the second particles; and both of the first and second particles may be moved by means of an electric force caused by the electric field when the electric field is applied with an intensity equal to or higher than the threshold value of the second particles.

If the response time of the second particles is set to be longer than that of the first particles, none of the first and second particles are moved when the electric field is applied for a period of time shorter than the response time of the first particles; the first particles are moved by means of an electric force caused by the electric field when the electric field is applied for a period of time equal to or longer than the response time of the first particles and shorter than that of the second particles; and both of the first and second particles may be moved by means of an electric force caused by the electric field when the electric field is applied for a period of time equal to or longer than the response time of the second particles.

If the threshold value of the second particles is set to be higher than that of the first particles and the response time of the first particles is set to be longer than that of the second particles, none of the first and second particles are moved when the electric field is applied with an intensity lower than the threshold value of the first particles and for a period of time shorter than the response time of the second particles; the second particles are moved by means of an electric force caused by the electric field when the electric field is applied with an intensity equal to or higher than the threshold value of the second particles and for a period of time equal to or longer than the response time of the second particles and shorter than that of the first particles; the first particles are moved by means of an electric force caused by the electric field when the electric field is applied with an intensity equal to or higher than the threshold value of the first particles and lower than that of the second particles and for a period of time equal to or longer than the response time of the first particles; and both of the first and second particles may be moved by means of an electric force caused by the electric field when the electric field is applied with an intensity equal to or higher than the threshold value of the second particles and for a period of time equal to or longer than the response time of the first particles.

Contrast of the displayed color may be adjusted by adjusting at least one of the intensity, direction, application time, number of applications, and application interval of the applied electric field within a range not crossing the threshold value of the first or second particles.

Contrast of the displayed color may be adjusted by adjusting at least one of the intensity, direction, application time, number of applications, and application interval of the applied electric field within a range not crossing the response time of the first or second particles.

After a predetermined period of time has elapsed from when the electric field is applied, the control unit may allow a refresh electric field to be applied to the first and second particles with an intensity lower than that of the above electric field or for an application time shorter than that of the above electric field.

The first and second unit cells may be defined by capsules comprised of light transmitting materials.

The first and second unit cells may be defined by partitions formed in the direction perpendicular to a display surface.

Light transmittance of the incident light may be decreased as the first particles are more dispersed in the direction parallel to a display surface.

Brightness of the color displayed by the second particles may be decreased as the first particles are more dispersed in the direction parallel to a display surface.

Saturation of the color displayed by the second particles may be increased as the second particles are more dispersed in the direction parallel to a display surface.

There may be further included at least one unit cell being defined by at least one of capsules comprised of light transmitting materials and partitions formed in the direction perpendicular to a display surface, and containing the first and second particles.

At least two of the first particles, second particles, fluid, electrode, upper substrate, and lower substrate may have colors different from each other.

At least one of the first particles, second particles, fluid, electrode, upper substrate, and lower substrate may be comprised of a light transmitting material.

The electrode may comprise an upper electrode and a lower electrode configured with at least two partial electrodes.

The electric field may be applied to at least one of a location between the upper electrode and a first partial electrode of the lower electrode, a location between the upper electrode and a second partial electrode of the lower electrode, and a location between the first and second partial electrodes of the lower electrode.

The electrode may be formed to cover only a part of a display surface.

The first and second particles may be charged with polarities different from each other.

Meanwhile, a method for controlling a reflective display device according to the present invention comprises the steps of: applying an electric field to a first unit cell containing a first fluid in which first charged particles are dispersed and a second unit cell containing a second fluid in which second charged particles are dispersed; and controlling colors displayed from the first and second unit cells by adjusting at least one of an intensity and an application time of the applied electric field, wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and wherein the threshold values of the first and second particles are set to be different from each other, and the response times of the first and second particles are set to be different from each other.

Further, a method for controlling a reflective display device according to the present invention comprises the steps of: applying an electric field to first charged particles having a light transmittance equal to or lower than a predetermined value and second charged particles having an inherent color; and controlling at least one of a light transmittance of incident light to be blocked by the first particles and a color displayed by the second particles, by adjusting at least one of an intensity and an application time of the applied electric field, wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and wherein the threshold values of the first and second particles are set to be different from each other, and the response times of the first and second particles are set to be different from each other.

Furthermore, a method for controlling a reflective display device according to the present invention comprises the steps of: applying an electric field to first charged particles and second charged particles dispersed in a fluid positioned between an upper substrate and a lower substrate on which an electrode is disposed; and controlling colors displayed from at least one of the first particles, second particles, fluid, electrode, upper substrate, and lower substrate, by adjusting at least one of an intensity and an application time of the electric field applied to the first particles, second particles and fluid, wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and wherein the threshold values of the first and second particles are set to be different from each other, and the response times of the first and second particles are set to be different from each other.

According to the present invention, light transmittance may be adjusted or brightness or saturation of various colors may be adjusted by controlling the intensity or application time of an electric field applied to at least two types of particles having different threshold values or response times, without providing driving means such as a thin film transistor (TFT) required to selectively apply a specific electric field or forming complicated electrode patterns to selectively display a plurality of colors.

Further, according to the present invention, a reflective display device that may adjust light transmittance or adjust brightness or saturation of various colors may be implemented even by a very simple manufacturing process of merely adjusting a mixture ratio of unit cells (e.g., capsules, banks, or partitions) or particles which may show different colors and injecting them all together between driving electrodes, without precisely arranging the unit cells or particles into a specific pattern.

Furthermore, according to the present invention, color filters need not be used to render various colors, thereby reducing manufacturing cost and enhancing color reproducibility.

Further, according to the present invention, neighboring unit cells may serve as sub-cells for each other, thereby eliminating the need for a separate black matrix for preventing color mix within a unit cell or between different unit cells.

### BRIEF DESCRIPTION OF THE DRAWINGS

FIG. 1 illustratively shows a configuration of a reflective display device according to the prior art;
FIG. 2 illustratively shows a configuration of a reflective display device according to one embodiment of the present invention;
FIG. 3 illustratively shows a threshold value of an intensity of an electric field for moving particles contained in each capsule of a reflective display device according to one embodiment of the present invention;
FIGs. 4A to 4P illustratively show configurations for applying various patterns of electric fields to a reflective display device according to one embodiment of the present invention;
FIG. 5 illustratively shows a minimum application time of an electric field for moving particles (i.e., a response time of the particles) contained in each capsule of a reflective display device according to one embodiment of the present invention;
FIGs. 6A to 6P illustratively show configurations for applying various patterns of electric fields to a reflective display device according to one embodiment of the present invention;
FIG. 7 illustratively shows threshold values of intensities and minimum application times (i.e., response times) of electric fields for moving particles contained in each capsule of a reflective display device according to one embodiment of the present invention;
FIGs. 8A to 8P illustratively show configurations for applying various patterns of electric fields to a reflective display device according to one embodiment of the present invention;
FIGs. 9A to 9F illustratively show a configuration for adjusting contrast of a reflective display device according to one embodiment of the present invention by adjusting application patterns of electric fields;
FIGs. 10A to 10C illustratively show color combinations that may be applied to capsules of a reflective display device according to one embodiment of the present invention;
FIG. 11 illustratively shows a configuration for arranging capsules of a reflective display device according to one embodiment of the present invention;
FIG. 12 illustratively shows color combinations that may be applied to particles and fluids in capsules of a reflective display device according to one embodiment of the present invention;
FIG. 13 illustratively shows a configuration of a reflective display device comprised of a partition structure according to one embodiment of the present invention;
FIGs. 14A and 14B illustratively show a configuration of a reflective display device according to one embodiment of the present invention, in which two types of particles are contained in one unit cell;
FIG. 15 illustratively shows a configuration of a reflective display device according to an embodiment of the present invention, in which rotatable particles are included as unit cells;
FIG. 16 illustratively shows a configuration of a dry-type reflective display device comprised of a partition structure according to one embodiment of the present invention;
FIG. 17 illustratively shows a configuration of an electrowetting reflective display device according to one embodiment of the present invention;
FIG. 18 illustratively shows a configuration of a reflective display device according to another embodiment of the present invention;
FIGs. 19 to 21 illustratively show configurations of a reflective display device according to another embodiment of the present invention;
FIG. 22 illustratively shows threshold values of intensities of electric fields for moving particles contained in each unit cell of a reflective display device according to another embodiment of the present invention;
FIGs. 23A to 23P illustratively show configurations for applying various patterns of electric fields to a reflective display device according to another embodiment of the present invention;
FIG. 24 illustratively shows minimum application times (i.e., response times) of electric fields for moving particles contained in each unit cell of a reflective display device according to another embodiment of the present invention;
FIGs. 25A to 25P illustratively show configurations for applying various patterns of electric fields to a reflective display device according to another embodiment of the present invention;
FIG. 26 illustratively shows threshold values of intensities and minimum application times (i.e., response times) of electric fields for moving particles contained in each unit cell of a reflective display device according to another embodiment of the present invention;
FIGs. 27A to 27P illustratively show configurations for applying various patterns of electric fields to a reflective display device according to another embodiment of the present invention;
FIG. 28 illustratively shows configurations of partitions of a reflective display device according to another embodiment of the present invention;
FIGs. 29 to 32 illustratively show experiment examples in which various colors are displayed by adjusting application times of electric fields when two types of particles each having red (R) and blue (B) colors and different response times are mixed according to one embodiment of the present invention;
FIGs. 33 and 34 illustratively show examples in which various colors are displayed by adjusting application times of electric fields when two types of particles having different colors and response times are mixed according to one embodiment of the present invention;
FIGs. 35 to 38 illustratively show experiment examples in which various colors are displayed by adjusting application times of electric fields when three types of particles each having red (R), yellow (Y) and blue (B) colors and different response times are mixed according to one embodiment of the present invention;
FIG. 39 illustratively shows a configuration for applying a refresh electric field according to one embodiment of the present invention;
FIG. 40 illustratively shows an experiment result obtained by applying a refresh electric field according to one embodiment of the present invention;
FIG. 41 illustratively shows a configuration of a reflective display device according to one embodiment of the present invention;
FIG. 42 illustratively shows threshold values of intensities and application times (i.e., response times) of electric fields for moving base particles and color particles included in a reflective display device according to one embodiment of the present invention;
FIG. 43 illustratively shows configurations for controlling base particles by adjusting intensities of electric fields according to one embodiment of the present invention;
FIG. 44 illustratively shows configurations for controlling color particles by adjusting intensities of electric fields according to one embodiment of the present invention;
FIGs. 45 and 46 illustratively show configurations for applying various patterns of electric fields to a reflective display device according to one embodiment of the present invention;
FIG. 47 illustratively shows configurations for controlling base particles by adjusting application times of electric fields according to one embodiment of the present invention;
FIG. 48 illustratively shows configurations for controlling color particles by adjusting application times of electric fields according to one embodiment of the present invention;
FIGs. 49 and 50 illustratively show configurations for applying various patterns of electric fields to a reflective display device according to one embodiment of the present invention;
FIG. 51 illustratively shows an experiment result obtained by adjusting light transmittance of a reflective display device according to one embodiment of the present invention;
FIGs. 52 to 56 illustratively show configurations of a reflective display device according to yet another embodiment of the present invention;
FIG. 57 illustratively shows threshold values of intensities and application times (i.e., response times) of electric fields for moving first particles and second particles included in a reflective display device according to yet another embodiment of the present invention;
FIG. 58 illustratively shows configurations for controlling a display state of a reflective display device according to yet another embodiment of the present invention by adjusting intensities or application times of electric fields;
FIG. 59 illustratively shows configurations for controlling a display state of a reflective display device according to yet another embodiment of the present invention by adjusting intensities of electric fields applied between an upper electrode and a lower electrode comprised of first and second partial electrodes;
FIG. 60 illustratively shows configurations for controlling a display state of a reflective display device according to yet another embodiment of the present invention by adjusting intensities of electric fields applied between first and second partial electrodes constituting a lower electrode without an upper electrode; and
FIGs. 61 and 62 illustratively show configurations for applying electric fields according to one embodiment of the present invention.

### DETAILED DESCRIPTION OF THE PREFERRED EMBODIMENTS

In the following detailed description of the present invention, references are made to the accompanying drawings that show, by way of illustration, specific embodiments in which the invention may be practiced. These embodiments are described in sufficient detail to enable those skilled in the art to practice the invention. It should be understood that the various embodiments of the invention, although different from each other, are not necessarily mutually exclusive. For example, specific shapes, structures and characteristics described herein may be implemented as modified from one embodiment to another embodiment without departing from the spirit and scope of the invention. Further, it should be understood that the locations and arrangements of individual elements within each embodiment may also be modified without departing from the spirit and scope of the invention. Therefore, the following detailed description is not to be taken in a limiting sense, and the scope of the invention, if properly described, is limited only by the appended claims together with all equivalents thereof. In the drawings, like reference numerals refer to the same or similar functions throughout the several views.

Hereinafter, the present invention will be described in detail with reference to the accompanying drawings to enable those skilled in the art to easily implement the invention.

### 1. Reflective display device according to one embodiment of the present invention

### Configuration of the reflective display device

FIG. 2 illustratively shows a configuration of a reflective display device according to one embodiment of the present invention.

With reference to FIG. 2, a reflective display device 200 according to one embodiment of the present invention may comprise an upper substrate 210, a lower substrate 220, an upper electrode 230, and a lower electrode 240. Further, the reflective display device 200 according to one embodiment of the present invention may comprise at least one capsule (i.e., unit cell) 251 to 254 containing different types of particles 261 to 264 and fluids 271 to 274 between the upper electrode 230 and the lower electrode 240.

Meanwhile, it should be understood that the unit cell described herein does not mean a unit pixel defined in a common display device. That is, an upper electrode or a lower electrode that is independently driven for each unit pixel may be provided, and the unit pixel may be configured with a plurality of unit cells that may show colors different from each other.

According to one embodiment of the present invention, the particles 261 to 264 and the fluids 271 to 274 contained in the at least one capsule 251 to 254 may be configured so that minimum intensities (i.e., threshold values) or minimum application times (i.e., response times) of electric fields required to drive (i.e., move or electrophorese) the particles and fluids.

In particular, according to one embodiment of the present invention, the first to fourth particles 261 to 264 do not move when the intensity of the electric field applied thereto is less than each of the threshold values thereof, while they may move only when the intensity of the applied electric field is equal to or higher than each of the threshold values. Here, the threshold values of the first to fourth particles 261 to 264 may be implemented to be different from each other.

Further, according to one embodiment of the present invention, the first to fourth particles 261 to 264 do not move when the electric field is applied for a period of time less than each of response times thereof, while they may move only when the electric field is applied for a period of time equal to or longer than each of the response times. Here, the response times of the first to fourth particles 261 to 264 may be implemented to be different from each other.

According to one embodiment of the present invention, a method for adjusting the threshold value or response time of particles contained in capsules is provided, which may adjust surface charges, zeta potentials, dielectric constants, specific gravities, densities, sizes, shapes, and structures of the particles; dielectric constants, viscosities, and specific gravities of fluids in which the particles are dispersed; additives added into the fluids in which the particles are dispersed; electrode patterns, electrode intervals, electrode sizes, and electrode materials of electrodes for applying electric fields to the particles and fluids; electric fields substantially applied to the particles by the electrodes; and the like.

For another example, the particles or the fluids in which the particles are dispersed may include ferroelectric or antiferroelectric materials, the dielectric constants of which rapidly increase or decrease according to electric fields. In this case, there exist threshold values of intensities of the electric fields at which the dielectric constants of the particles or fluids rapidly change, and thus there also exist threshold values of intensities of the electric fields that critically affect the movement or behavior of the particles. Consequently, the particles may rapidly move at a specific threshold value.

### Operation of the reflective display device: Adjusting the threshold values

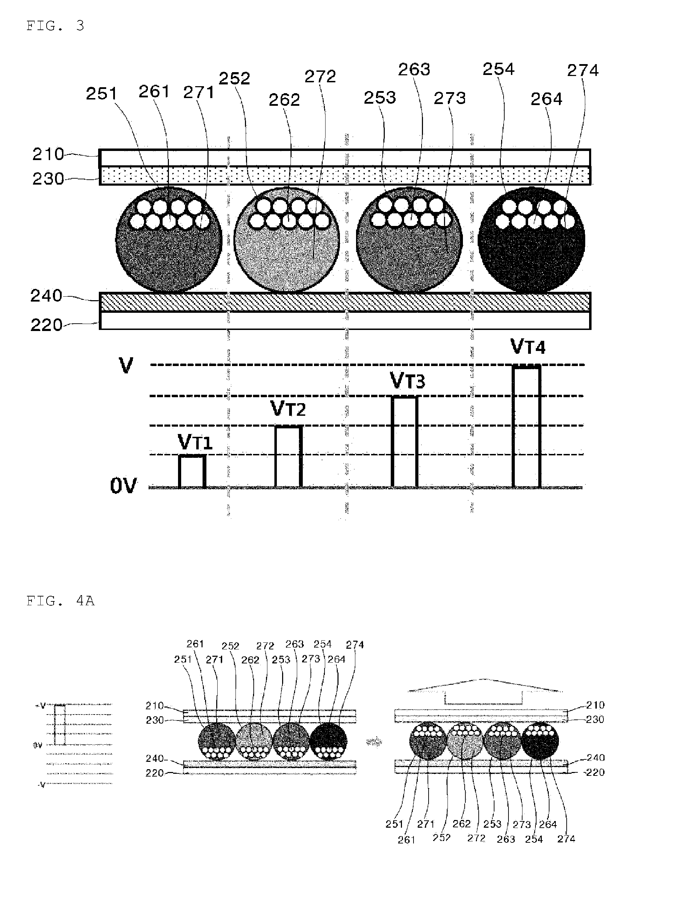

FIG. 3 illustratively shows a threshold value of an intensity of an electric field for moving particles contained in each capsule of a reflective display device according to one embodiment of the present invention.

With reference to FIG. 3, the threshold values of the intensities of the electric fields required to move the first to fourth particles 261 to 264 of the reflective display device 200 may be V_{T1}, V_{T2}, V_{T3}, and V_{T4}, respectively (where V_{T1} < V_{T2} < V_{T3} < V_{T4}). In addition, the first to fourth particles 261 to 264 may show white color, and the first to fourth fluids 271 to 274 in which the first to fourth particles 261 to 264 are respectively dispersed may show red, green, blue, and black colors, respectively. According to one embodiment of the present invention, at least one of white, red, green, blue, and black colors may be diversely displayed by variously adjusting patterns (i.e., directions and intensities) of the electric fields applied to the first to fourth capsules 251 to 254 of the reflective display device 200.

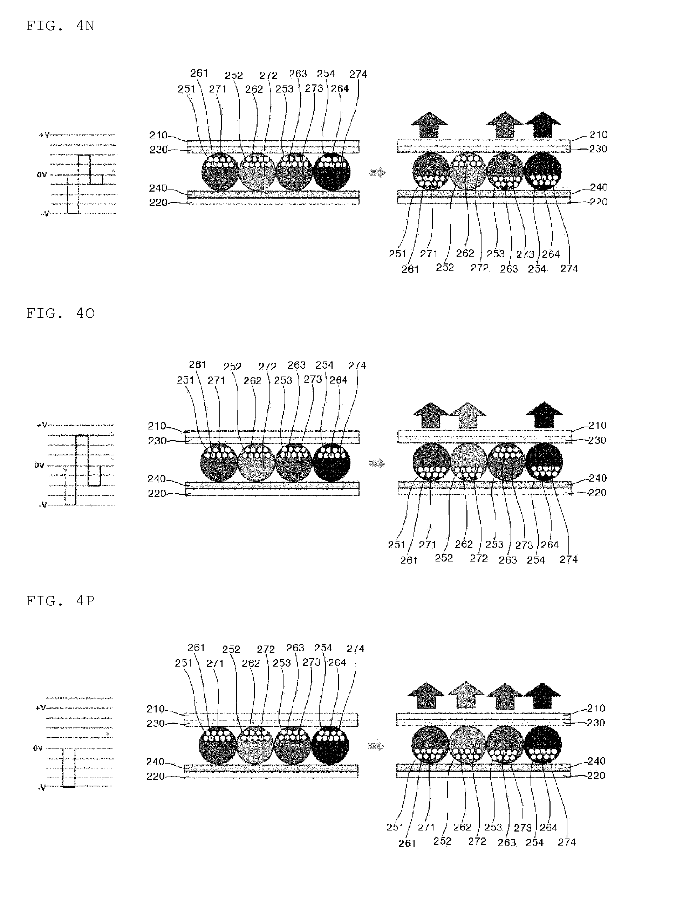

FIGs. 4A to 4P illustratively show configurations for applying various patterns of electric fields to a reflective display device according to one embodiment of the present invention.

First, with reference to FIG. 4A, an electric field is applied to the first to fourth capsules 251 to 254 with an intensity equal to or higher than V_{T4} so that all of the first to fourth particles 261 to 264 may be moved by electrophoresis and located concentratively at the upper electrode 230. Accordingly, the reflective display device 200 according to one embodiment of the present invention may display white, which is the color of the first to fourth particles 261 to 264.

One of the remaining four colors except white may be displayed in the following manners.

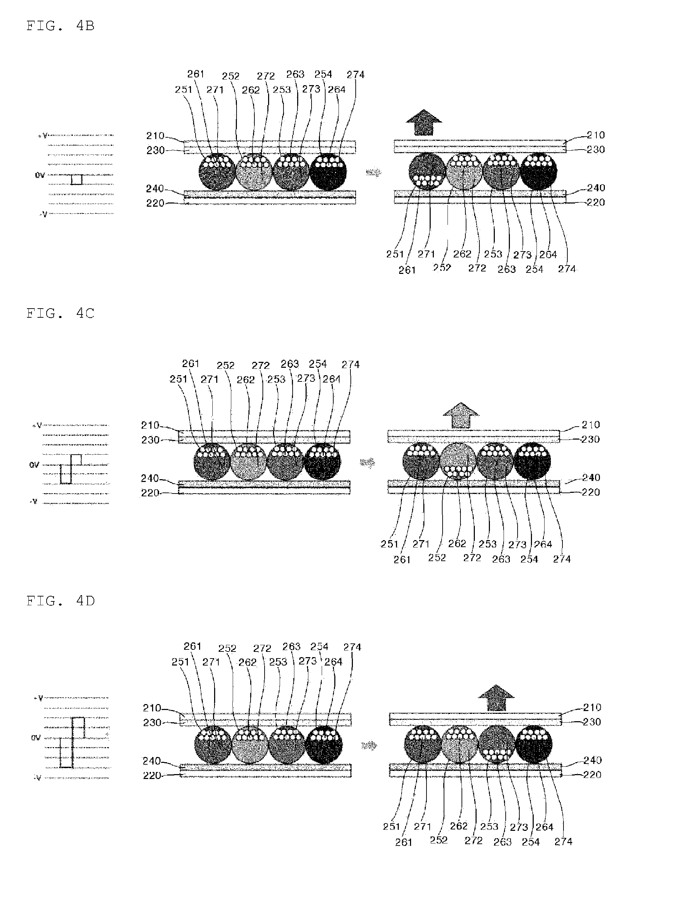

Next, with reference to FIG. 4B, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T1} (i.e., the threshold value of the first particles 261) so that only the first particles 261 may be moved by electrophoresis and located concentratively at the lower electrode 240. Accordingly, the reflective display device 200 according to one embodiment of the present invention may display white (the color of the second to fourth particles 262 to 264) and red (the color of the first fluid 271) in a mixed manner.

Next, with reference to FIG. 4C, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T2} (i.e., the threshold value of the second particles 262) and then an electric field in the same direction of the electric field applied in FIG. 4A is applied thereto with an intensity of V_{T1} (i.e., the threshold value of the first particles 261) so that only the second particles 262 may be moved by electrophoresis and located concentratively at the lower electrode 240. Accordingly, the reflective display device 200 according to one embodiment of the present invention may display white (the color of the first, third and fourth particles 261, 263 and 264) and green (the color of the second fluid 272) in a mixed manner.

Next, with reference to FIG. 4D, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T3} (i.e., the threshold value of the third particles 263) and then an electric field in the same direction of the electric field applied in FIG. 4A is applied thereto with an intensity of V_{T2} (i.e., the threshold value of the second particles 262) so that only the third particles 263 may be moved by electrophoresis and located concentratively at the lower electrode 240. Accordingly, the reflective display device 200 according to one embodiment of the present invention may display white (the color of the first, second and fourth particles 261, 262 and 264) and blue (the color of the third fluid 273) in a mixed manner.

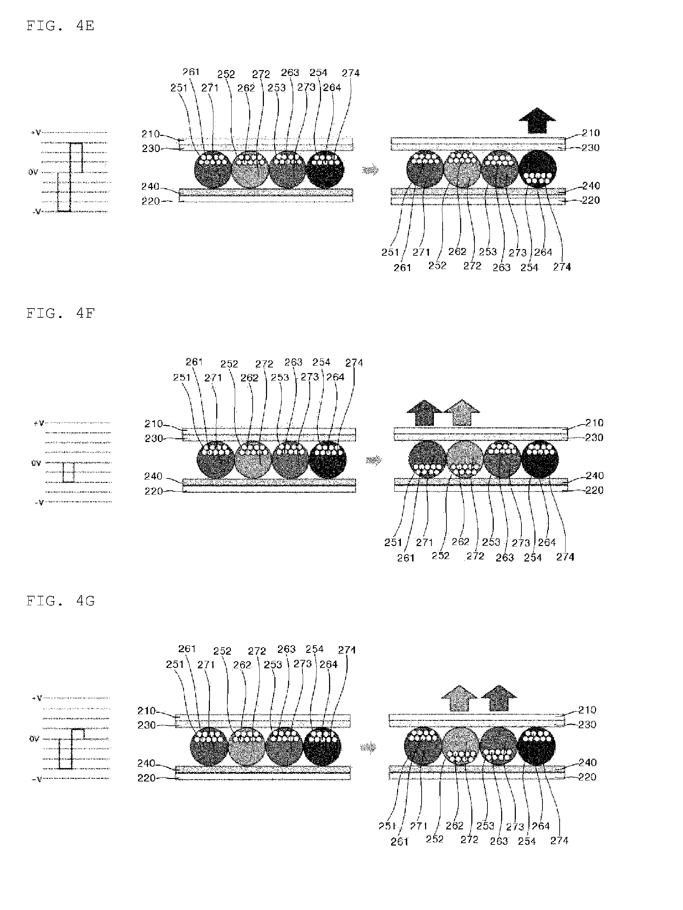

Next, with reference to FIG. 4E, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264) and then an electric field in the same direction of the electric field applied in FIG. 4A is applied thereto with an intensity of V_{T3} (i.e., the threshold value of the third particles 263) so that only the fourth particles 264 may be moved by electrophoresis and located concentratively at the lower electrode 240. Accordingly, the reflective display device 200 according to one embodiment of the present invention may display white (the color of the first, second and third particles 261, 262 and 263) and black (the color of the fourth fluid 274) in a mixed manner.

Two of the remaining four colors except white may be mixed and displayed in the following manners.

Next, with reference to FIG. 4F, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T2} (i.e., the threshold value of the second particles 262) so that the first and second particles 261 and 262 may be moved by electrophoresis and located concentratively at the lower electrode 240. Accordingly, the reflective display device 200 according to one embodiment of the present invention may display white (the color of the third and fourth particles 263 and 264), red (the color of the first fluid 271), and green (the color of the second fluid 272) in a mixed manner.

Next, with reference to FIG. 4G, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T3} (i.e., the threshold value of the third particles 263) and then an electric field in the same direction of the electric field applied in FIG. 4A is applied thereto with an intensity of V_{T1} (i.e., the threshold value of the first particles 261) so that the second and third particles 262 and 263 may be moved by electrophoresis and located concentratively at the lower electrode 240. Accordingly, the reflective display device 200 according to one embodiment of the present invention may display white (the color of the first and fourth particles 261 and 264), green (the color of the second fluid 272), and blue (the color of the third fluid 273) in a mixed manner.

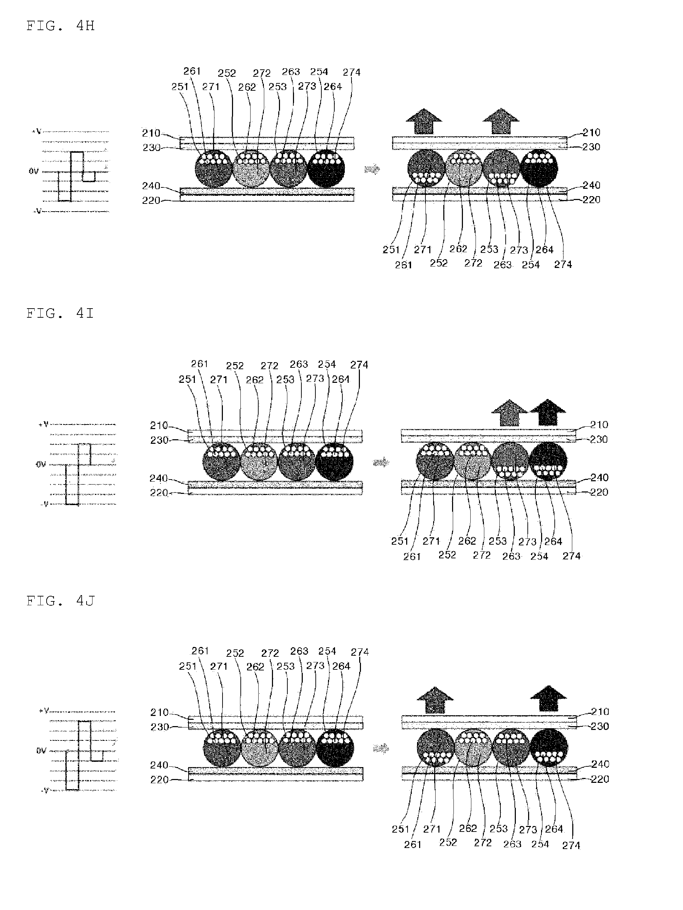

Next, with reference to FIG. 4H, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T3} (i.e., the threshold value of the third particles 263), then an electric field in the same direction of the electric field applied in FIG. 4A is applied thereto with an intensity of V_{T2} (i.e., the threshold value of the second particles 262), and then an electric field in the opposite direction of the electric field applied in FIG. 4A is applied again thereto with an intensity of V_{T1} (i.e., the threshold value of the first particles 261) so that the first and third particles 261 and 263 may be moved by electrophoresis and located concentratively at the lower electrode 240. Accordingly, the reflective display device 200 according to one embodiment of the present invention may display white (the color of the first and third particles 261 and 263), green (the color of the second fluid 272), and black (the color of the fourth fluid 274) in a mixed manner.

Next, with reference to FIG. 4I, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264), and then an electric field in the same direction of the electric field applied in FIG. 4A is applied thereto with an intensity of V_{T2} (i.e., the threshold value of the second particles 262) so that the third and fourth particles 263 and 264 may be moved by electrophoresis and located concentratively at the lower electrode 240. Accordingly, the reflective display device 200 according to one embodiment of the present invention may display white (the color of the first and second particles 261 and 262), blue (the color of the third fluid 273), and black (the color of the fourth fluid 274) in a mixed manner.

Next, with reference to FIG. 4J, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264), then an electric field in the same direction of the electric field applied in FIG. 4A is applied thereto with an intensity of V_{T3} (i.e., the threshold value of the third particles 263), and then an electric field in the opposite direction of the electric field applied in FIG. 4A is applied again thereto with an intensity of V_{T1} (i.e., the threshold value of the first particles 261) so that the second and third particles 262 and 263 may be moved by electrophoresis and located concentratively at the lower electrode 240. Accordingly, the reflective display device 200 according to one embodiment of the present invention may display white (the color of the second and third particles 262 and 263), red (the color of the first fluid 271), and black (the color of the fourth fluid 274) in a mixed manner.

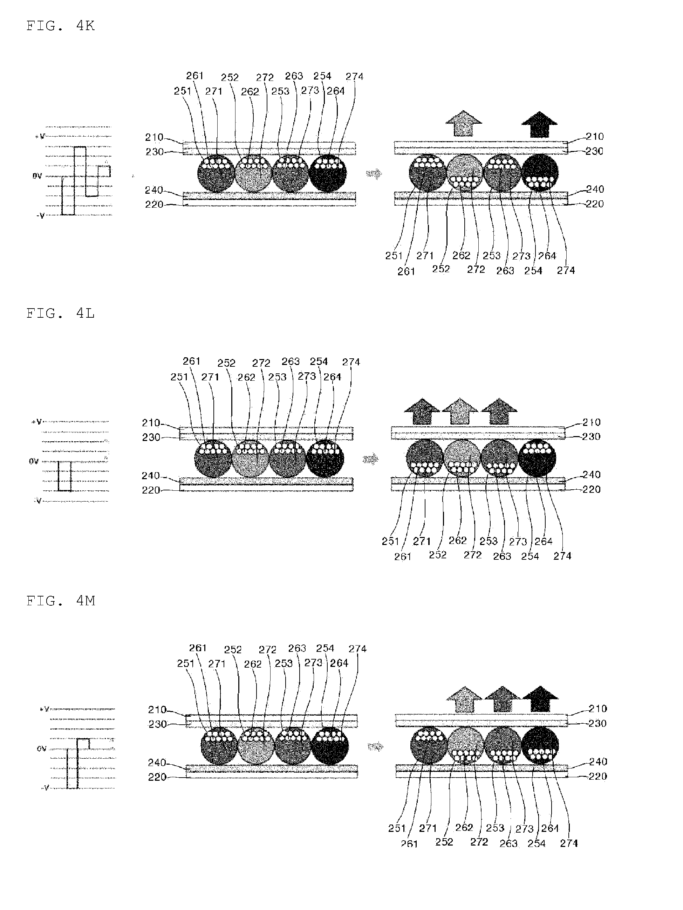

Next, with reference to FIG. 4K, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264), then an electric field in the same direction of the electric field applied in FIG. 4A is applied thereto with an intensity of V_{T3} (i.e., the threshold value of the third particles 263), then an electric field in the opposite direction of the electric field applied in FIG. 4A is applied again thereto with an intensity of V_{T2} (i.e., the threshold value of the second particles 262), and then an electric field in the same direction of the electric field applied in FIG. 4A is applied again thereto with an intensity of V_{T1} (i.e., the threshold value of the first particles 261) so that the first and third particles 261 and 263 may be moved by electrophoresis and located concentratively at the lower electrode 240. Accordingly, the reflective display device 200 according to one embodiment of the present invention may display white (the color of the first and third particles 261 and 263), green (the color of the second fluid 272), and black (the color of the fourth fluid 274) in a mixed manner.

Three of the remaining four colors except white may be mixed and displayed in the following manners.

Next, with reference to FIG. 4L, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T3} (i.e., the threshold value of the third particles 263) so that the first, second and third particles 261, 262 and 263 may be moved by electrophoresis and located concentratively at the lower electrode 240. Accordingly, the reflective display device 200 according to one embodiment of the present invention may display white (the color of the fourth particles 264), red (the color of the first fluid 271), green (the color of the second fluid 272), and blue (the color of the third fluid 273) in a mixed manner.

Next, with reference to FIG. 4M, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264) and then an electric field in the same direction of the electric field applied in FIG. 4A is applied thereto with an intensity of V_{T1} (i.e., the threshold value of the first particles 261) so that the second, third and fourth particles 262, 263 and 264 may be moved by electrophoresis and located concentratively at the lower electrode 240. Accordingly, the reflective display device 200 according to one embodiment of the present invention may display white (the color of the first particles 261), green (the color of the second fluid 272), blue (the color of the third fluid 273), and black (the color of the fourth fluid 274) in a mixed manner.

Next, with reference to FIG. 4N, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264), then an electric field in the same direction of the electric field applied in FIG. 4A is applied thereto with an intensity of V_{T2} (i.e., the threshold value of the second particles 262), and then an electric field in the opposite direction of the electric field applied in FIG. 4A is applied again thereto with an intensity of V_{T1} (i.e., the threshold value of the first particles 261) so that the first, third and fourth particles 261, 263 and 264 may be moved by electrophoresis and located concentratively at the lower electrode 240. Accordingly, the reflective display device 200 according to one embodiment of the present invention may display white (the color of the second particles 262), red (the color of the first fluid 271), blue (the color of the third fluid 273), and black (the color of the fourth fluid 274) in a mixed manner.

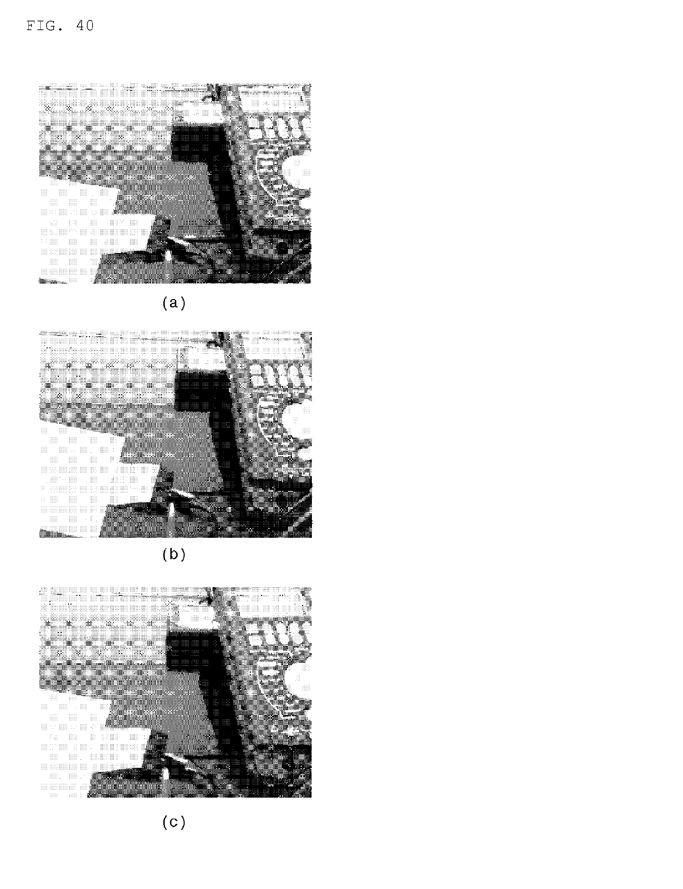

Next, with reference to FIG. 40, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264), then an electric field in the same direction of the electric field applied in FIG. 4A is applied thereto with an intensity of V_{T3} (i.e., the threshold value of the third particles 263), and then an electric field in the opposite direction of the electric field applied in FIG. 4A is applied again thereto with an intensity of V_{T2} (i.e., the threshold value of the second particles 262) so that the first, second and fourth particles 261, 262 and 264 may be moved by electrophoresis and located concentratively at the lower electrode 240. Accordingly, the reflective display device 200 according to one embodiment of the present invention may display white (the color of the third particles 263), red (the color of the first fluid 271), green (the color of the second fluid 272), and black (the color of the fourth fluid 274) in a mixed manner.

All of the remaining four colors except white may be mixed and displayed in the following manner.

Next, with reference to FIG. 4P, when all of the first to fourth particles 261 to 264 are located concentratively at the upper electrode 230, an electric field in the opposite direction of the electric field applied in FIG. 4A is applied to the first to fourth capsules 251 to 254 with an intensity of V_{T4} (i.e., the threshold value of the fourth particles 264) so that all of the first to fourth particles 261 to 264 may be moved by electrophoresis and located concentratively at the lower electrode 240. Accordingly, the reflective display device 200 according to one embodiment of the present invention may display red (the color of the first fluid 271), green (the color of the second fluid 272), blue (the color of the third fluid 273), and black (the color of the fourth fluid 274) in a mixed manner.

### Operation of the reflective display device: Adjusting the response times

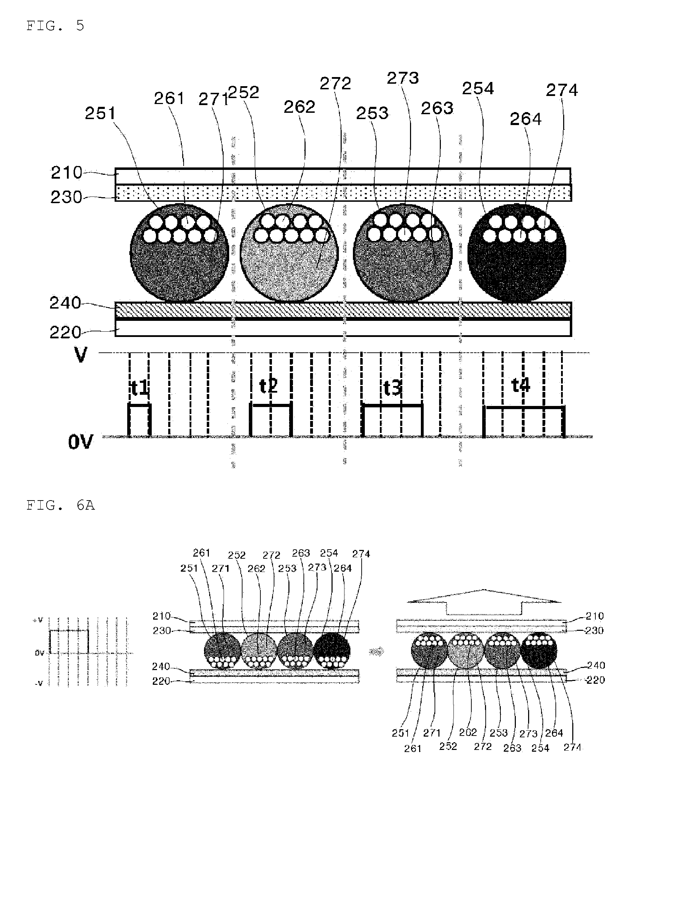

FIG. 5 illustratively shows a minimum application time of an electric field for moving particles (i.e., a response time of the particles) contained in each capsule of a reflective display device according to one embodiment of the present invention.

With reference to FIG. 5, the minimum application times (i.e., response times) of the electric fields required to move the first to fourth particles 261 to 264 of the reflective display device 200 may be t1, t2, t3, and t4, respectively (where t1 < t2 < t3 < t4). Further, the first to fourth particles 261 to 264 may show white color, and the first to fourth fluids 271 to 274 in which the first to fourth particles 261 to 264 are respectively dispersed may show red, green, blue, and black colors, respectively. According to one embodiment of the present invention, at least one of white, red, green, blue, and black colors may be diversely displayed by variously adjusting patterns (i.e., directions and application times) of the electric fields applied to the first to fourth capsules 251 to 254 of the reflective display device 200.

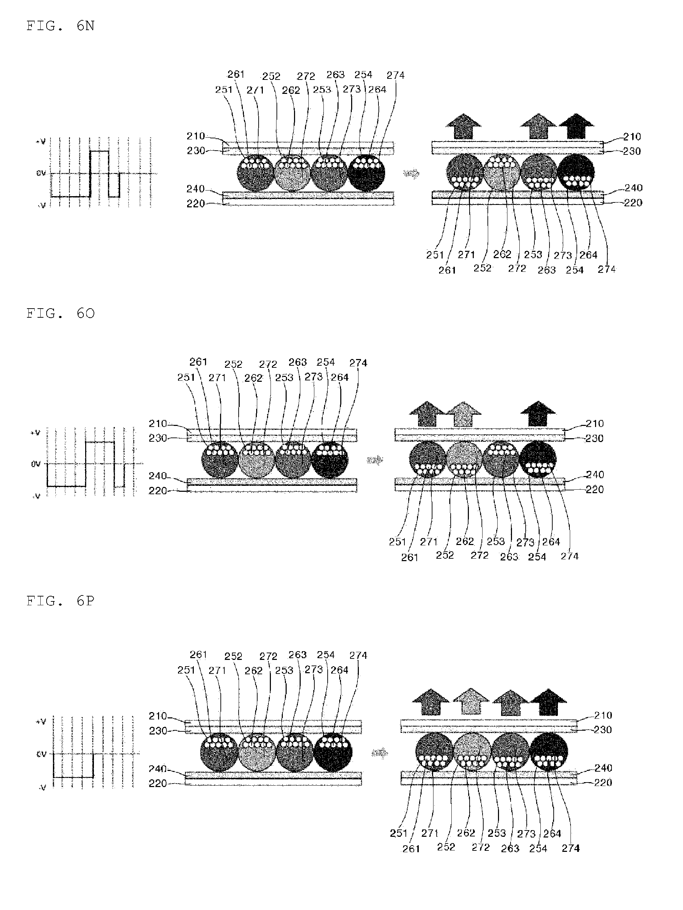

FIGs. 6A to 6P illustratively show configurations for applying various patterns of electric fields to a reflective display device according to one embodiment of the present invention.

First, with reference to FIG. 6A, an electric field is applied to the first to fourth capsules 251 to 254 for a period of time equal to or longer than t4 so that all of the first to fourth particles 261 to 264 may be moved by electrophoresis and located concentratively at the upper electrode 230. Accordingly, the reflective display device 200 according to one embodiment of the present invention may display white, which is the color of the first to fourth particles 261 to 264.

One of the remaining four colors except white may be displayed in the following manners.

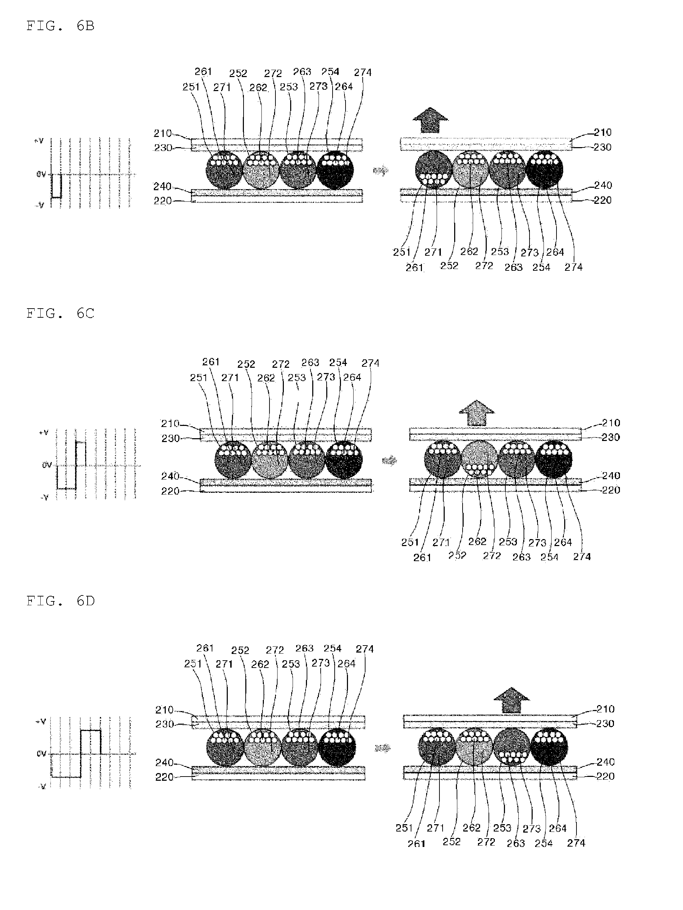

Next, with reference to FIG. 6B, when all of the first to fourth particles 261 to 264 are located concentratively at the upper electrode 230, an electric field in the opposite direction of the electric field applied in FIG. 6A is applied to the first to fourth capsules 251 to 254 for a period of time of t1 (i.e., the response time of the first particles 261) so that only the first particles 261 may be moved by electrophoresis and located concentratively at the lower electrode 240. Accordingly, the reflective display device 200 according to one embodiment of the present invention may display white (the color of the second to fourth particles 262 to 264) and red (the color of the first fluid 271) in a mixed manner.

Next, with reference to FIG. 6C, when all of the first to fourth particles 261 to 264 are located concentratively at the upper electrode 230, an electric field in the opposite direction of the electric field applied in FIG. 6A is applied to the first to fourth capsules 251 to 254 for a period of time of t2 (i.e., the response time of the second particles 262) and then an electric field in the same direction of the electric field applied in FIG. 6A is applied thereto for a period of time of t1 (i.e., the response time of the first particles 261) so that only the second particles 262 may be moved by electrophoresis and located concentratively at the lower electrode 240. Accordingly, the reflective display device 200 according to one embodiment of the present invention may display white (the color of the first, third and fourth particles 261, 263 and 264) and green (the color of the second fluid 272) in a mixed manner.

Next, with reference to FIG. 6D, when all of the first to fourth particles 261 to 264 are located concentratively at the upper electrode 230, an electric field in the opposite direction of the electric field applied in FIG. 6A is applied to the first to fourth capsules 251 to 254 for a period of time of t3 (i.e., the response time of the third particles 263) and then an electric field in the same direction of the electric field applied in FIG. 6A is applied thereto for a period of time of t2 (i.e., the response time of the second particles 262) so that only the third particles 263 may be moved by electrophoresis and located concentratively at the lower electrode 240. Accordingly, the reflective display device 200 according to one embodiment of the present invention may display white (the color of the first, second and fourth particles 261, 262 and 264) and blue (the color of the third fluid 273) in a mixed manner.

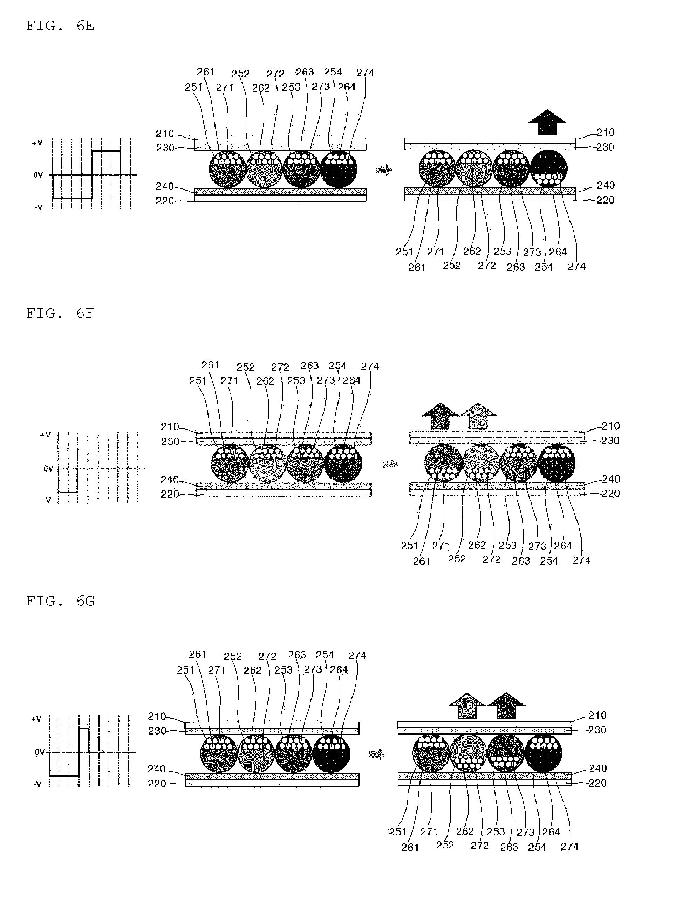

Next, with reference to FIG. 6E, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264) and then an electric field in the same direction of the electric field applied in FIG. 6A is applied thereto for a period of time of t3 (i.e., the response time of the third particles 263) so that only the fourth particles 264 may be moved by electrophoresis and located concentratively at the lower electrode 240. Accordingly, the reflective display device 200 according to one embodiment of the present invention may display white (the color of the first, second and third particles 261, 262 and 263) and black (the color of the fourth fluid 274) in a mixed manner.

Two of the remaining four colors except white may be mixed and displayed in the following manners.

Next, with reference to FIG. 6F, when all of the first to fourth particles 261 to 264 are located concentratively at the upper electrode 230, an electric field in the opposite direction of the electric field applied in FIG. 6A is applied to the first to fourth capsules 251 to 254 for a period of time of t2 (i.e., the response time of the second particles 262) so that the first and second particles 261 and 262 may be moved by electrophoresis and located concentratively at the lower electrode 240. Accordingly, the reflective display device 200 according to one embodiment of the present invention may display white (the color of the third and fourth particles 263 and 264), red (the color of the first fluid 271), and green (the color of the second fluid 272) in a mixed manner.

Next, with reference to FIG. 6G, when all of the first to fourth particles 261 to 264 are located concentratively at the upper electrode 230, an electric field in the opposite direction of the electric field applied in FIG. 6A is applied to the first to fourth capsules 251 to 254 for a period of time of t3 (i.e., the response time of the third particles 263) and then an electric field in the same direction of the electric field applied in FIG. 6A is applied thereto for a period of time of t1 (i.e., the response time of the first particles 261) so that the second and third particles 262 and 263 may be moved by electrophoresis and located concentratively at the lower electrode 240. Accordingly, the reflective display device 200 according to one embodiment of the present invention may display white (the color of the first and fourth particles 261 and 264), green (the color of the second fluid 272), and blue (the color of the third fluid 273) in a mixed manner.

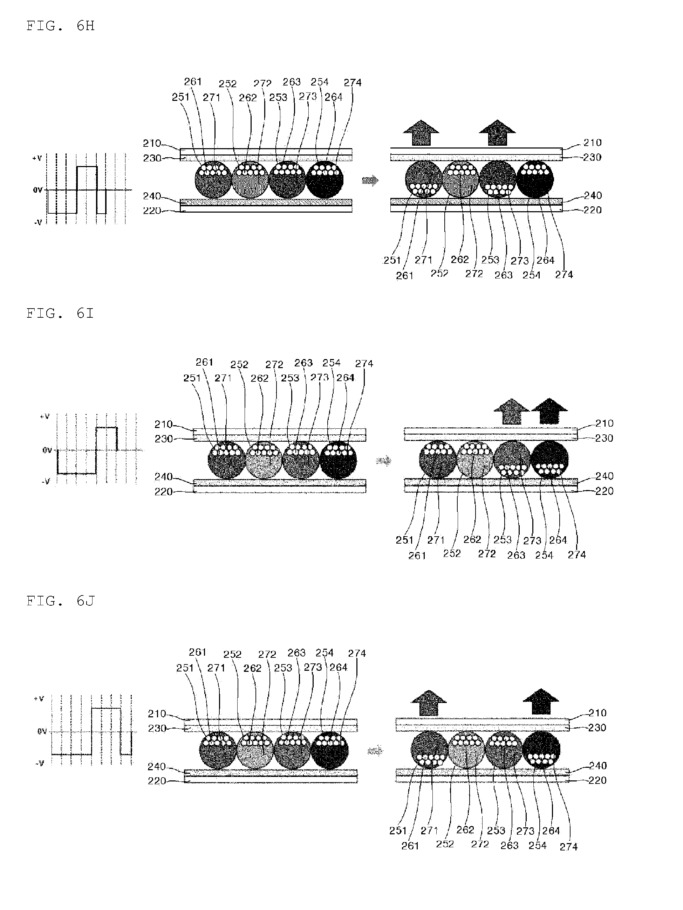

Next, with reference to FIG. 6H, when all of the first to fourth particles 261 to 264 are located concentratively at the upper electrode 230, an electric field in the opposite direction of the electric field applied in FIG. 6A is applied to the first to fourth capsules 251 to 254 for a period of time of t3 (i.e., the response time of the third particles 263), then an electric field in the same direction of the electric field applied in FIG. 6A is applied thereto for a period of time of t2 (i.e., the response time of the second particles 262), and then an electric field in the opposite direction of the electric field applied in FIG. 6A is applied again thereto for a period of time of t1 (i.e., the response time of the first particles 261) so that the first and third particles 261 and 263 may be moved by electrophoresis and located concentratively at the lower electrode 240. Accordingly, the reflective display device 200 according to one embodiment of the present invention may display white (the color of the first and third particles 261 and 263), green (the color of the second fluid 272), and black (the color of the fourth fluid 274) in a mixed manner.

Next, with reference to FIG. 6I, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264), and then an electric field in the same direction of the electric field applied in FIG. 6A is applied thereto for a period of time of t2 (i.e., the response time of the second particles 262) so that the third and fourth particles 263 and 264 may be moved by electrophoresis and located concentratively at the lower electrode 240. Accordingly, the reflective display device 200 according to one embodiment of the present invention may display white (the color of the first and second particles 261 and 262), blue (the color of the third fluid 273), and black (the color of the fourth fluid 274) in a mixed manner.

Next, with reference to FIG. 6J, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264), then an electric field in the same direction of the electric field applied in FIG. 6A is applied thereto for a period of time of t3 (i.e., the response time of the third particles 263), and then an electric field in the opposite direction of the electric field applied in FIG. 6A is applied again thereto for a period of time of t1 (i.e., the response time of the first particles 261) so that the second and third particles 262 and 263 may be moved by electrophoresis and located concentratively at the lower electrode 240. Accordingly, the reflective display device 200 according to one embodiment of the present invention may display white (the color of the second and third particles 262 and 263), red (the color of the first fluid 271), and black (the color of the fourth fluid 274) in a mixed manner.

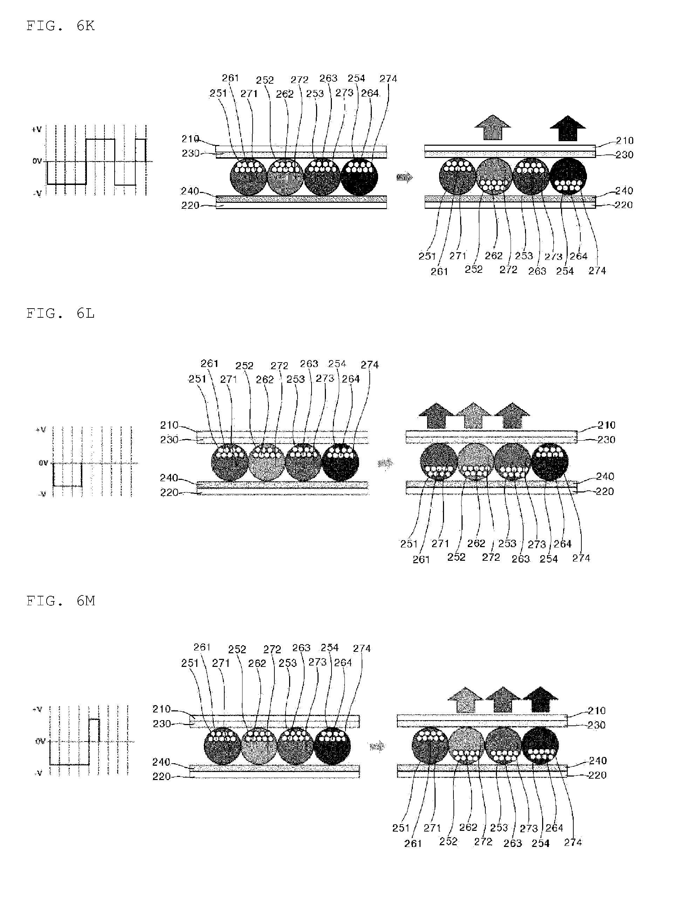

Next, with reference to FIG. 6K, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264), then an electric field in the same direction of the electric field applied in FIG. 6A is applied thereto for a period of time of t3 (i.e., the response time of the third particles 263), then an electric field in the opposite direction of the electric field applied in FIG. 6A is applied again thereto for a period of time of t2 (i.e., the response time of the second particles 262), and then an electric field in the same direction of the electric field applied in FIG. 6A is applied again thereto for a period of time of t1 (i.e., the response time of the first particles 261) so that the first and third particles 261 and 263 may be moved by electrophoresis and located concentratively at the lower electrode 240. Accordingly, the reflective display device 200 according to one embodiment of the present invention may display white (the color of the first and third particles 261 and 263), green (the color of the second fluid 272), and black (the color of the fourth fluid 274) in a mixed manner.

Three of the remaining four colors except white may be mixed and displayed in the following manners.

Next, with reference to FIG. 6L, when all of the first to fourth particles 261 to 264 are located concentratively at the upper electrode 230, an electric field in the opposite direction of the electric field applied in FIG. 6A is applied to the first to fourth capsules 251 to 254 for a period of time of t3 (i.e., the response time of the third particles 263) so that the first, second and third particles 261, 262 and 263 may be moved by electrophoresis and located concentratively at the lower electrode 240. Accordingly, the reflective display device 200 according to one embodiment of the present invention may display white (the color of the fourth particles 264), red (the color of the first fluid 271), green (the color of the second fluid 272), and blue (the color of the third fluid 273) in a mixed manner.

Next, with reference to FIG. 6M, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264), and then an electric field in the same direction of the electric field applied in FIG. 6A is applied thereto for a period of time of t1 (i.e., the response time of the first particles 261) so that the second, third and fourth particles 262, 263 and 264 may be moved by electrophoresis and located concentratively at the lower electrode 240. Accordingly, the reflective display device 200 according to one embodiment of the present invention may display white (the color of the first particles 261), green (the color of the second fluid 272), blue (the color of the third fluid 273), and black (the color of the fourth fluid 274) in a mixed manner.

Next, with reference to FIG. 6N, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264), then an electric field in the same direction of the electric field applied in FIG. 6A is applied thereto for a period of time of t2 (i.e., the response time of the second particles 262), and then an electric field in the opposite direction of the electric field applied in FIG. 6A is applied again thereto for a period of time of t1 (i.e., a response time of the first particles 261) so that the first, third and fourth particles 261, 263 and 264 may be moved by electrophoresis and located concentratively at the lower electrode 240. Accordingly, the reflective display device 200 according to one embodiment of the present invention may display white (the color of the second particles 262), red (the color of the first fluid 271), blue (the color of the third fluid 273), and black (the color of the fourth fluid 274) in a mixed manner.

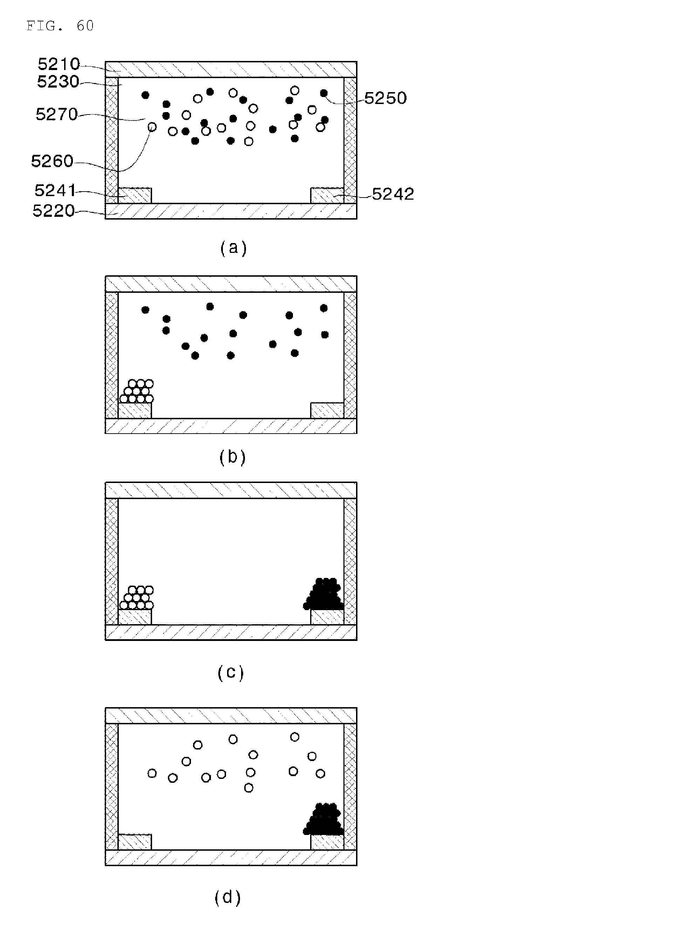

Next, with reference to FIG. 60, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264), then an electric field in the same direction of the electric field applied in FIG. 6A is applied thereto for a period of time of t3 (i.e., the response time of the third particles 263), and then an electric field in the opposite direction of the electric field applied in FIG. 6A is applied again thereto for a period of time of t2 (i.e., the response time of the second particles 262) so that the first, second and fourth particles 261, 262 and 264 may be moved by electrophoresis and located concentratively at the lower electrode 240. Accordingly, the reflective display device 200 according to one embodiment of the present invention may display white (the color of the third particles 263), red (the color of the first fluid 271), green (the color of the second fluid 272), and black (the color of the fourth fluid 274) in a mixed manner.

All of the remaining four colors except white may be mixed and displayed in the following manner.

Next, with reference to FIG. 6P, when all of the first to fourth particles 261 to 264 are located concentratively at the upper electrode 230, an electric field in the opposite direction of the electric field applied in FIG. 6A is applied to the first to fourth capsules 251 to 254 for a period of time of t4 (i.e., the response time of the fourth particles 264) so that all of the first to fourth particles 261 to 264 may be moved by electrophoresis and located concentratively at the lower electrode 240. Accordingly, the reflective display device 200 according to one embodiment of the present invention may display red (the color of the first fluid 271), green (the color of the second fluid 272), blue (the color of the third fluid 273), and black (the color of the fourth fluid 274) in a mixed manner.

### Operation of the reflective display device: Adjusting the threshold values and response times

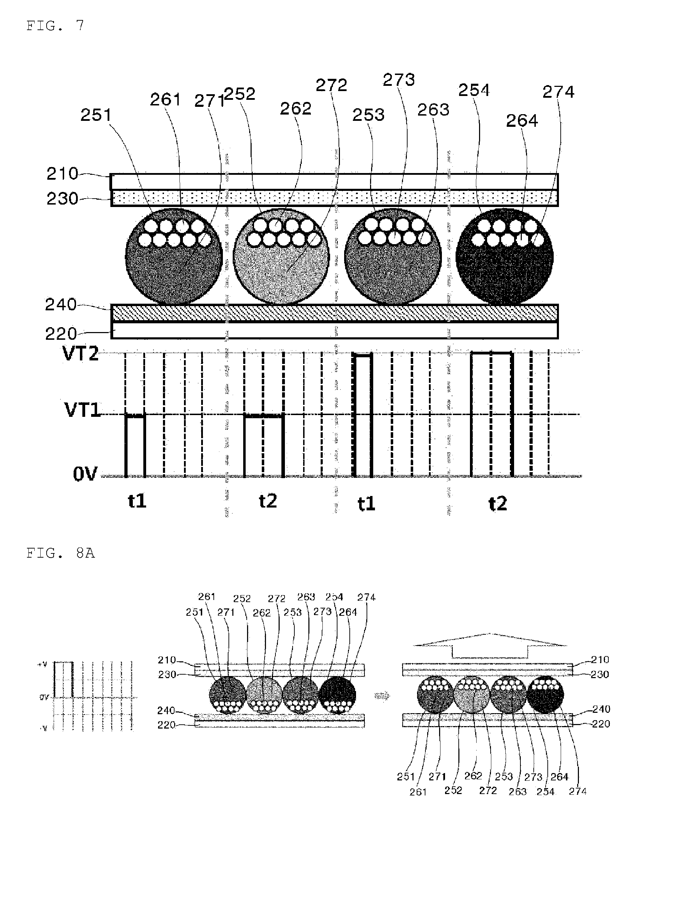

FIG. 7 illustratively shows threshold values of intensities and minimum application times (i.e., response times) of electric fields for moving particles contained in each capsule of a reflective display device according to one embodiment of the present invention.

With reference to FIG. 7, the threshold values of intensities of the electric fields required to move the first to fourth particles 261 to 264 of the reflective display device 200 may be V_{T1}, V_{T1}, V_{T2}, and V_{T2}, respectively (where V_{T1} < V_{T2}). Further, the minimum application times (i.e., response times) of the electric fields required to move the first to fourth particles 261 to 264 of the reflective display device 200 may be t1, t2, t1, and t2, respectively (where t1 < t2). In addition, the first to fourth particles 261 to 264 may show white color, and the first to fourth fluids 271 to 274 in which the first to fourth particles 261 to 264 are respectively dispersed may show red, green, blue, and black colors, respectively. According to one embodiment of the present invention, at least one of white, red, green, blue, and black colors may be diversely displayed by variously adjusting patterns (i.e., directions, intensities and application times) of the electric fields applied to the first to fourth capsules 251 to 254 of the reflective display device 200.

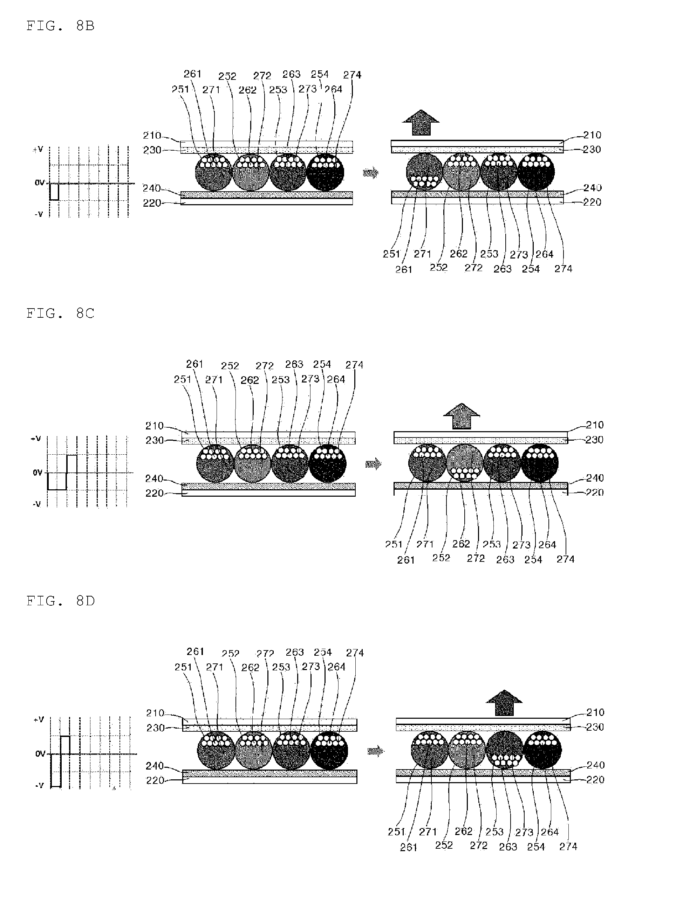

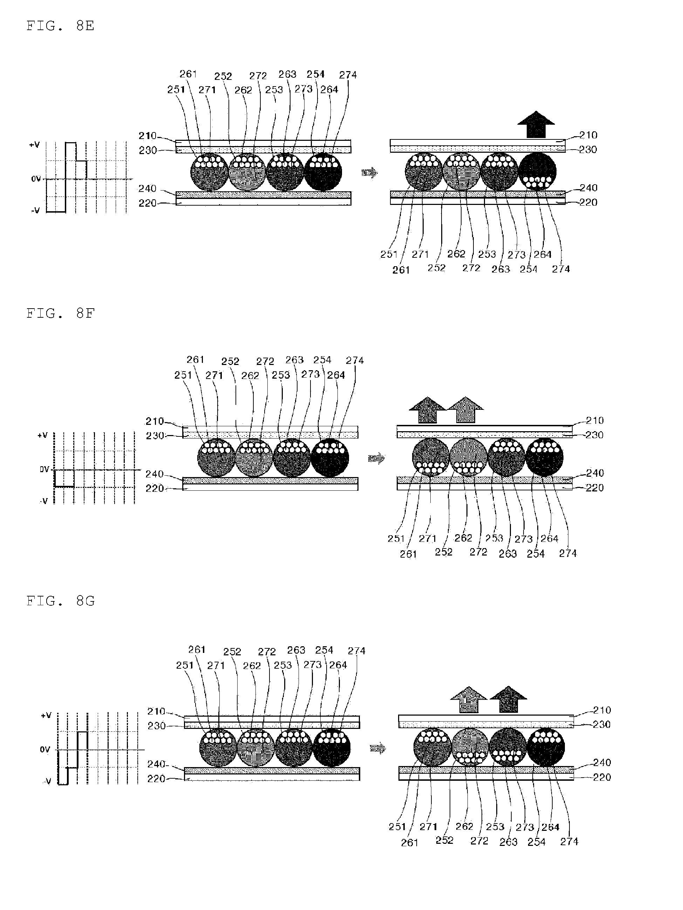

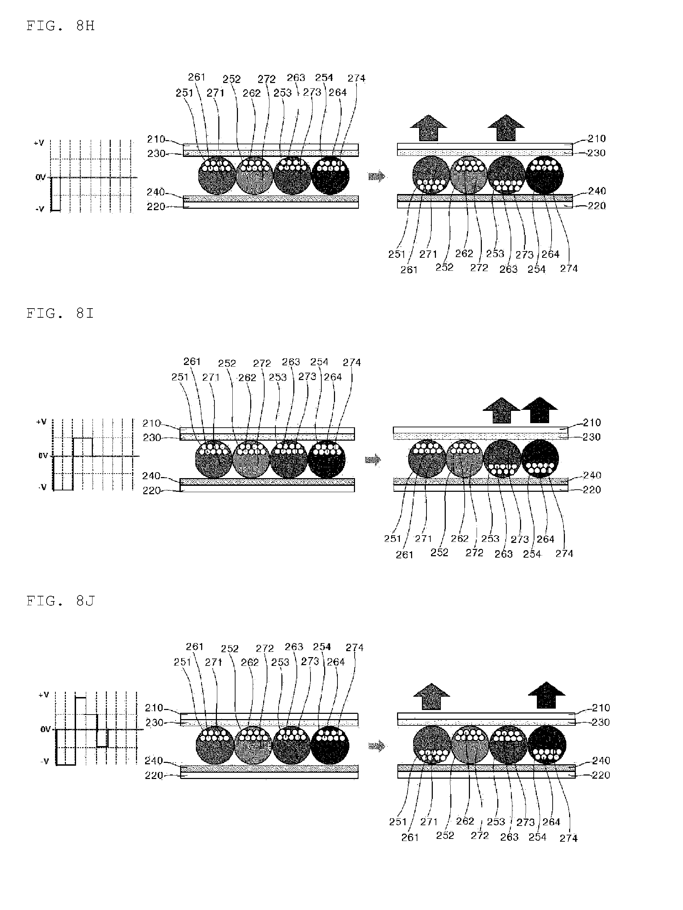

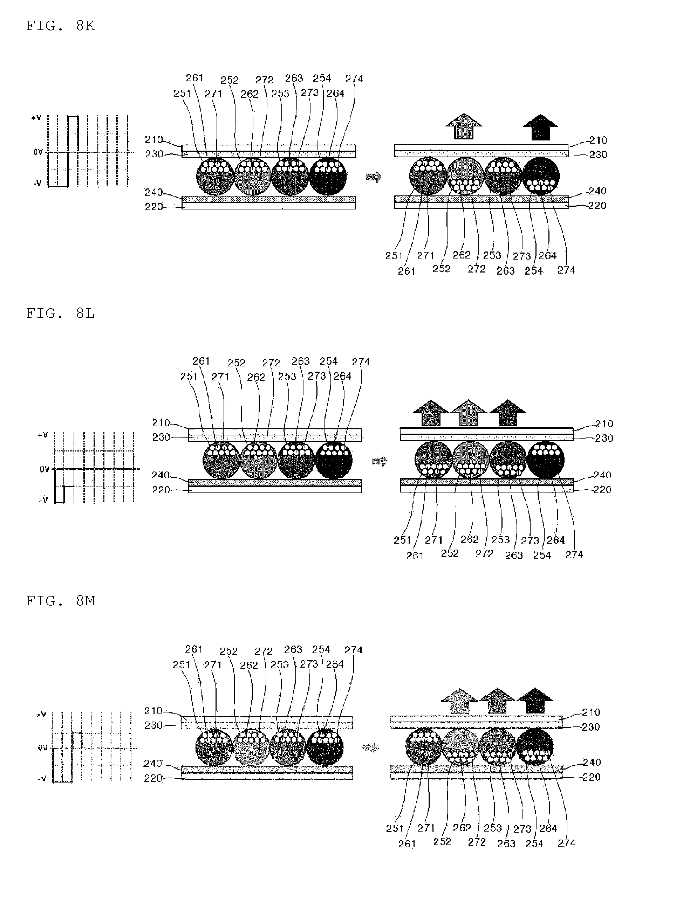

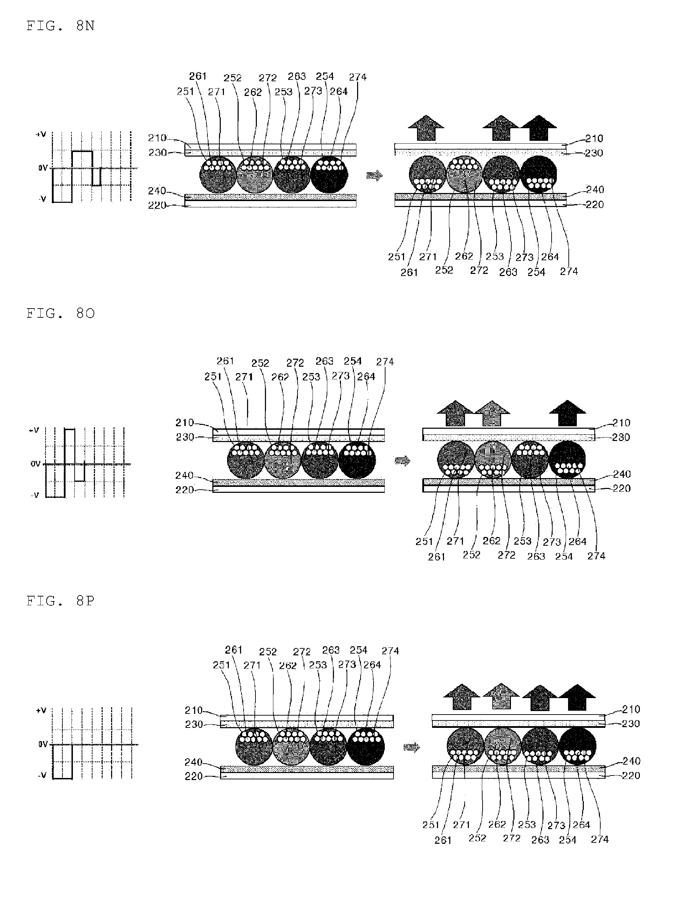

FIGs. 8A to 8P illustratively show configurations for applying various patterns of electric fields to a reflective display device according to one embodiment of the present invention.

First, with reference to FIG. 8A, an electric field is applied to the first to fourth capsules 251 to 254 with an intensity equal to or higher than V_{T2} (i.e., the threshold values of the third and fourth particles 263 and 264) and for a period of time of t2 (i.e., the response times of the second and fourth particles 262 and 264) so that all of the first to fourth particles 261 to 264 may be moved by electrophoresis and located concentratively at the upper electrode 230. Accordingly, the reflective display device 200 according to one embodiment of the present invention may display white, which is the color of the first to fourth particles 261 to 264.

Next, FIGs. 8B to 8E illustrate embodiments in which one of the remaining four colors except white is displayed. Further, FIGs. 8F to 8K illustrate embodiments in which two of the remaining four colors except white are mixed and displayed. Further, FIGs. 8L to 8O illustrate embodiments in which three of the remaining four colors except white are mixed and displayed. Further, FIG. 8P illustrates an embodiment in which all of the remaining four colors except white are mixed and displayed.

The embodiments of FIGs. 8A to 8P correspond to the combinations of those of FIGs. 4A to 4P and FIGs. 6A to 6P. Therefore, detailed description of the embodiments of FIGs. 8A to 8P will be replaced by the description of those of FIGs. 4A to 4P and FIGs. 6A to 6P.

Meanwhile, although it has been described in the above embodiments that the colors of the first to fourth particles 261 to 264 are all white and the colors of the first to fourth fluids 271 to 274 are red, green, blue, and black, respectively, the present invention is not limited thereto. On the contrary, it may naturally be assumed that the colors of the first to fourth particles 261 to 264 are red, green, blue, and black, respectively, and the colors of the first to fourth fluids 271 to 274 are all white.

Further, although it has been described in the above embodiments that an electric field is applied to allow all of the first to fourth particles 261 to 264 to be located concentratively at the upper electrode 230 and then additional electric fields are applied to render various colors, the present invention is not limited thereto. On the contrary, it may naturally be assumed that an electric field in the opposite direction is applied to allow all of the first to fourth particles 261 to 264 to be located concentratively at the lower electrode 240 and then additional electric fields are applied to render various colors.

### Operation of the reflective display device: Adjusting the contrast

Meanwhile, according to one embodiment of the present invention, contrast (gray scale) of colors displayed in the reflective display device 200 may be adjusted by adjusting patterns of electric fields applied to each capsule of the reflective display device 200.

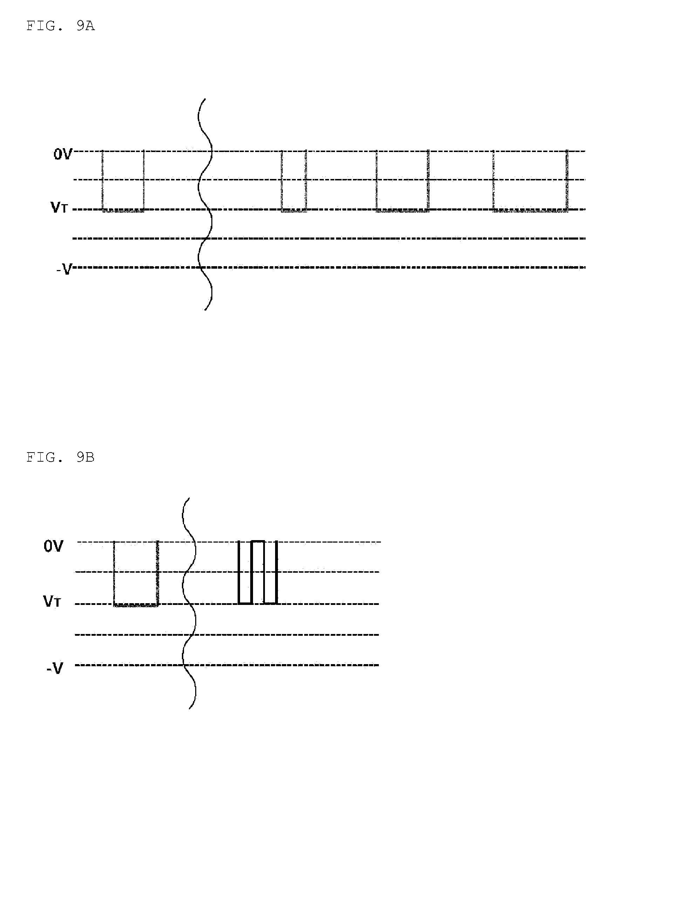

FIGs. 9A to 9F illustratively show a configuration for adjusting contrast of a reflective display device according to one embodiment of the present invention by adjusting application patterns of electric fields.

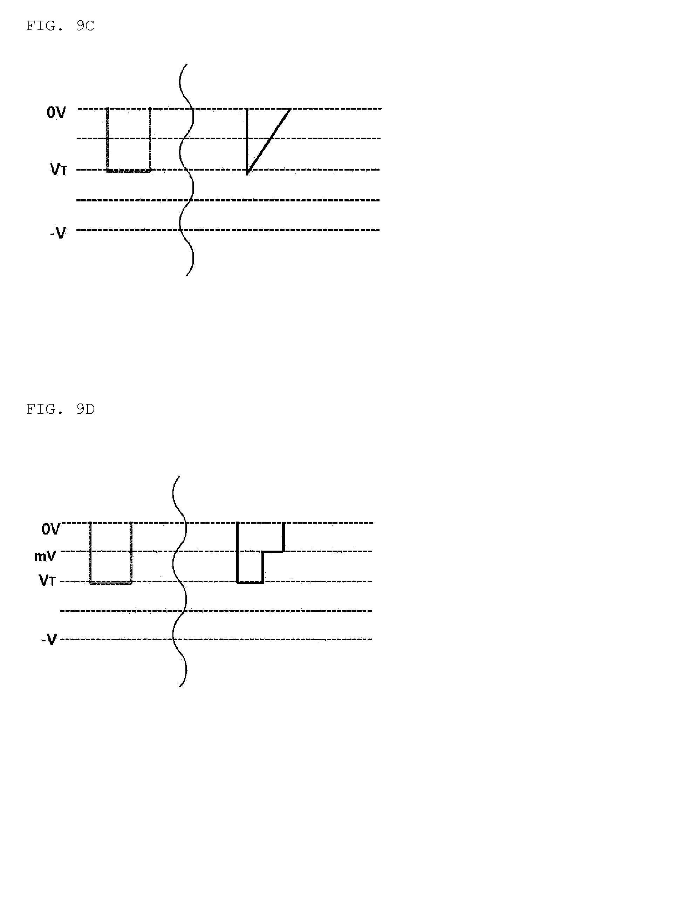

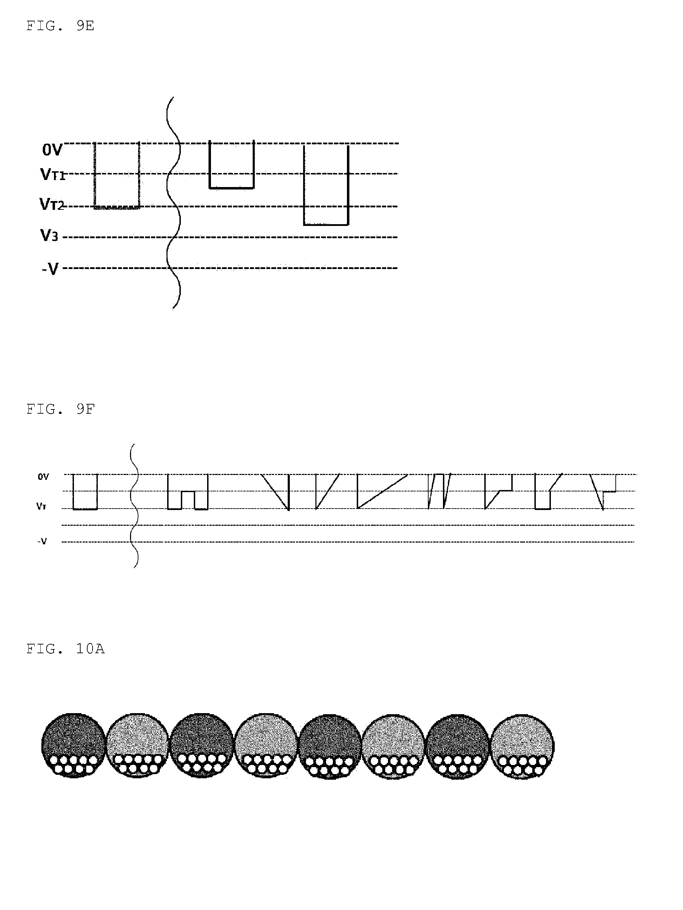

With reference to FIGs. 9A to 9F, an electric field may be applied with an intensity of a predetermined threshold value V_{T} to render a specific color. Here, contrast of the specific color may be adjusted by adjusting the width, number, period, or waveform of a pulse indicating the direction or intensity of the applied electric field (FIG. 9A, 9B, or 9C); contrast of the specific color may be adjusted by applying an electric field with an intensity of a threshold value and then applying an electric field with an intensity lower than the threshold value (FIG. 9D); contrast of the specific color may be adjusted by applying an electric field with an intensity between neighboring threshold values (FIG. 9E); and contrast of the specific color may be adjusted by combining the aforementioned manners of applying electric fields (FIG. 9F).

### Operation of the reflective display device: Color combinations

Meanwhile, according to one embodiment of the present invention, various color combinations may be applied to capsules constituting a reflective display device.

FIGs. 10A to 10C illustratively show color combinations that may be applied to capsules of a reflective display device according to one embodiment of the present invention.

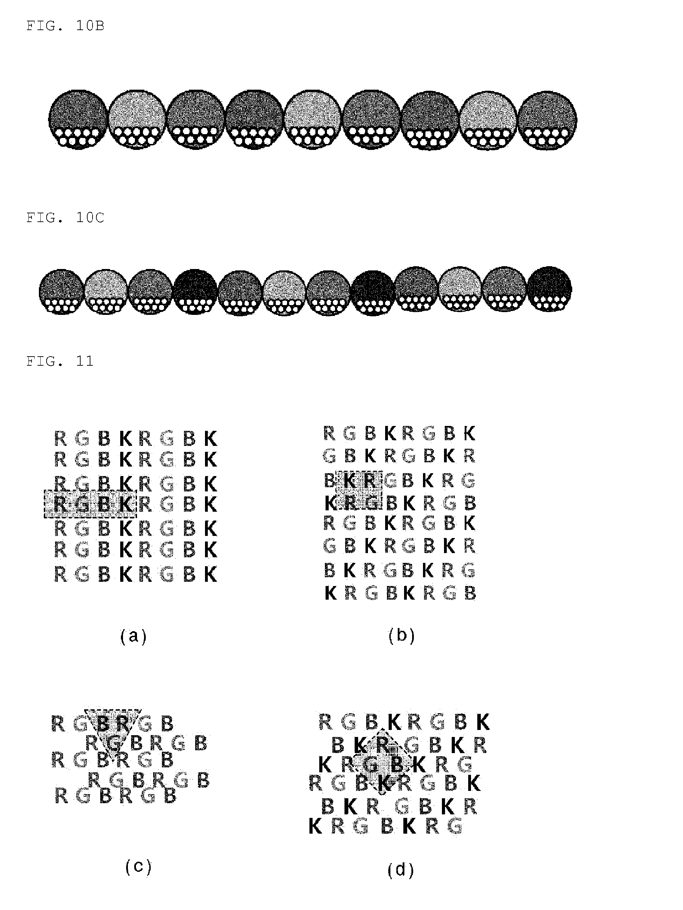

With reference to FIGs. 10A to 10C, the reflective display device may comprise two types of capsules each containing fluids having two different colors, and may be manufactured by mixing the two types of capsules at a ratio of 1:1 and disposing the capsules between the upper and lower substrates (FIG. 10A). In the same manner, the reflective display device according to one embodiment of the present invention may comprise three or four types of capsules each containing fluids having three or four different colors, and may be manufactured by mixing the three or four types of capsules at a ratio of 1:1:1 or 1:1:1:1 and disposing the capsules between the upper and lower substrates (FIG. 10B or 10C).

FIG. 11 illustratively shows a configuration for arranging capsules of a reflective display device according to one embodiment of the present invention.

With reference to FIG. 11, a plurality of capsules each corresponding to red (R), green (G), blue (B) and black (K) may be arranged in a stripe form ((a) of FIG. 11), arranged in a mosaic manner to make a square ((b) of FIG. 11), repeatedly arranged to make a triangle or delta ((c) of FIG. 11), or repeatedly arranged to make a lozenge ((d) of FIG. 11).

Meanwhile, according to one embodiment of the present invention, various color combinations may be applied to particles and fluids contained in each capsule constituting a reflective display device.

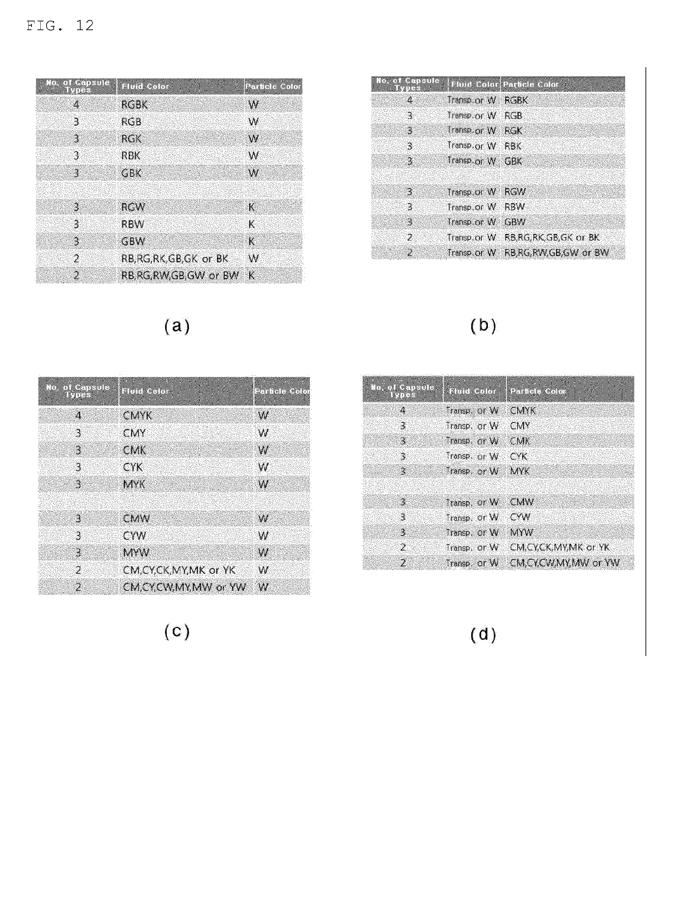

FIG. 12 illustratively shows color combinations that may be applied to particles and fluids in capsules of a reflective display device according to one embodiment of the present invention.

With reference to (a) and (b) of FIG. 12, at least one of red (R), green (G), blue (B), black (K), and white (W) may be applied to the particles or fluids.

With reference to (c) and (d) of FIG. 12, at least one of cyan (C), magenta (M), yellow (Y), black (K), and white (W) may be applied to the particles or fluids.

Further, in the color combinations illustrated in FIG. 12, the fluids may be configured to be transparent if the particles have predetermined colors.

### Application of the reflective display device

According to one embodiment of the present invention, the reflective display device is not limited to the aforementioned capsule structure and may be applied to elements in various structures.

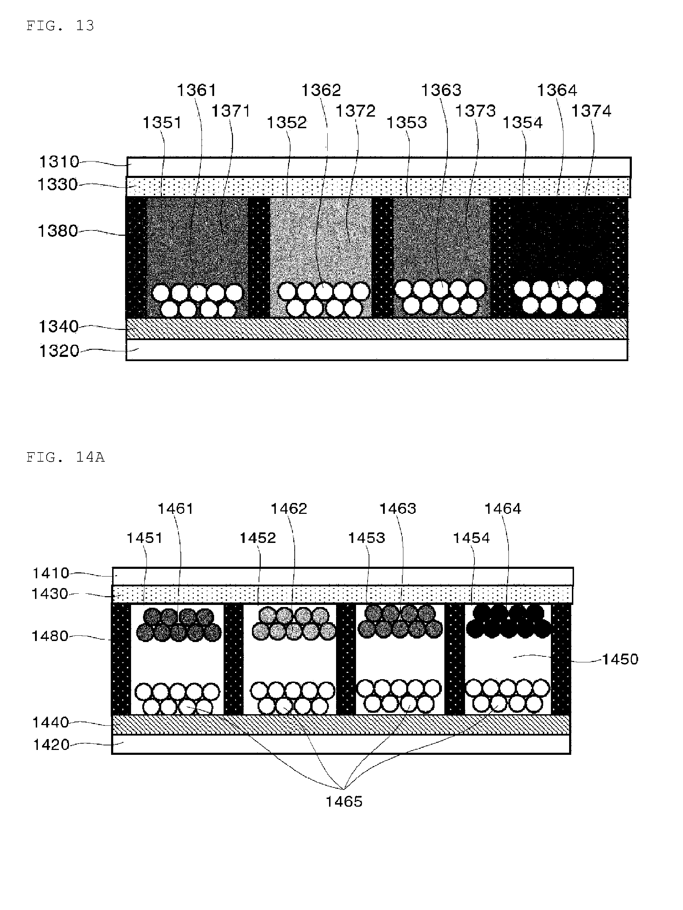

First, FIG. 13 illustratively shows a configuration of a reflective display device comprised of a partition structure according to one embodiment of the present invention.

With reference to FIG. 13, unit cells 1351 to 1354 divided by partitions 1380 may respectively contain base particles 1361 to 1364 each having a basic color as dispersed in various types of fluids 1371 to 1374 each having an inherent color.

Meanwhile, according to one embodiment of the present invention, the unit cells in which base particles having basic colors are contained as dispersed in various types of fluids each having an inherent color as shown in FIG. 13 may be arranged in combination with the unit cells in which various types of color particles each having an inherent color are contained as dispersed in base fluids having basic colors as shown in FIG. 2 (or in which various types of color particles each having an inherent color and base particles having base colors are contained as dispersed in base fluids having basic colors).

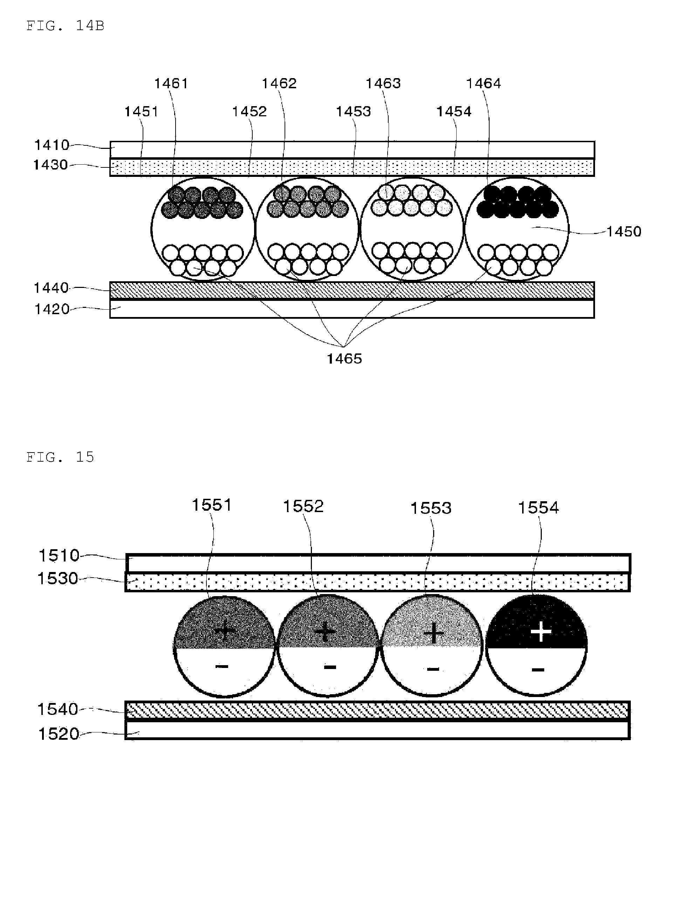

Next, FIGs. 14A and 14B illustratively show a configuration of a reflective display device according to an embodiment of the present invention, in which two types of particles are contained in one unit cell.

With reference to FIG. 14A and 14B, capsules 1451 to 1454 may respectively contain two types of particles 1461 to 1465 having colors different from each other as dispersed in a transparent fluid 1470 (FIG. 14A), or unit cells 1451 to 1454 divided by partitions 1480 may respectively contain two types of particles 1461 to 1465 having colors different from each other as dispersed in a transparent fluid 1470 (FIG. 14B). Here, the two types of particles having colors different from each other may have the same electrophoretic characteristics (i.e., threshold values and response times) when an electric field is applied.

Meanwhile, according to one embodiment of the present invention, two types of particles charged with the same polarity and contained in the unit cells 1451 to 1454 may be configured to have different amounts of electric charge, sizes, structures, materials, and the like so that the threshold values, response times and bistability are different between the two types of particles in each cell.

FIG. 15 illustratively shows a configuration of a reflective display device according to one embodiment of the present invention, in which rotatable particles are included as unit cells.

With reference to FIG. 15, particles (also called twist balls) 1551 to 1554, which may be rotated by an applied electric field to show inherent colors, may be included between an upper electrode 1530 and a lower electrode 1540 in a rotatable manner.

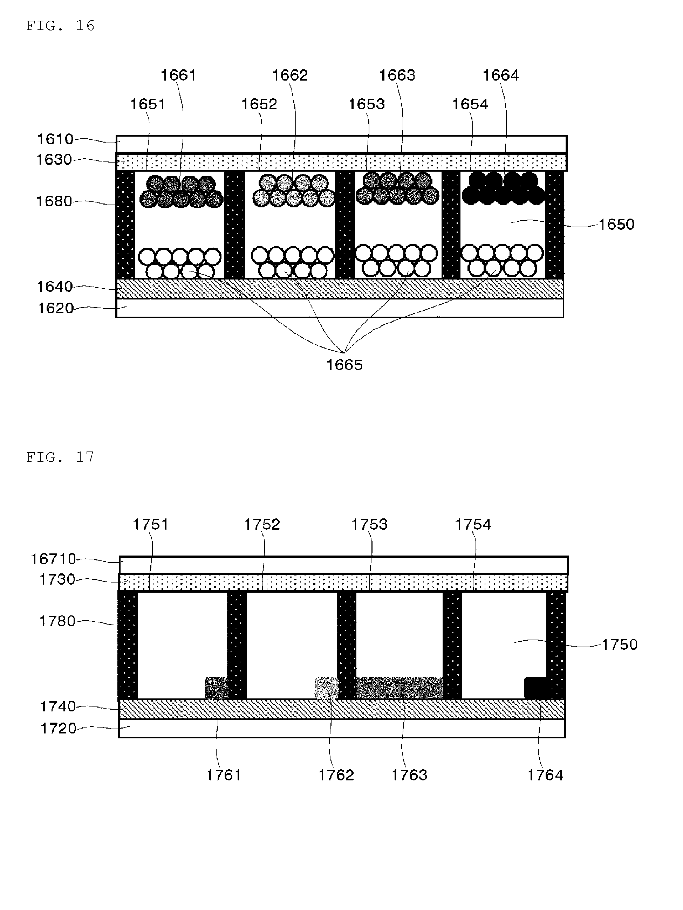

FIG. 16 illustratively shows a configuration of a dry-type reflective display device comprised of a partition structure according to one embodiment of the present invention.

With reference to FIG. 16, unit cells 1651 to 1654 divided by partitions 1680 may respectively enclose two types of particles 1661 to 1665 having colors different from each other together with transparent air 1670 instead of a fluid. Here, the two types of particles having colors different from each other may have the same electrophoretic characteristics (i.e., threshold values and response times) when an electric field is applied.

FIG. 17 illustratively shows a configuration of an electrowetting reflective display device according to one embodiment of the present invention.

With reference to FIG. 17, unit cells 1751 to 1754 divided by partitions 1780 may respectively contain oils 1761 to 1764 each having an inherent color and different electrowetting characteristics as dispersed in a transparent fluid 1770 (e.g., water). Here, the oils 1761 to 1764 having colors different from each other may have different electrophoretic characteristics (i.e., threshold values and response times) when an electric field is applied.

Meanwhile, although not illustrated in the drawings, the distinctive configuration of the reflective display device according to the present invention may be applied to a liquid crystal display device. That is, according to one embodiment of the present invention, the liquid crystal display device may employ nematic liquid crystals, smectic liquid crystals, cholesteric liquid crystals, and the like. The arrangements and dielectric constants of these liquid crystals may be changed depending on external electric fields, external magnetic fields, temperature, and the like. Accordingly, according to one embodiment of the present invention, a reflective display device having threshold values or response times for an electric field may be implemented by employing a liquid crystal of which arrangement is sharply changed when an electric field is applied with a specific intensity or higher, or is continuously applied for a specific period of time, among liquid crystals of which arrangements are changed according to an external electric field.

Meanwhile, according to one embodiment of the present invention, the distinctive configuration of the reflective display device according to the present invention may be applied to a display device including a material of which magnetic susceptibility and magnetic polarization are changed according to a magnetic field.

Meanwhile, according to one embodiment of the present invention, the distinctive configuration of the reflective display device according to the present invention may be applied to a photoreaction display device including a material of which optical property is changed according to the intensity or wavelength of light.

According to one embodiment of the present invention, the distinctive configuration of the reflective display device according to the present invention may be applied to a thermal reaction display device including a material of which optical property is changed according to temperature or heat.

Meanwhile, according to one embodiment of the present invention, the reflective display device may further comprise a sensing unit (not shown) for obtaining various sensing information. Here, the sensing unit may comprise at least one of a magnetic field sensor, gyro sensor, temperature sensor, humidity sensor, pressure sensor, acoustic sensor, light sensor, current sensor, voltage sensor, electric charge sensor, acidity sensor, light sensor, video sensor, acoustic sensor, bio-signal sensor, and timer. Further, according to one embodiment of the present invention, the reflective display device may obtain an input signal related to the information sensed by the sensing unit, and generate a control signal for colors displayed from a plurality of unit cells included in the reflective display device, with reference to the input signal obtained as above. Accordingly, colors, images, or videos displayed on the reflective display device according to the present invention may be adaptively controlled depending on external environment such as a magnetic field, temperature, humidity, pressure, light amount, and noise.

### 2. Reflective display device according to another embodiment of the present invention

### Configuration of the reflective display device

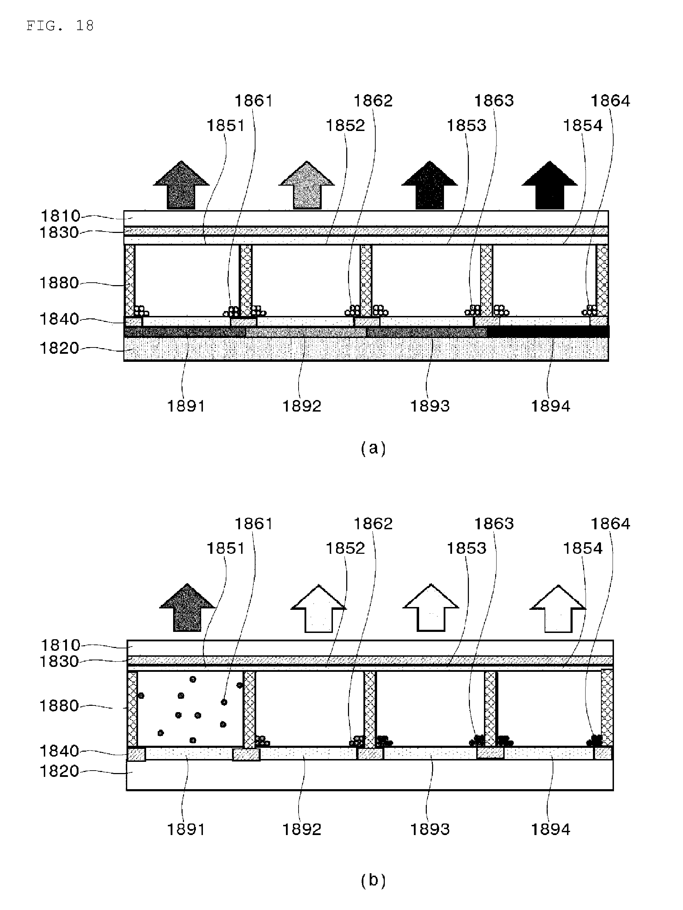

FIG. 18 illustratively shows a configuration of a reflective display device according to another embodiment of the present invention.

With reference to FIG. 18, a reflective display device 1800 according to another embodiment of the present invention may comprise an upper substrate 1810, a lower substrate 1820, an upper electrode 1830, and a lower electrode 1840. Further, the reflective display device 1800 according to another embodiment of the present invention may comprise at least one unit cell 1851 to 1854 being divided by at least one partition 1880 between the upper electrode 1830 and the lower electrode 1840 and containing different types of particles 1861 to 1864 and fluids 1871 to 1874. Further, according to another embodiment of the present invention, the colors of the particles 1861 to 1864 contained in each of the unit cells 1851 to 1854 are all white, and the lower substrate 1820 may comprise color layers having different colors in each area corresponding to each unit cell ((a) of FIG. 18). On the contrary, the particles 1861 to 1864 contained in each of the unit cells 1851 to 1854 may have different colors, and the lower substrate 1820 may comprise color layers having white color in every area corresponding to each unit cell ((b) of FIG. 18).

With further reference to FIG. 18, the lower electrode 1840 of the reflective display device 1800 may be locally formed only in a partial area on a display surface of the reflective display device 1800. In specific, the lower electrode 1840 of the reflective display device 1800 may be locally formed only at a location where the partitions 1880 are formed or at a specific location defined for each unit cell. The lower electrode 1840 formed in this manner may have a relatively small area compared to the upper electrode 1830 and have a shape asymmetrical to the upper electrode 1830. Accordingly, when the particles 1861 to 1864 are located concentratively around the lower electrode 1840, color layers 1891 to 1894 formed on the upper substrate 1810 or the lower substrate 1820 may be exposed. Therefore, if a predetermined electric field is applied through the lower electrode 1840, the particles 1861 to 1864 in the unit cells 1851 to 1854 move toward the lower electrode 1840 to be located concentratively at the lower electrode 1840. In this case, the colors of the particles 1861 to 1864 are not almost displayed in the reflective display device 1800, while the color of at least one of the upper substrate 1810, the lower substrate 1820, the upper electrode 1830, and the lower electrode 1840 is mainly displayed (see (a) and (b) of FIG. 18).

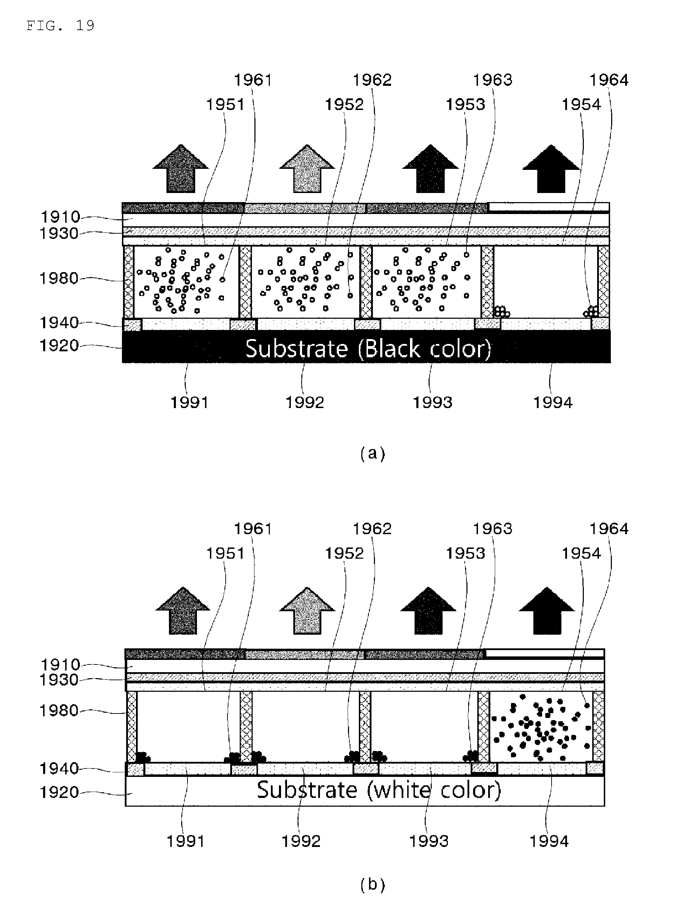

FIGs. 19 to 21 illustratively show configurations of a reflective display device according to another embodiment of the present invention.

First, with reference to FIG. 19, an upper substrate 1910 of a reflective display device 1900 according to another embodiment of the present invention may comprise color layers. Specifically, the colors of particles 1961 to 1964 contained in each of unit cells 1951 to 1954 are all white, and the upper substrate 1910 may comprise color layers having different colors in each area corresponding to each unit cell ((a) of FIG. 19). On the contrary, the particles 1961 to 1964 contained in each of the unit cells 1951 to 1954 may have different colors, and the upper substrate 1910 may comprise color layers having white color in every area corresponding to each unit cell ((b) of FIG. 19).

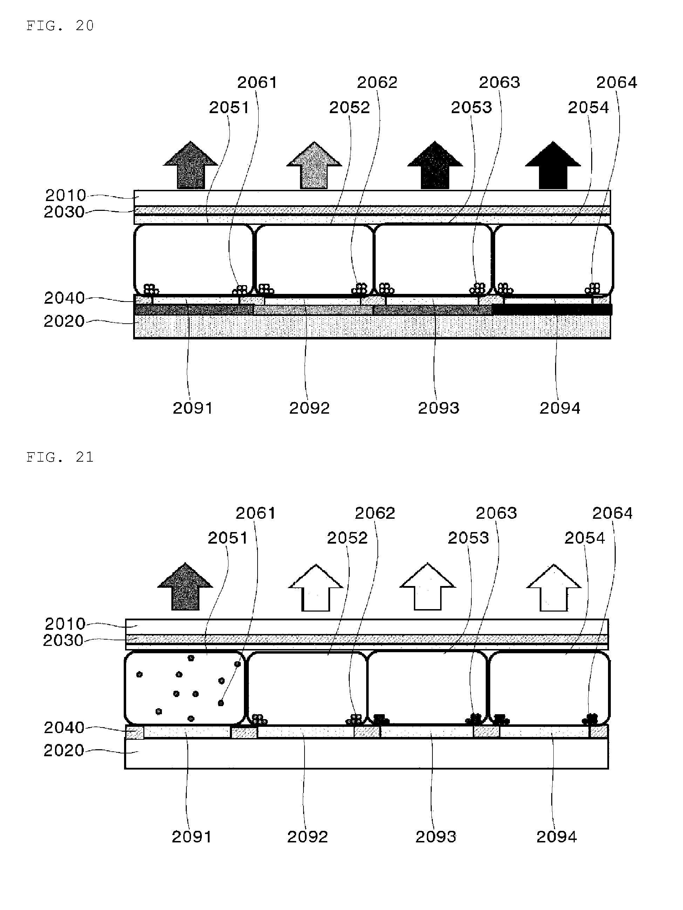

Next, with reference to FIGs. 20 and 21, unit cells in a reflective display device 2000 according to another embodiment of the present invention may be comprised of capsules 2051 to 2054, and a lower electrode 2040 may be locally formed at a location where neighboring capsules meet each other or at a specific location defined for each unit cell. In addition, according to another embodiment of the present invention, the colors of particles 2061 to 2064 contained in each of the capsules 2051 to 2054 are all white, and a lower substrate 2020 may comprise color layers having different colors in each area corresponding to each capsule (FIG. 20). On the contrary, the particles 2061 to 2064 contained in each of the capsules 2051 to 2054 may have different colors, and the lower substrate 2020 may comprise color layers having white color in every area corresponding to each unit cell (see FIG. 21).

Meanwhile, according to another embodiment of the present invention, the particles and fluids contained in at least one unit cell may be configured so that minimum intensities (i.e., threshold values) or minimum application times (i.e., response times) of electric fields required to drive (i.e., move or electrophorese) the particles and fluids.

Specifically, with reference to FIG. 18, the first to fourth particles 1861 to 1864 do not move when the intensity of the electric field applied thereto is lower than each of the threshold values thereof, while they may move only when the intensity of the applied electric field is equal to or higher than each of the threshold values. Here, the threshold values of the first to fourth particles 1861 to 1864 may be implemented to be different from each other.

Further, according to another embodiment of the present invention, the first to fourth particles 1861 to 1864 do not move when the electric field is applied for a period of time less than each of the response times thereof, while they may move only when the electric field is applied for a period of time equal to or longer than each of the response times. Here, the response times of the first to fourth particles 1861 to 1864 may be implemented to be different from each other.

According to another embodiment of the present invention, a method for adjusting the threshold value or response time of particles contained in capsules is provided, which may adjust surface charges, zeta potentials, dielectric constants, specific gravities, densities, sizes, shapes, and structures of the particles; dielectric constants, viscosities, and specific gravities of fluids in which the particles are dispersed; additives added into the fluids in which the particles are dispersed; electrode patterns, electrode intervals, electrode sizes, and electrode materials of electrodes for applying electric fields to the particles and fluids; electric fields substantially applied to the particles by the electrodes; and the like.

### Operation of the reflective display device: Threshold values

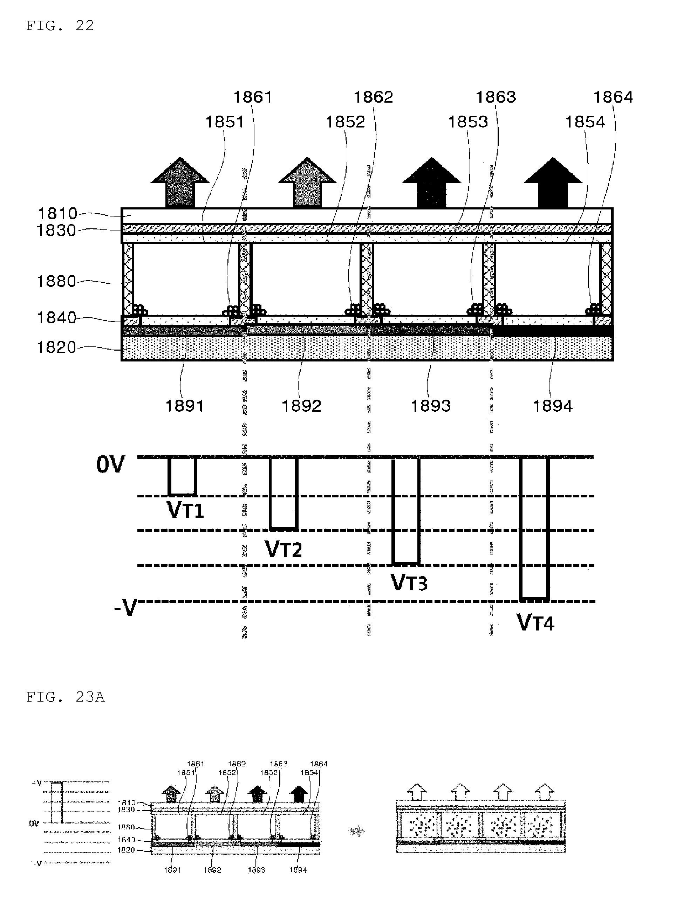

FIG. 22 illustratively shows threshold values of intensities of electric fields for moving particles contained in each unit cell of a reflective display device according to another embodiment of the present invention.

With reference to FIG. 22, the threshold values of the intensities of the electric fields required to move the first to fourth particles 1861 to 1864 of the reflective display device 1800 may be V_{T1}, V_{T2}, V_{T3}, and V_{T4}, respectively (where V_{T1} < V_{T2} < V_{T3} < V_{T4}). Further, the first to fourth particles 1861 to 1864 may show white color, and first to fourth color layers 1891 to 1894 each corresponding to the unit cells each containing the first to fourth particles 1861 to 1864 may show red, green, blue, and black colors, respectively. According to another embodiment of the present invention, at least one of white, red, green, blue, and black colors may be diversely displayed by variously adjusting patterns (i.e., directions and intensities) of the electric fields applied to the first to fourth unit cells 1851 to 1854 of the reflective display device 1800.

FIGs. 23A to 23P illustratively show configurations for applying various patterns of electric fields to a reflective display device according to another embodiment of the present invention.

First, with reference to FIG. 23A, an electric field is applied to the first to fourth unit cells 1851 to 1854 with an intensity equal to or higher than V_{T4} so that all of the first to fourth particles 1861 to 1864 may be moved by electrophoresis to be separated from the lower electrode 1830 and located concentratively around the upper electrode 1830 or irregularly dispersed within each of the unit cells 1851 to 1854. Accordingly, the reflective display device 1800 according to another embodiment of the present invention may display white, which is the color of the first to fourth particles 1861 to 1864.

One of the remaining four colors except white may be displayed in the following manners.

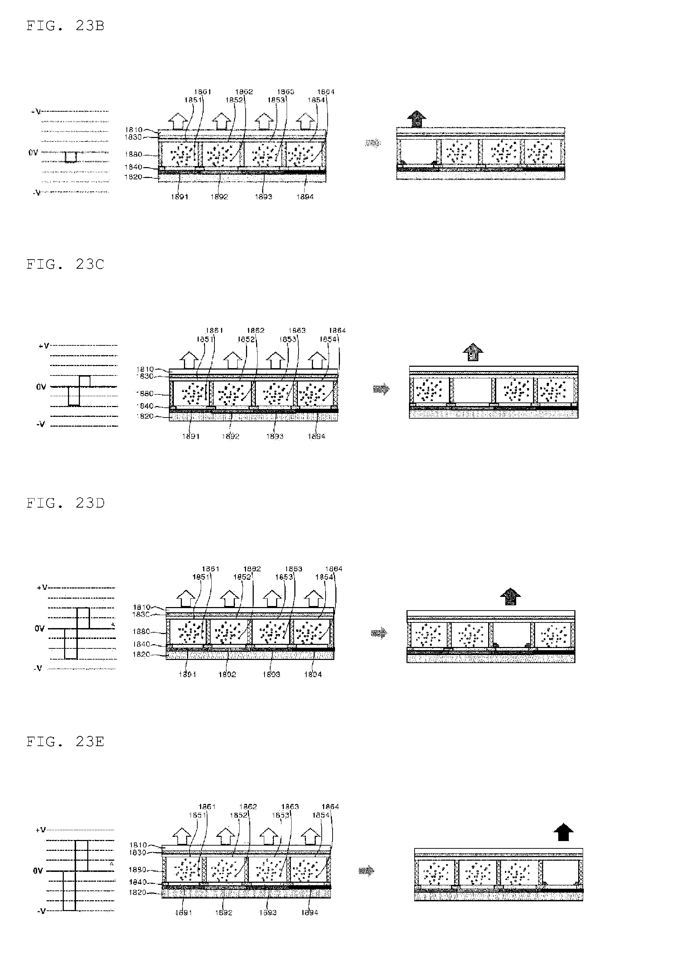

Next, with reference to FIG. 23B, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T1} (i.e., the threshold value of the first particles 1861) so that only the first particles 1861 may be moved by electrophoresis and located concentratively at the lower electrode 1840. Accordingly, the reflective display device 1800 according to another embodiment of the present invention may display white (the color of the second to fourth particles 1862 to 1864) and red (the color of the first color layer 1891) in a mixed manner.

Next, with reference to FIG. 23C, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T2} (i.e., the threshold value of the second particles 1862) and then an electric field in the same direction of the electric field applied in FIG. 23A is applied thereto with an intensity of V_{T1} (i.e., the threshold value of the first particles 1861) so that only the second particles 1862 may be moved by electrophoresis and located concentratively at the lower electrode 1840. Accordingly, the reflective display device 1800 according to another embodiment of the present invention may display white (the color of the first, third and fourth particles 1861, 1863 and 1864) and green (the color of the second color layer 1892) in a mixed manner.

Next, with reference to FIG. 23D, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T3} (i.e., the threshold value of the third particles 1863) and then an electric field in the same direction of the electric field applied in FIG. 23A is applied thereto with an intensity of V_{T2} (i.e., the threshold value of the second particles 1862) so that only the third particles 1863 may be moved by electrophoresis and located concentratively at the lower electrode 1840. Accordingly, the reflective display device 1800 according to another embodiment of the present invention may display white (the color of the first, second and fourth particles 1861, 1862 and 1864) and blue (the color of the third color layer 1893) in a mixed manner.

Next, with reference to FIG. 23E, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864) and then an electric field in the same direction of the electric field applied in FIG. 23A is applied thereto with an intensity of V_{T3} (i.e., the threshold value of the third particles 1863) so that only the fourth particles 1864 may be moved by electrophoresis and located concentratively at the lower electrode 1840. Accordingly, the reflective display device 1800 according to another embodiment of the present invention may display white (the color of the first, second and third particles 1861, 1862 and 1863) and black (the color of the fourth color layer 1894) in a mixed manner.

Two of the remaining four colors except white may be mixed and displayed in the following manners.

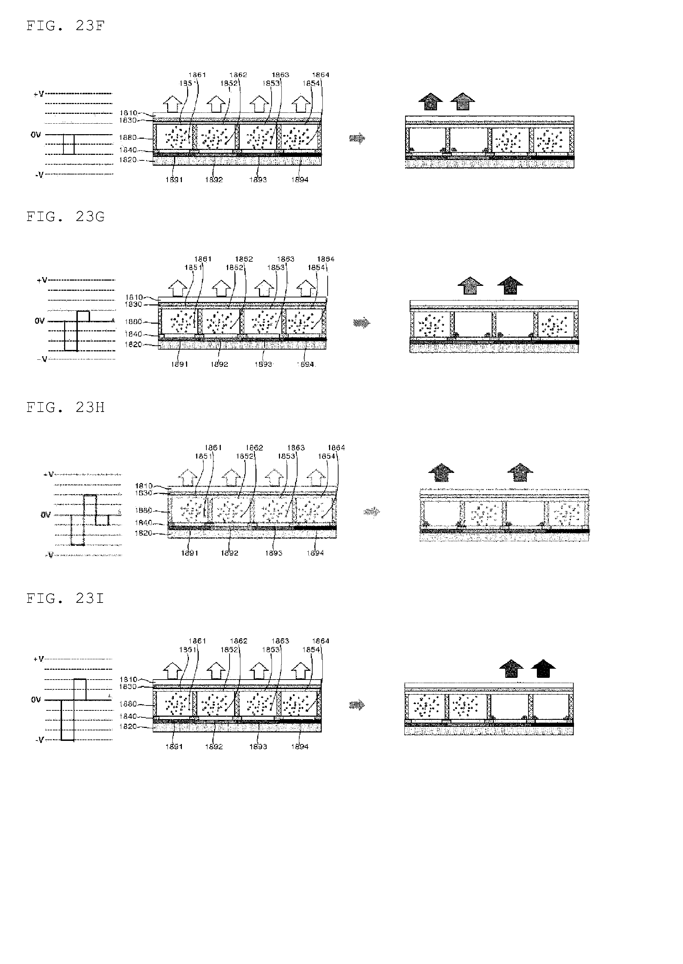

Next, with reference to FIG. 23F, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T2} (i.e., the threshold value of the second particles 1862) so that the first and second particles 1861 and 1862 may be moved by electrophoresis and located concentratively at the lower electrode 1840. Accordingly, the reflective display device 1800 according to another embodiment of the present invention may display white (the color of the third and fourth particles 1863 and 1864), red (the color of the first color layer 1891), and green (the color of the second color layer 1892) in a mixed manner.

Next, with reference to FIG. 23G, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T3} (i.e., the threshold value of the third particles 1863) and then an electric field in the same direction of the electric field applied in FIG. 23A is applied thereto with an intensity of V_{T1} (i.e., the threshold value of the first particles 1861) so that the second and third particles 1862 and 1863 may be moved by electrophoresis and located concentratively at the lower electrode 1840. Accordingly, the reflective display device 1800 according to another embodiment of the present invention may display white (the color of the first and fourth particles 1861 and 1864), green (the color of the second color layer 1892), and blue (the color of the third color layer 1893) in a mixed manner.

Next, with reference to FIG. 23H, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T3} (i.e., the threshold value of the third particles 1863), then an electric field in the same direction of the electric field applied in FIG. 23A is applied thereto with an intensity of V_{T2} (i.e., the threshold value of the second particles 1862), and then an electric field in the opposite direction of the electric field applied in FIG. 23A is applied again thereto with an intensity of V_{T1} (i.e., the threshold value of the first particles 1861) so that the first and third particles 1861 and 1863 may be moved by electrophoresis and located concentratively at the lower electrode 1840. Accordingly, the reflective display device 1800 according to another embodiment of the present invention may display white (the color of the first and third particles 1861 and 1863), green (the color of the second color layer 1892), and black (the color of the fourth color layer 1894) in a mixed manner.

Next, with reference to FIG. 23I, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864), and then an electric field in the same direction of the electric field applied in FIG. 23A is applied thereto with an intensity of V_{T2} (i.e., the threshold value of the second particles 1862) so that the third and fourth particles 1863 and 1864 may be moved by electrophoresis and located concentratively at the lower electrode 1840. Accordingly, the reflective display device 1800 according to another embodiment of the present invention may display white (the color of the first and second particles 1861 and 1862), blue (the color of the third color layer 1893), and black (the color of the fourth color layer 1894) in a mixed manner.

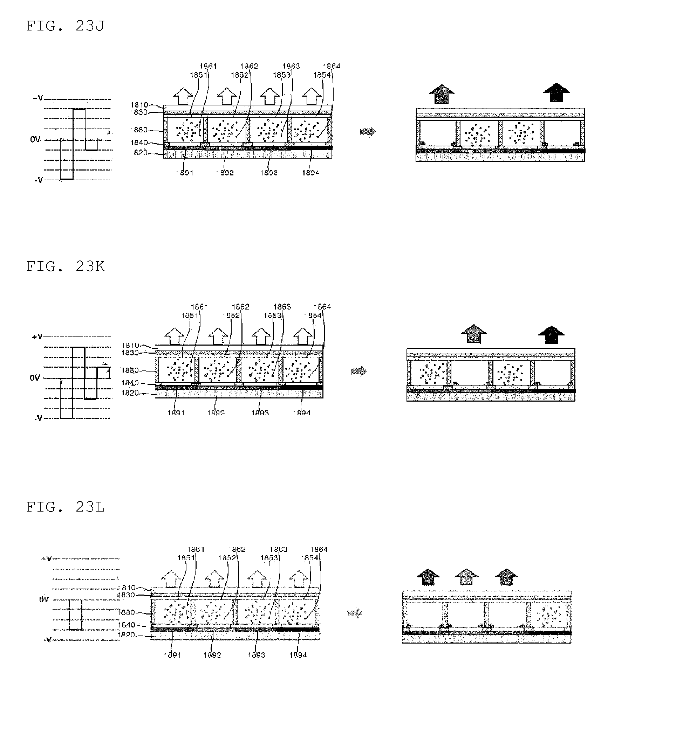

Next, with reference to FIG. 23J, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864), then an electric field in the same direction of the electric field applied in FIG. 23A is applied thereto with an intensity of V_{T3} (i.e., the threshold value of the third particles 1863), and then an electric field in the opposite direction of the electric field applied in FIG. 23A is applied again thereto with an intensity of V_{T1} (i.e., the threshold value of the first particles 1861) so that the second and third particles 1862 and 1863 may be moved by electrophoresis and located concentratively at the lower electrode 1840. Accordingly, the reflective display device 1800 according to another embodiment of the present invention may display white (the color of the second and third particles 1862 and 1863), red (the color of the first color layer 1891), and black (the color of the fourth color layer 1894) in a mixed manner.

Next, with reference to FIG. 23K, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864), then an electric field in the same direction of the electric field applied in FIG. 23A is applied thereto with an intensity of V_{T3} (i.e., the threshold value of the third particles 1863), then an electric field in the opposite direction of the electric field applied in FIG. 23A is applied again thereto with an intensity of V_{T2} (i.e., the threshold value of the second particles 1862), and then an electric field in the same direction of the electric field applied in FIG. 23A is applied again thereto with an intensity of V_{T1} (i.e., the threshold value of the first particles 1861) so that the first and third particles 1861 and 1863 may be moved by electrophoresis and located concentratively at the lower electrode 1840. Accordingly, the reflective display device 1800 according to another embodiment of the present invention may display white (the color of the first and third particles 1861 and 1863), green (the color of the second color layer 1892), and black (the color of the fourth color layer 1894) in a mixed manner.

Three of the remaining four colors except white may be mixed and displayed in the following manners.

Next, with reference to FIG. 23L, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T3} (i.e., the threshold value of the third particles 1863) so that the first, second and third particles 1861, 1862 and 1863 may be moved by electrophoresis and located concentratively at the lower electrode 1840. Accordingly, the reflective display device 1800 according to another embodiment of the present invention may display white (the color of the fourth particles 1864), red (the color of the first color layer 1891), green (the color of the second color layer 1892), and blue (the color of the third color layer 1893) in a mixed manner.

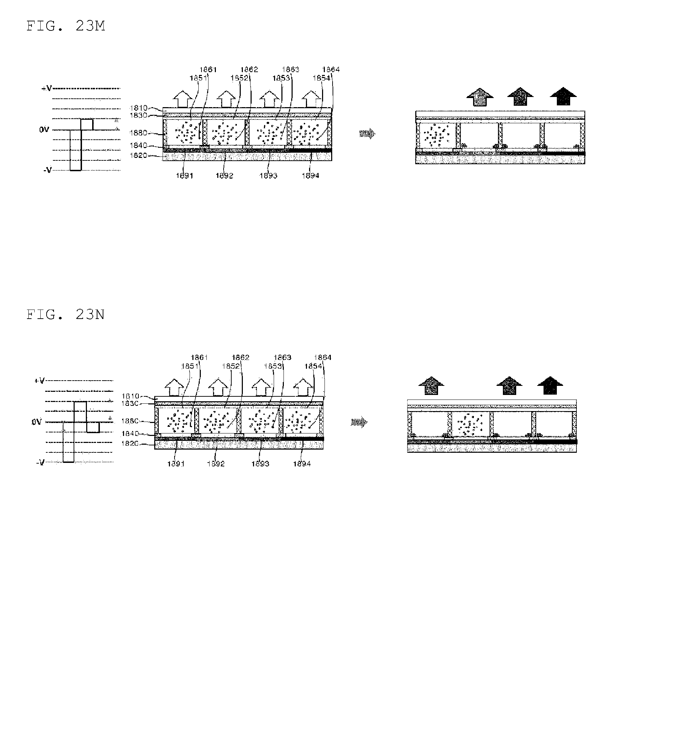

Next, with reference to FIG. 23M, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864) and then an electric field in the same direction of the electric field applied in FIG. 23A is applied thereto with an intensity of V_{T1} (i.e., the threshold value of the first particles 1861) so that the second, third and fourth particles 1862, 1863 and 1864 may be moved by electrophoresis and located concentratively at the lower electrode 1840. Accordingly, the reflective display device 1800 according to another embodiment of the present invention may display white (the color of the first particles 1861), green (the color of the second color layer 1892), blue (the color of the third color layer 1893), and black (the color of the fourth color layer 1894) in a mixed manner.

Next, with reference to FIG. 23N, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864), then an electric field in the same direction of the electric field applied in FIG. 23A is applied thereto with an intensity of V_{T2} (i.e., the threshold value of the second particles 1862), and then an electric field in the opposite direction of the electric field applied in FIG. 23A is applied again thereto with an intensity of V_{T1} (i.e., the threshold value of the first particles 1861) so that the first, third and fourth particles 1861, 1863 and 1864 may be moved by electrophoresis and located concentratively at the lower electrode 1840. Accordingly, the reflective display device 1800 according to another embodiment of the present invention may display white (the color of the second particles 1862), red (the color of the first color layer 1891), blue (the color of the third color layer 1893), and black (the color of the fourth color layer 1894) in a mixed manner.

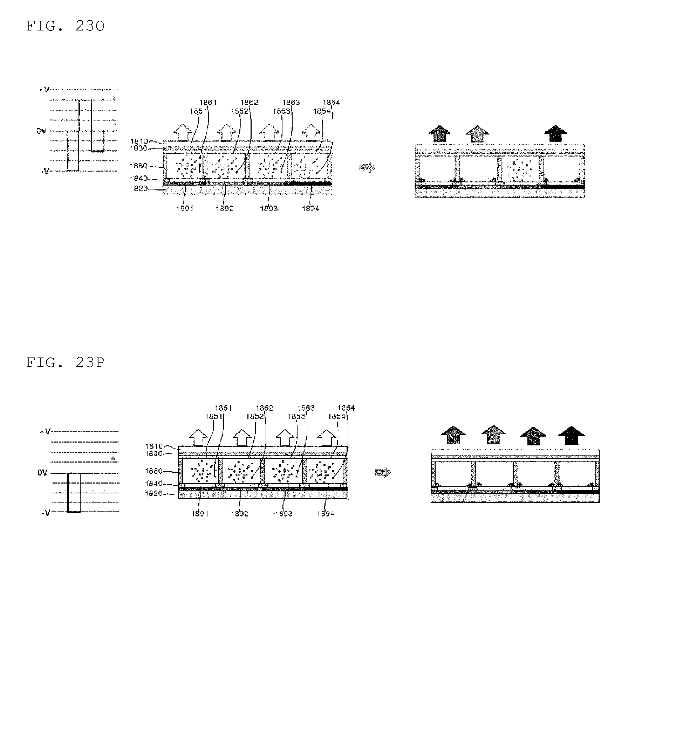

Next, with reference to FIG. 23O, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864), then an electric field in the same direction of the electric field applied in FIG. 23A is applied thereto with an intensity of V_{T3} (i.e., the threshold value of the third particles 1863), and then an electric field in the opposite direction of the electric field applied in FIG. 23A is applied again thereto with an intensity of V_{T2} (i.e., the threshold value of the second particles 1862) so that the first, second and fourth particles 1861, 1862 and 1864 may be moved by electrophoresis and located concentratively at the lower electrode 1840. Accordingly, the reflective display device 1800 according to another embodiment of the present invention may display white (the color of the third particles 1863), red (the color of the first color layer 1891), green (the color of the second color layer 1892), and black (the color of the fourth color layer 1894) in a mixed manner.

All of the remaining four colors except white may be mixed and displayed in the following manner.

Next, with reference to FIG. 23P, when all of the first to fourth particles 1861 to 1864 are separated from the lower electrode 1830 and located concentratively around the upper electrode 1830 or irregularly dispersed within each of the unit cells 1851 to 1854, an electric field in the opposite direction of the electric field applied in FIG. 23A is applied to the first to fourth unit cells 1851 to 1854 with an intensity of V_{T4} (i.e., the threshold value of the fourth particles 1864) so that all of the first to fourth particles 1861 to 1864 may be moved by electrophoresis and located concentratively at the lower electrode 1840. Accordingly, the reflective display device 1800 according to another embodiment of the present invention may display red (the color of the first color layer 1891), green (the color of the second color layer 1892), blue (the color of the third color layer 1893), and black (the color of the fourth color layer 1894) in a mixed manner.

### Operation of the reflective display device: Response times

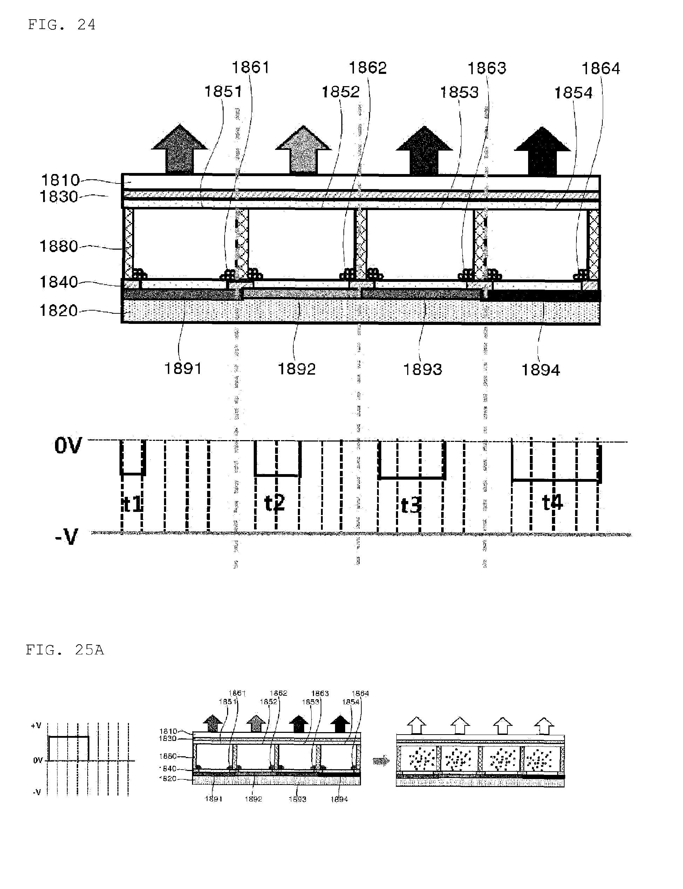

FIG. 24 illustratively shows minimum application times (i.e., response times) of electric fields for moving particles contained in each unit cell of a reflective display device according to another embodiment of the present invention.

With reference to FIG. 24, the minimum application times (i.e., response times) of the electric fields required to move the first to fourth particles 1861 to 1864 of the reflective display device 1800 may be t1, t2, t3, and t4, respectively (where t1 < t2 < t3 < t4). Further, the first to fourth particles 1861 to 1864 may show white color, and the first to fourth color layers 1891 to 1894 each corresponding to the unit cells each containing the first to fourth particles 1861 to 1864 may show red, green, blue, and black colors, respectively. According to another embodiment of the present invention, at least one of white, red, green, blue, and black colors may be diversely displayed by variously adjusting patterns (i.e., directions and application times) of the electric fields applied to the first to fourth unit cells 1851 to 1854 of the reflective display device 1800.

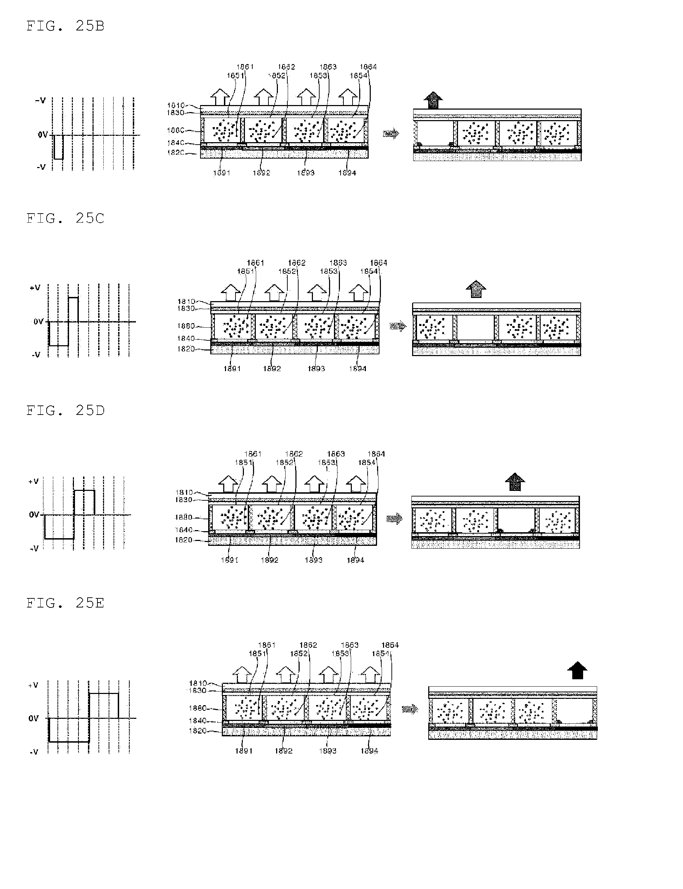

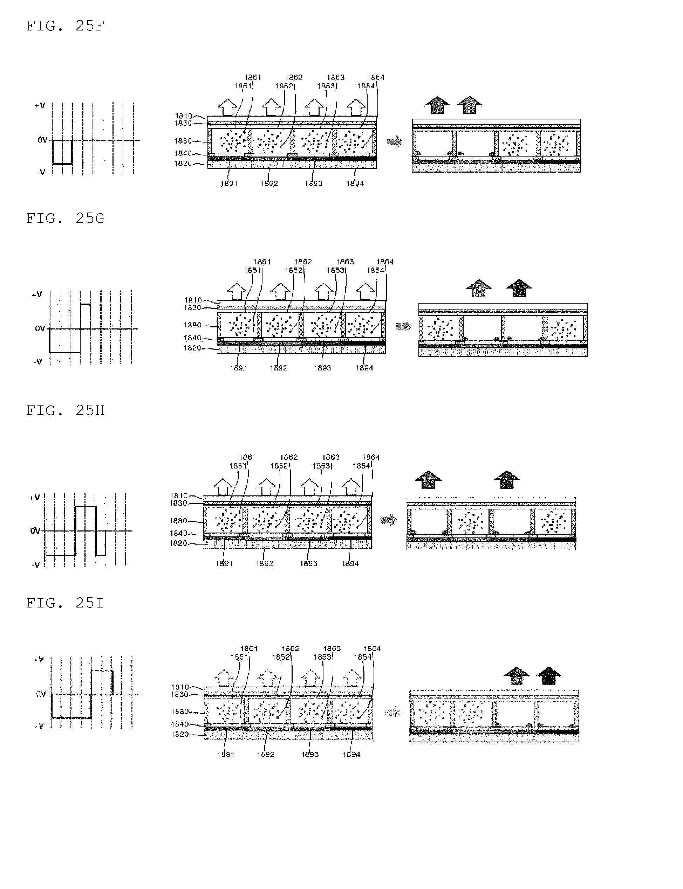

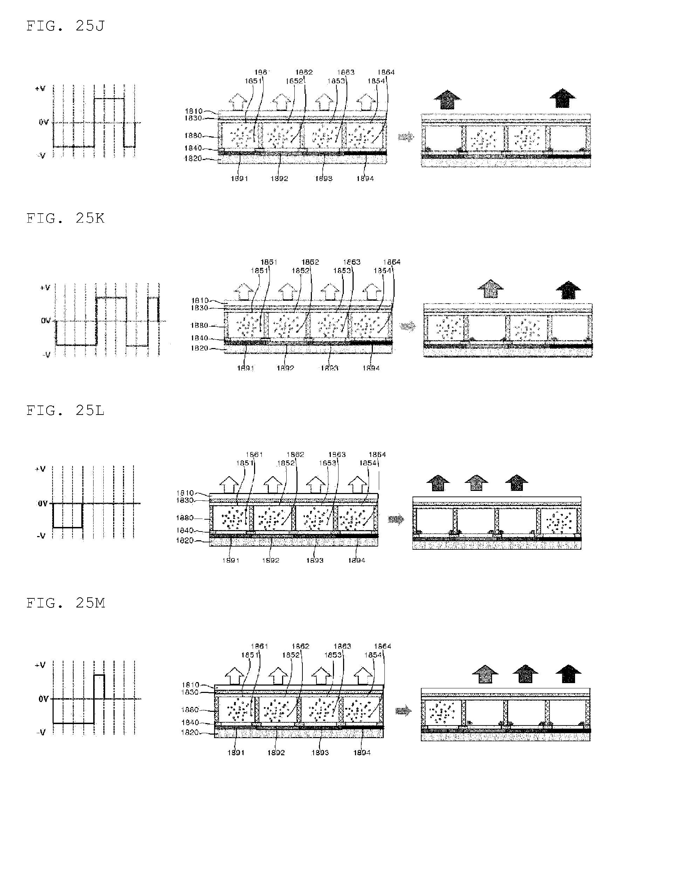

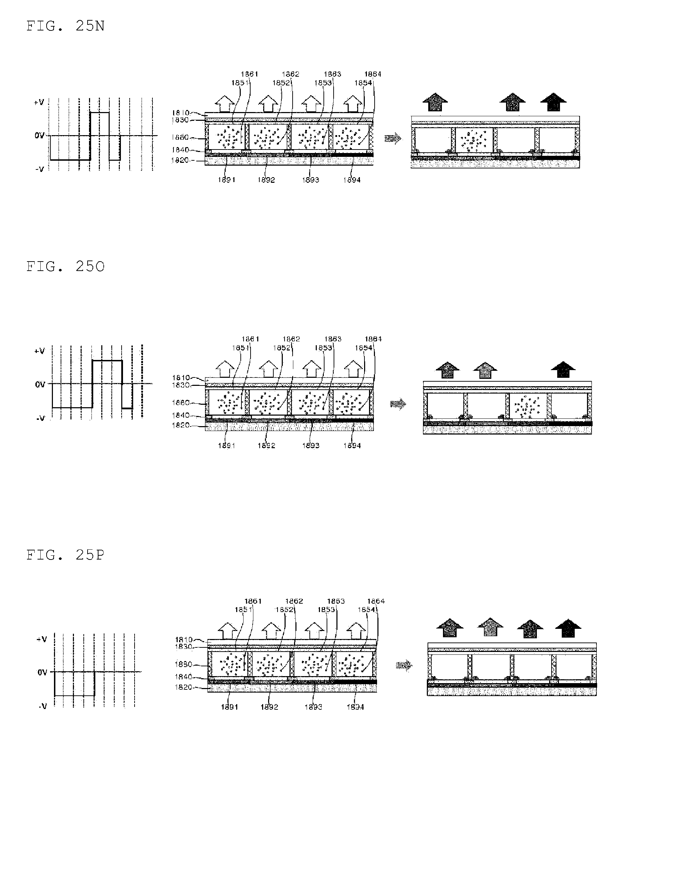

FIGs. 25A to 25P illustratively show configurations for applying various patterns of electric fields to a reflective display device according to another embodiment of the present invention.

First, with reference to FIG. 25A, an electric field is applied to the first to fourth unit cells 1851 to 1854 for a period of time of t4 (i.e., the response time of the fourth particles 1864) so that all of the first to fourth particles 1861 to 1864 may be moved by electrophoresis to be separated from the lower electrode 1830 and located concentratively around the upper electrode 1830 or irregularly dispersed within each of the unit cells 1851 to 1854. Accordingly, the reflective display device 1800 according to another embodiment of the present invention may display white, which is the color of the first to fourth particles 1861 to 1864.

Next, FIGs. 25B to 25E illustrate embodiments in which one of the remaining four colors except white is displayed. Further, FIGs. 25F to 25K illustrate embodiments in which two of the remaining four colors except white are mixed and displayed. Further, FIGs. 25L to 25O illustrate embodiments in which three of the remaining four colors except white are mixed and displayed. Further, FIG. 25P illustrates an embodiment in which all of the remaining four colors except white are mixed and displayed.

The embodiments of FIGs. 25A to 25P may be easily understood by referring to those of FIGs. 6A to 6P and FIGs. 23A to 23P. Therefore, detailed description of the embodiments of FIGs. 25A to 25P will be replaced by the description of those of FIGs. 6A to 6P and FIGs. 23A to 23P.

### Operation of the reflective display device: Threshold values and response times

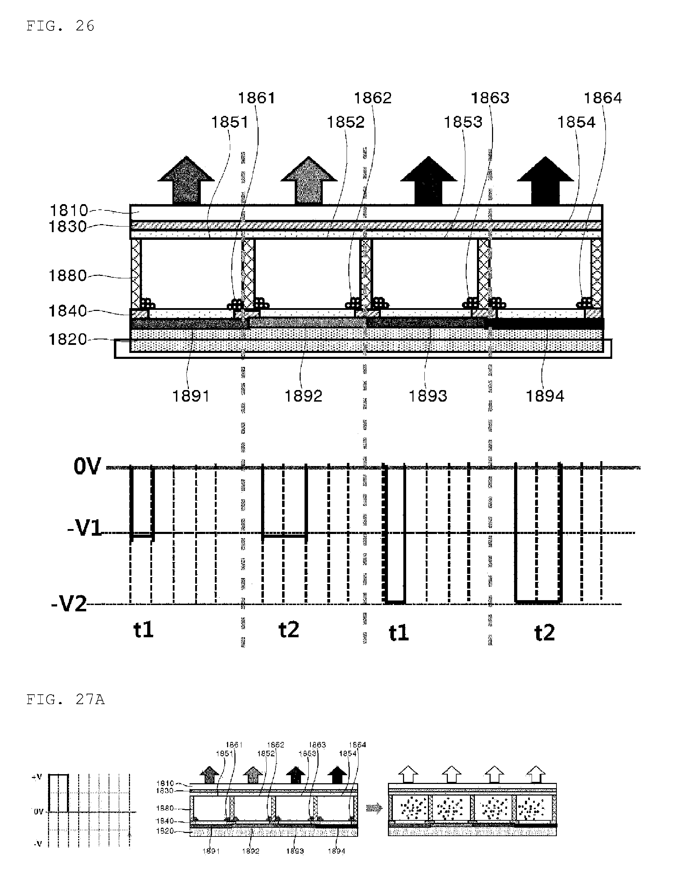

FIG. 26 illustratively shows threshold values of intensities and minimum application times (i.e., response times) of electric fields for moving particles contained in each unit cell of a reflective display device according to another embodiment of the present invention.

With reference to FIG. 26, the threshold values of the intensities of the electric fields required to move the first to fourth particles 1861 to 1864 of the reflective display device 1800 may be V_{T1}, V_{T1}, V_{T2}, and V_{T2}, respectively (where V_{T1} < V_{T2}). Further, the minimum application times (i.e., response times) of the electric fields required to move the first to fourth particles 1861 to 1864 of the reflective display device 1800 may be t1, t2, t1, and t2, respectively (where t1 < t2). Further, the first to fourth particles 1861 to 1864 may show white color, and the first to fourth color layers 1891 to 1894 each corresponding to the unit cells each containing the first to fourth particles 1861 to 1864 may show red, green, blue, and black colors, respectively. According to another embodiment of the present invention, at least one of white, red, green, blue, and black colors may be diversely displayed by variously adjusting patterns (i.e., directions and application times) of the electric fields applied to the first to fourth unit cells 1851 to 1854 of the reflective display device 1800.

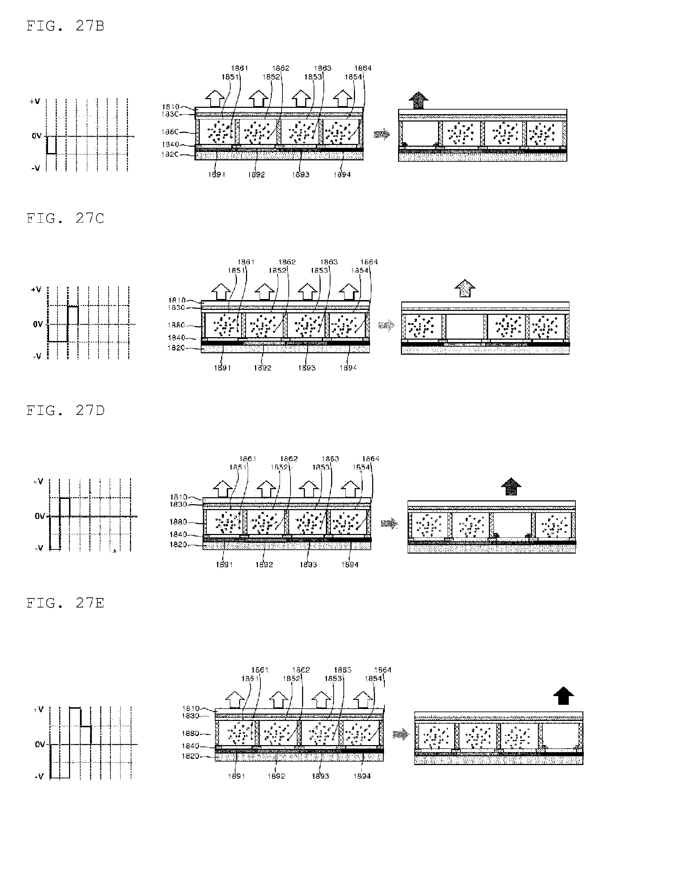

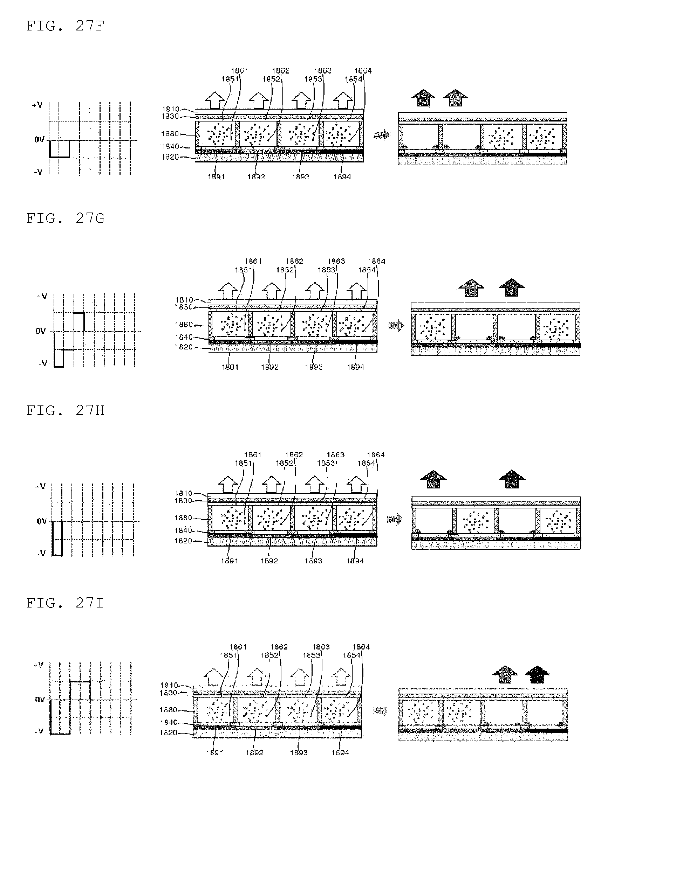

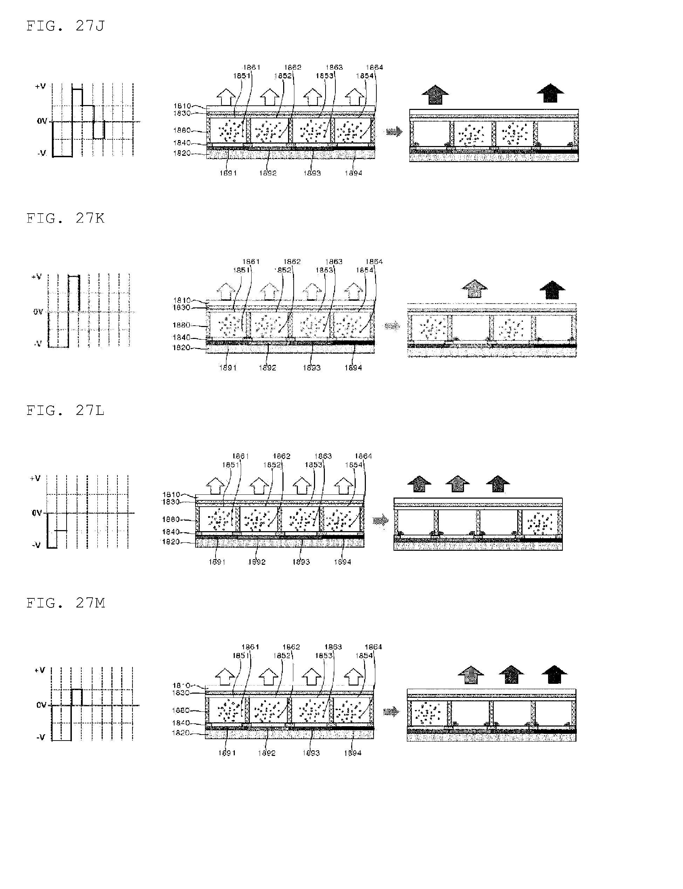

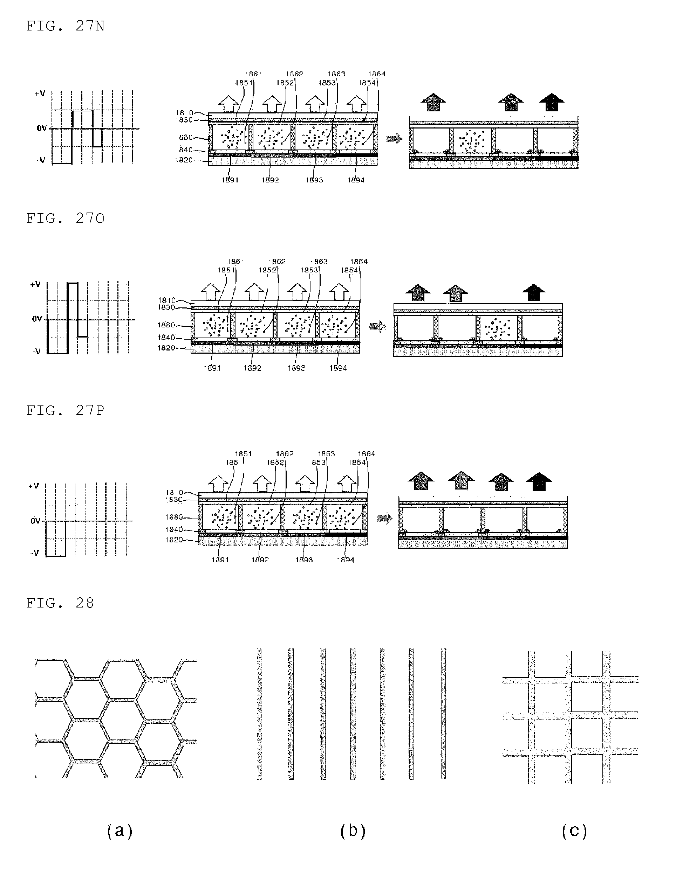

Figs. 27A to 27P illustratively show configurations for applying various patterns of electric fields to a reflective display device according to another embodiment of the present invention.

First, with reference to FIG. 27A, an electric field is applied to the first to fourth unit cells 1851 to 1854 with an intensity equal to or higher than V_{T2} (i.e., the threshold values of the third and fourth particles 1863 and 1864) and for a period of time of t2 (i.e., the response times of the second and fourth particles 1862 and 1864) so that all of the first to fourth particles 1861 to 1864 may be moved by electrophoresis to be separated from the lower electrode 1830 and irregularly dispersed within each of the unit cells 1851 to 1854. Accordingly, the reflective display device 1800 according to another embodiment of the present invention may display white, which is the color of the first to fourth particles 1861 to 1864.

Next, FIGs. 27B to 27E illustrate embodiments in which one of the remaining four colors except white is displayed. Further, FIGs. 27F to 27K illustrate embodiments in which two of the remaining four colors except white are mixed and displayed. Further, FIGs. 27L to 27O illustrate embodiments in which three of the remaining four colors except white are mixed and displayed. Further, FIG. 27P illustrates an embodiment in which all of the remaining four colors except white are mixed and displayed.

The embodiments of FIGs. 27A to 27P correspond to the combinations of those of FIGs. 23A to 23P and FIGs. 25A to 25P. Therefore, detailed description of the embodiments of FIGs. 27A to 27P will be replaced by the description of those of FIGs. 23A to 23P and FIGs. 25A to 25P.

### Operation of the reflective display device:

### Adjusting the contrast

Meanwhile, according to another embodiment of the present invention, contrast (gray scale) of the colors displayed in the reflective display device 1800 may be adjusted by adjusting patterns of the electric fields applied to each capsule of the reflective display device 1800.

FIGs. 9A to 9F illustratively show a configuration for adjusting contrast of a reflective display device according to another embodiment of the present invention by adjusting application patterns of electric fields.

With reference to FIGs. 9A to 9F, an electric field may be applied with an intensity of a predetermined threshold value V_{T} to render a specific color. Here, contrast of the specific color may be adjusted by adjusting the width, number, period, or waveform of a pulse indicating the direction or intensity of the applied electric field (FIG. 9A, 9B, or 9C); contrast of the specific color may be adjusted by applying an electric field with an intensity of a threshold value and then applying an electric field with an intensity lower than the threshold value (FIG. 9D); contrast of the specific color may be adjusted by applying an electric field with an intensity between neighboring threshold values (FIG. 9E); and contrast of the specific color may be adjusted by combining the aforementioned manners of applying electric fields (FIG. 9F).

### Operation of the reflective display device: Color combinations

Meanwhile, according to another embodiment of the present invention, various color combinations may be applied to capsules constituting a reflective display device.

FIGs. 10A to 10C illustratively show color combinations that may be applied to capsules of a reflective display device according to another embodiment of the present invention.

With reference to FIGs. 10A to 10C, the reflective display device may comprise two types of capsules each containing fluids having two different colors, and may be manufactured by mixing the two types of capsules at a ratio of 1:1 and disposing the capsules between the upper and lower substrates (FIG. 10A). In the same manner, the reflective display device according to another embodiment of the present invention may comprise three or four types of capsules each containing fluids having three or four different colors, and may be manufactured by mixing the three or four types of capsules at a ratio of 1:1:1 or 1:1:1:1 and disposing the capsules between the upper and lower substrates (FIG. 10B or 10C).

FIG. 11 illustratively shows a configuration for arranging capsules of a reflective display device according to another embodiment of the present invention.

With reference to FIG. 11, a plurality of capsules each corresponding to red (R), green (G), blue (B) and black (K) may be arranged in a stripe form ((a) of FIG. 11), arranged in a mosaic manner to make a square ((b) of FIG. 11), repeatedly arranged to make a triangle or delta ((c) of FIG. 11), or repeatedly arranged to make a lozenge ((d) of FIG. 11).

Meanwhile, according to another embodiment of the present invention, various color combinations may be applied to particles and fluids contained in each capsule constituting a reflective display device.

FIG. 12 illustratively shows color combinations that may be applied to particles and fluids in capsules of a reflective display device according to another embodiment of the present invention.

With reference to (a) and (b) of FIG. 12, at least one of red (R), green (G), blue (B), black (K), and white (W) may be applied to the particles or fluids.

With reference to (c) and (d) of FIG. 12, at least one of cyan (C), magenta (M), yellow (Y), black (K), and white (W) may be applied to the particles or fluids.

Further, in the color combinations illustrated in FIG. 12, the fluids may be configured to be transparent if the particles have predetermined colors.

### Manufacturing the reflective display device

According to another embodiment of the present invention, capsules having different colors mixed at a predetermined ratio may be stacked all together between upper and lower substrates of a reflective display device. Further, according to another embodiment of the present invention, a partition structure may be formed between upper and lower substrates of a reflective display device, and then sealed after particles and fluids are injected between partitions in an inkjet injection manner. Further, according to another embodiment of the present invention, after a partition structure is formed and sealed between upper and lower substrates of a reflective display device, particles and fluids may be injected between partitions in a vacuum injection manner or an injection manner using capillarity.

FIG. 28 illustratively shows configurations of partitions of a reflective display device according to another embodiment of the present invention.

With reference to FIG. 28, the partitions may be formed in various patterns. For example, the partitions may be formed in a honeycomb pattern ((a) of FIG. 28), a stripe pattern ((b) FIG. 28), a grid pattern ((c) of FIG. 28), or the like.

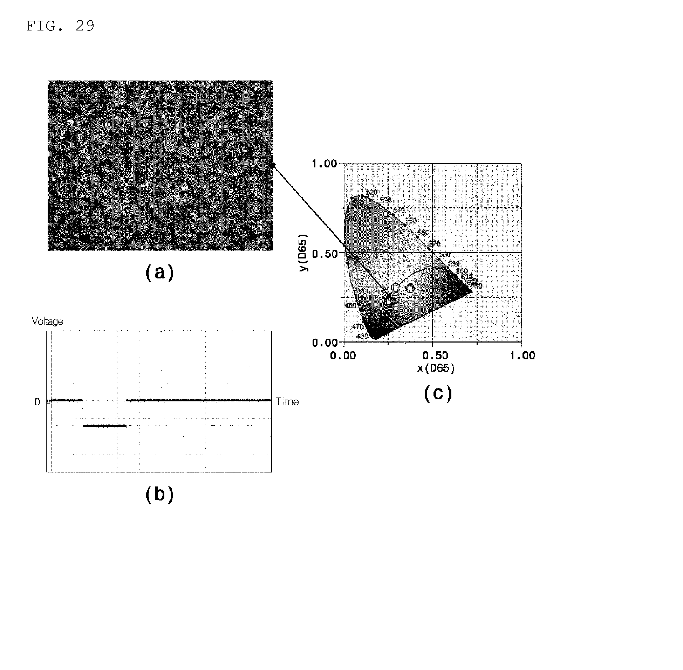

FIGs. 29 to 32 illustratively show experiment examples in which various colors are displayed by adjusting application times of electric fields when two types of particles each having red (R) and blue (B) colors and different response times are mixed according to one embodiment of the present invention.

First, with reference to FIG. 29, as an electric field in a predetermined pattern is applied (see (b) of FIG. 29), red and blue particles are moved by electrophoresis to be separated from the lower electrode and located concentratively around the upper electrode, so that red and blue colors may be displayed in a mixed manner (see (a) of FIG. 29).

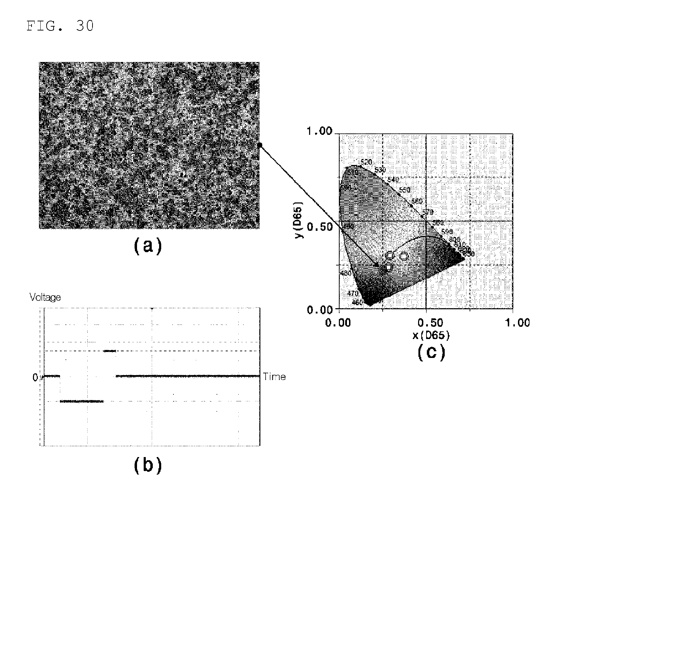

Next, with reference to FIG. 30, as an electric field in a predetermined pattern is applied (see (b) of FIG. 30), blue particles are moved by electrophoresis to be separated from the lower electrode and located concentratively around the upper electrode, so that blue color may be mainly displayed (see (a) of FIG. 30).

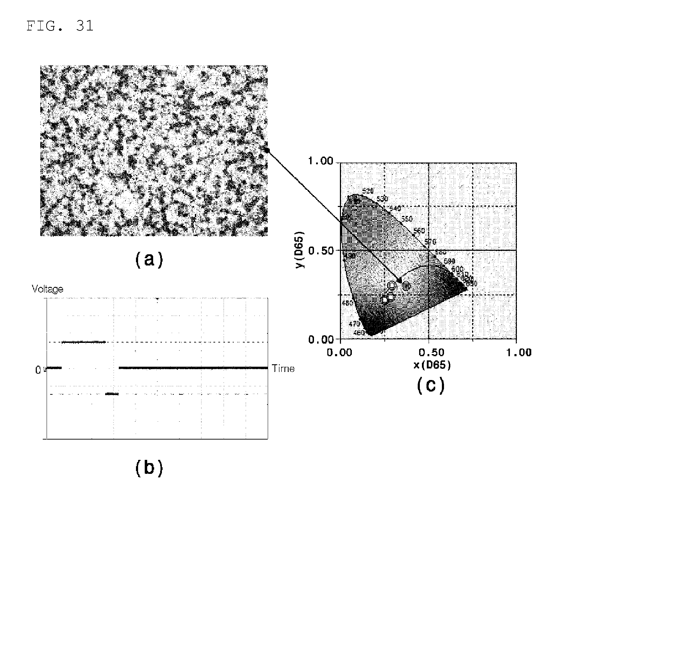

Next, with reference to FIG. 31, as an electric field in a predetermined pattern is applied (see (b) of FIG. 31), red particles are moved by electrophoresis to be separated from the lower electrode and located concentratively around the upper electrode, so that red color may be mainly displayed (see (a) of FIG. 31).

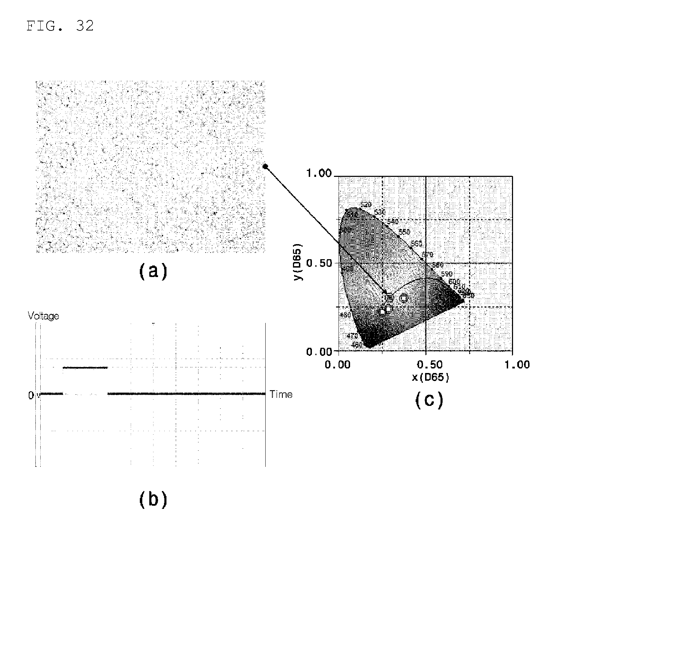

Next, with reference to FIG. 32, as an electric field in a predetermined pattern is applied (see (b) of FIG. 32), all of red and blue particles are located concentratively around the lower electrode but not around the upper electrode, so that white color may be mainly displayed (see (a) of FIG. 32).

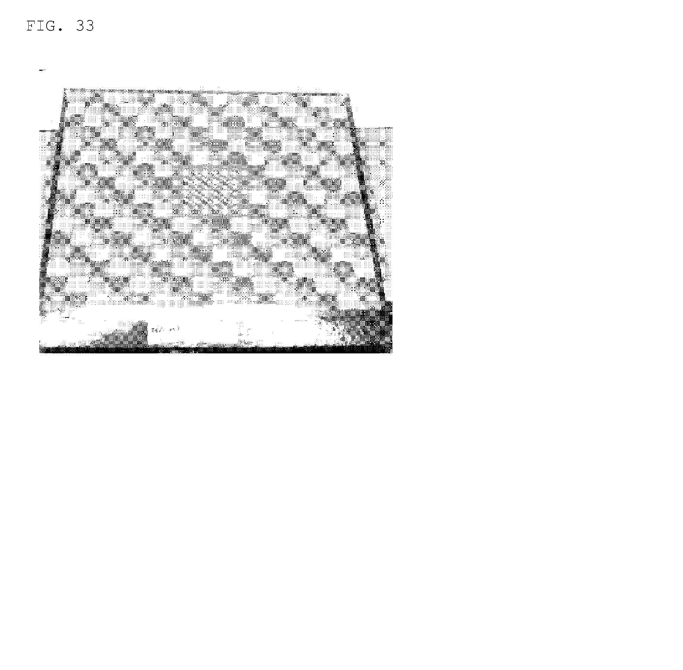

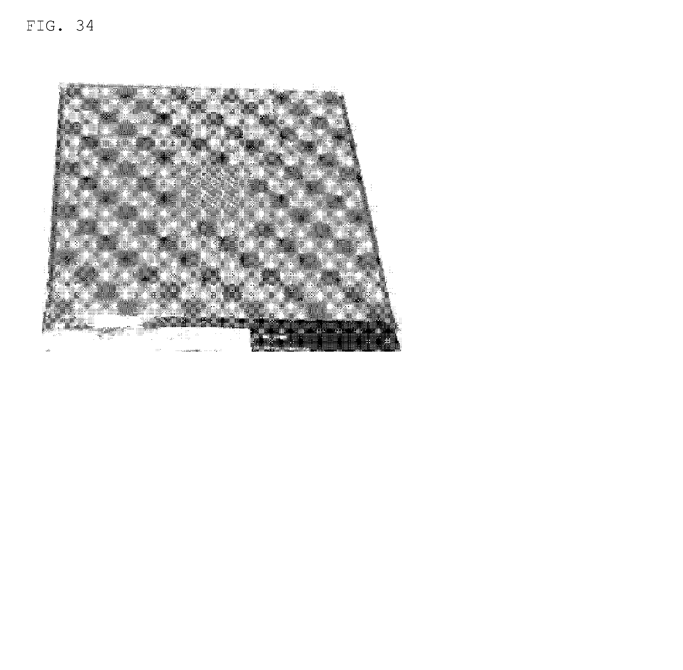

FIGs. 33 and 34 illustratively show examples in which various colors are displayed by adjusting application times of electric fields when two types of particles having different colors and response times are mixed according to one embodiment of the present invention.

With reference to FIG. 33, it can be seen that violet, white and magenta colors are displayed in different grids, respectively. With reference to FIG. 34, it can be seen that violet, cyan and magenta colors are displayed in different grids, respectively.

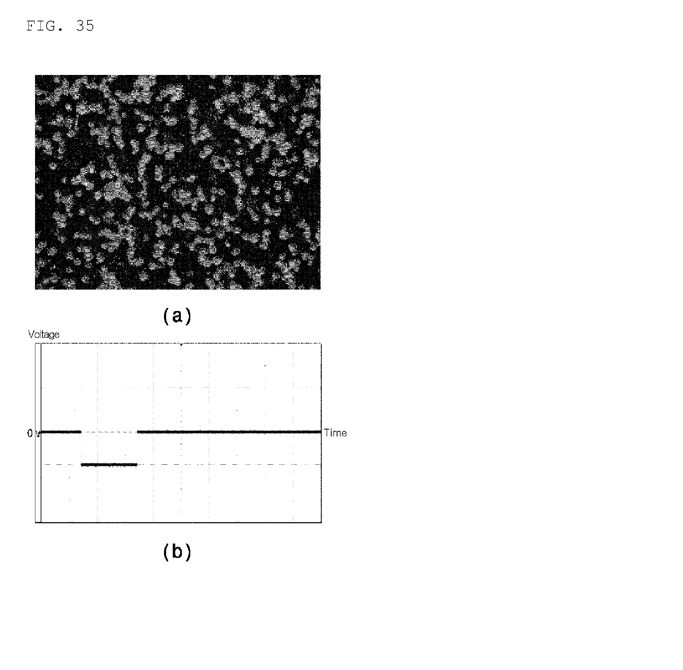

FIGs. 35 to 38 illustratively show experiment examples in which various colors are displayed by adjusting application times of electric fields when three types of particles each having red (R), yellow (Y) and blue (B) colors and different response times are mixed according to one embodiment of the present invention.

First, with reference to FIG. 35, as an electric field in a predetermined pattern is applied (see (b) of FIG. 35), red, yellow and blue particles are moved by electrophoresis to be separated from the lower electrode and located concentratively around the upper electrode, so that red, yellow and blue colors may be displayed in a mixed manner (see (a) of FIG. 35).

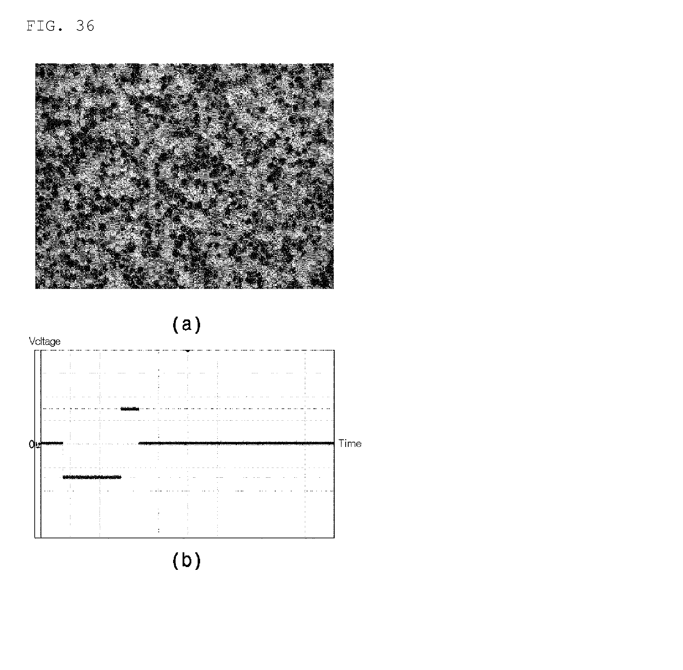

Next, with reference to FIG. 36, as an electric field in a predetermined pattern is applied (see (b) of FIG. 36), yellow and blue particles are moved by electrophoresis to be separated from the lower electrode and located concentratively around the upper electrode, so that yellow and blue colors may be mainly displayed (see (a) of FIG. 36).

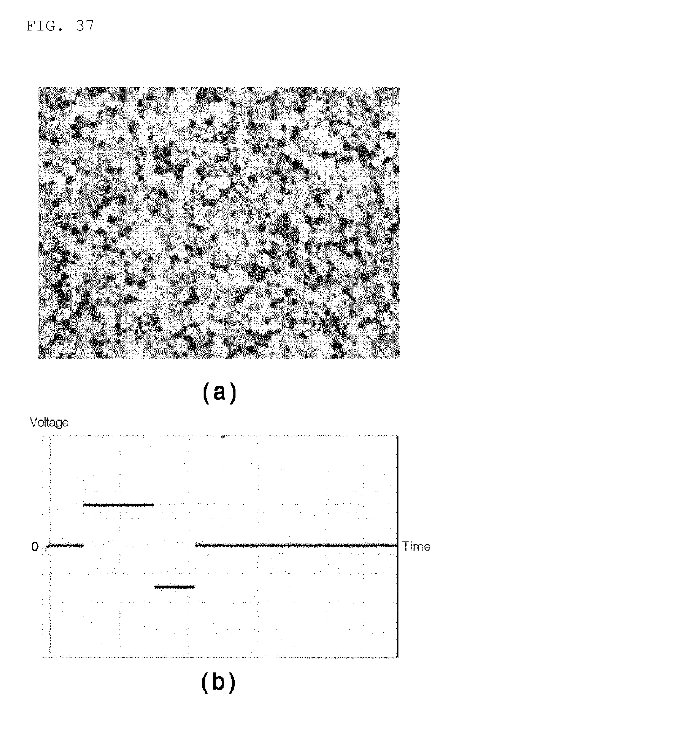

Next, with reference to FIG. 37, as an electric field in a predetermined pattern is applied (see (b) of FIG. 37), red and yellow particles are moved by electrophoresis to be separated from the lower electrode and located concentratively around the upper electrode, so that red and yellow colors may be mainly displayed (see (a) of FIG. 37).

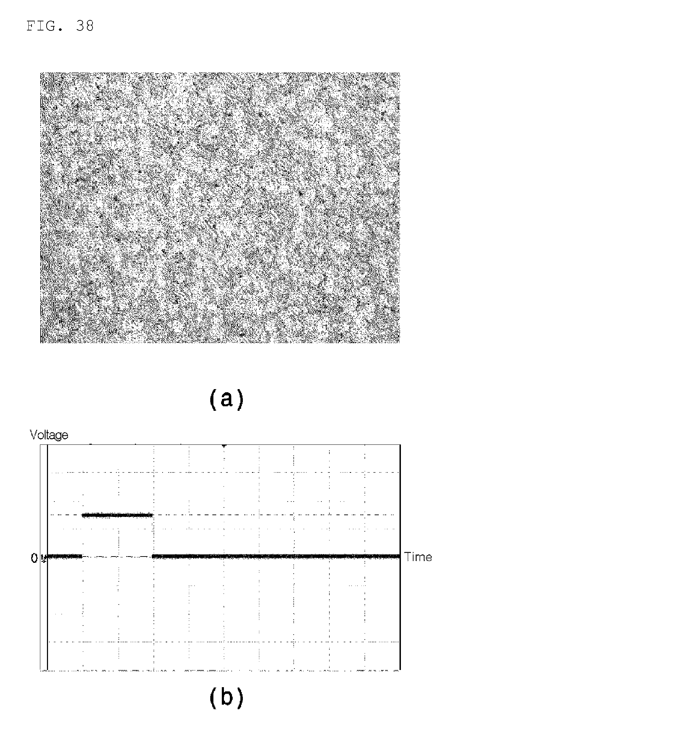

Next, with reference to FIG. 38, as an electric field in a predetermined pattern is applied (see (b) of FIG. 38), all of red, yellow and blue particles are located concentratively around the lower electrode but not around the upper electrode, so that white color may be mainly displayed (see (a) of FIG. 38).

Meanwhile, according to one embodiment of the present invention, when manufacturing a plurality of capsules each containing particles having different colors and different threshold values or response times, the size of each capsule may be made small so that the plurality of capsules may be uniformly mixed, thereby enhancing color reproducibility of a display device.

Meanwhile, according to one embodiment of the present invention, the size of capsules containing particles may be adjusted so that the threshold values or response times of the particles contained in the corresponding capsules may be adjusted. Further, if the threshold values or response times are changed depending on the size of the capsules, the mixing ratio of the capsules having different sizes may be adjusted to enhance color reproducibility.

Meanwhile, according to one embodiment of the present invention, a predetermined color may be displayed on a display device by adjusting the intensity or application time of an electric field, as discussed above. In this case, although the electric field is not continuously applied, a memory effect in which the display state is maintained (i.e., sustained) for a certain period of time may occur due to bistability of the particles. Meanwhile, after a long time has elapsed, a flicker effect in which the display state becomes unstable may occur to reduce color reproducibility. In order to prevent the flicker effect, a refresh electric field needs to be applied to refresh the display state before the memory effect, in which the display state is maintained due to bistability of the particles, disappears completely.

According to one embodiment of the present invention, the movement amount of particles required to initially render a display state for a predetermined color is relatively larger than that of particles required to refresh a previously rendered display state. Accordingly, if a refresh electric field is applied which has an intensity or application time similar to that of an operating electric field applied to render a display state for a predetermined color, the arrangement of particles in capsules may be excessively changed so that the displayed colors may be different from the intended colors. Therefore, according to one embodiment of the present invention, the intensity or application time of a refresh electric field may be set to be smaller than that of an operating electric field.

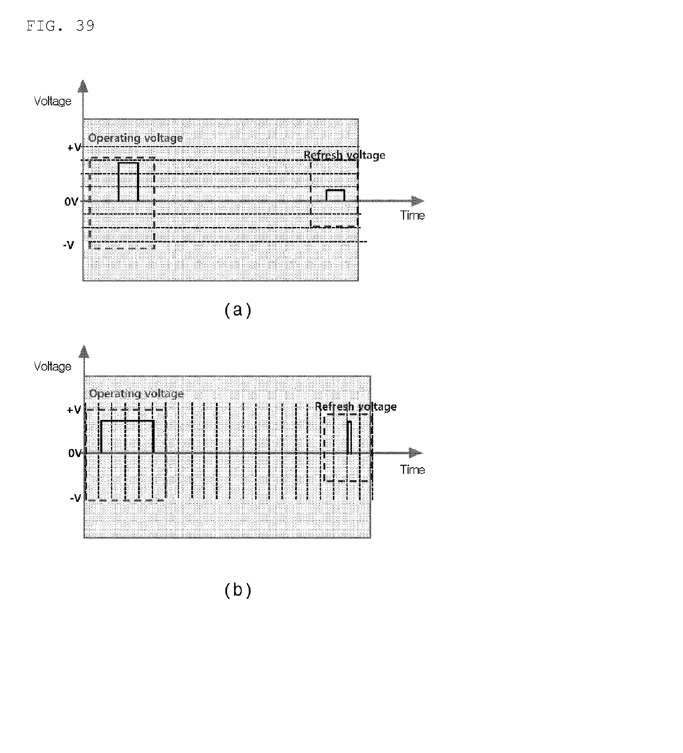

FIG. 39 illustratively shows a configuration for applying a refresh electric field according to one embodiment of the present invention.

With reference to (a) of FIG. 39, while an operating electric field with an intensity of V_{O} is applied and the display state is maintained, a refresh electric field with an intensity of V_{R} smaller than V_{O} is applied so that the positions or arrangement of particles may be refreshed to a desired state. With reference to (b) of FIG. 39, while an operating electric field is applied for a period of time of T_{O} and the display state is maintained, a refresh electric field is applied for a period of time of T_{R} shorter than T_{O} so that the positions or arrangement of particles may be refreshed to a desired state.

FIG. 40 illustratively shows an experiment result obtained by applying a refresh electric field according to one embodiment of the present invention.

With reference to FIG. 40, after a display state is rendered by applying an operating electric field with an intensity of 15 V (see (a) of FIG. 40), it can be seen that the display state becomes unstable to reduce color reproducibility after a period of time for which a memory effect is maintained (see (b) of FIG. 40). If the display state is refreshed by applying a refresh electric field with an intensity of 3 V, it can be seen that a normal and stable display state is rendered again (see (c) of FIG. 40).

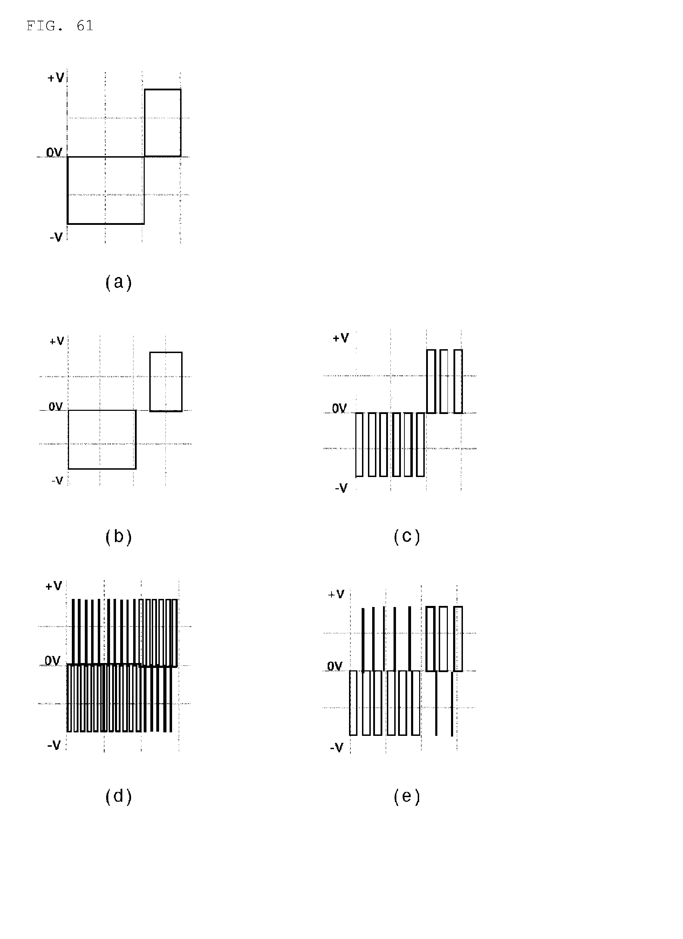

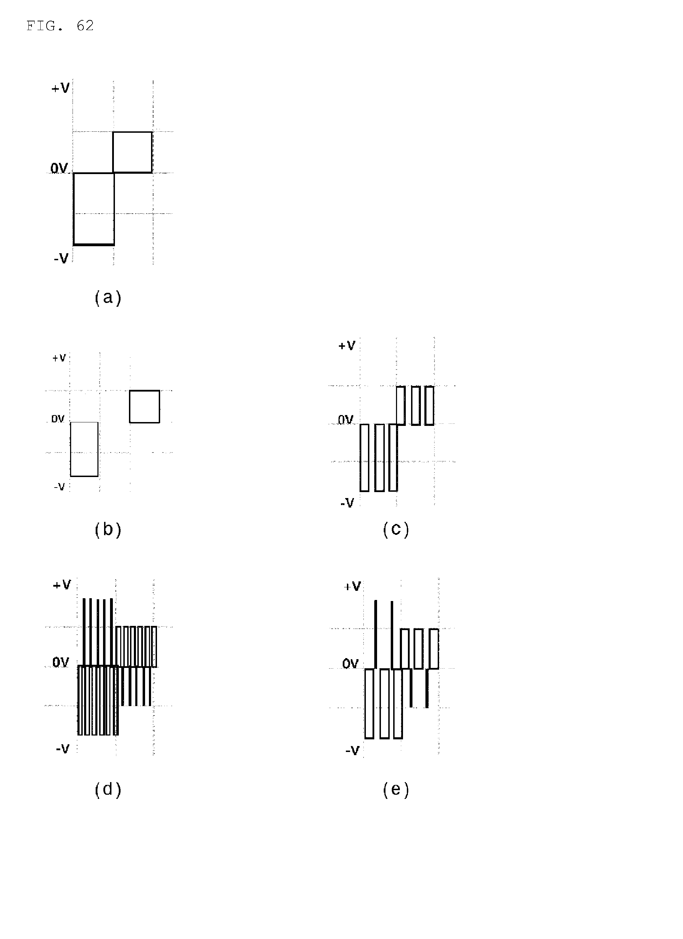

FIGs. 61 and 62 illustratively show configurations for applying electric fields according to one embodiment of the present invention.

With reference to FIGs. 61 and 62, a reflective display device according to one embodiment of the present invention may discharge an electrode or apply a voltage to the electrode in a direction opposite to that of an operating electrode for a period of time short enough not to affect the movement of particles, before an operating voltage is applied or while a pulse-type operating voltage is applied, in order to prevent an event (so-called burning) in which the characteristics of the electrodes are deteriorated as a direct current (DC) voltage for generating electric fields between the electrodes is applied for a long period of time.

Specifically, with reference to FIG. 61, when pulse-type operating voltages having different application times are applied in sequence (see (a) of FIG. 61), the electrode may be discharged between the pulse-type operating voltages (see (b) and (c) of FIG. 61), or voltages in the opposite direction of the operating voltages may be applied (see (d) and (e) of FIG. 61).

Further, with reference to FIG. 62, when pulse-type operating voltages having different intensities are applied in sequence (see (a) of FIG. 62), the electrode may be discharged between the time periods for which the pulse-type operating voltages are applied (see (b) and (c) of FIG. 62), or voltages in the opposite direction of the operating voltages may be applied (see (d) and (e) of FIG. 62).

### 3-1. Reflective display device according to yet another embodiment of the present invention

### Configuration of the reflective display device

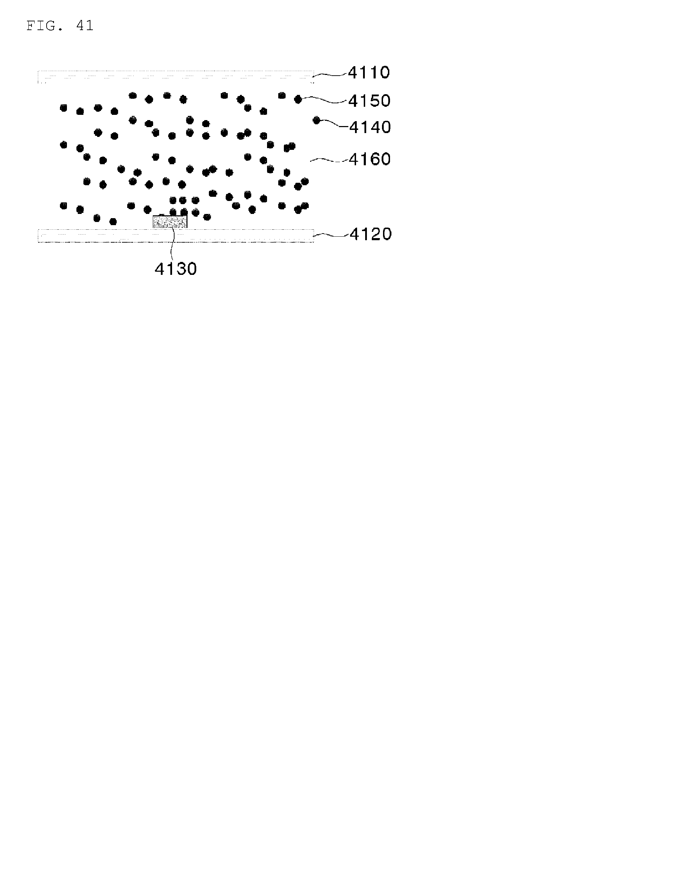

FIG. 41 illustratively shows a configuration of a reflective display device according to yet another embodiment of the present invention.

With reference to FIG. 41, a reflective display device 4100 according to yet another embodiment of the present invention may comprise an upper substrate 4110, a lower substrate 4120, and an electrode 4130. Further, according to yet another embodiment of the present invention, base particles 4140 and color particles 4150 may be contained between the upper and lower substrates 4110 and 4120 as dispersed in a fluid 4160. Here, the base particles 4140, color particles 4150, and fluid 4160 may be contained in unit cells (not shown) comprised of capsules, partitions, banks, and the like.

First, according to yet another embodiment of the present invention, the electrode 4130 may be configured to be formed only in a partial area of the upper substrate 4110 or lower substrate 4120. Therefore, according to yet another embodiment of the present invention, when an electric field in a predetermined direction is applied through the electrode 4130, the base particles 4140 and color particles 4150 are concentrated around the electrode 4130 so that light entering the reflective display device 4100 may be intactly transmitted or the color of the color particles 4150 may not be displayed. Further, when no electric field is applied or an electric field in the opposite direction is applied through the electrode 4130, the base particles 4140 and color particles 4150 are irregularly scattered between the upper and lower substrates 4110 and 4120 so that the base particles 4140 may cause the light transmittance to be reduced or the color of the color particles 4150 may be displayed.

Next, according to yet another embodiment of the present invention, the base particles 4140 are charged and the light transmittance thereof is equal to or lower than a predetermined value. The base particles 4140 may be moved by an electric field applied through the electrode 4130 toward or away from the electrode 4130, and may function to block light entering the reflective display device 4100. Therefore, the reflective display device 4100 may adjust the light transmittance or color brightness by adjusting the intensity or application time of the electric field applied to the base particles 4140, as will be described below.

Further, according to yet another embodiment of the present invention, the color particles 4150 are charged and have inherent colors. The color particles 4150 may be moved by the applied electric field and may reflect light having specific wavelengths corresponding to the inherent colors among light incident from the reflective display device 4100. Therefore, the reflective display device 4100 may display various colors or adjust the saturation of the displayed colors by adjusting the intensities or application times of the electric fields applied to the color particles 4150, as will be described below.

According to yet another embodiment of the present invention, minimum intensities (i.e., threshold values) or minimum application times (i.e., response times) of electric fields required to drive (i.e., move or electrophorese) the base particles 4140 and color particles 4150 may be set to be different from each other.

In specific, according to yet another embodiment of the present invention, the base particles 4140 and color particles 4150 do not move or rarely move when the intensities of the applied electric fields are less than each of the threshold values thereof. On the contrary, the base particles 4140 and color particles 4150 may move enough to change the display state of the reflective display device 4100 only when the intensities of the applied electric fields are equal to or higher than each of the threshold values. Here, the threshold values of the base particles 4140 and color particles 4150 may be set to be different from each other.

Further, according to yet another embodiment of the present invention, the base particles 4140 and color particles 4150 do not move or rarely move when the electric fields are applied for a period of time shorter than each of the response times thereof. On the contrary, the base particles 4140 and color particles 4150 may move enough to change the display state of the reflective display device 4100 only when the electric fields are applied for a period of time equal to or longer than each of the response times. Here, the response times of the base particles 4140 and color particles 4150 may be set to be different from each other.

According to yet another embodiment of the present invention, a method for adjusting the threshold value or response time of the base particles 4140 or color particles 4150 is provided, which may adjust surface charges, coating thickness, zeta potentials, dielectric constants, specific gravities, densities, sizes, shapes, and structures of the particles; dielectric constants, viscosities, and specific gravities of the fluids in which the particles are dispersed; additives added into the fluids in which the particles are dispersed; electrode patterns, electrode intervals, electrode sizes, and electrode materials of the electrodes for applying electric fields to the particles and fluids; electric fields substantially applied to the particles by the electrodes; and the like.

For another example, the particles or the fluids in which the particles are dispersed may include ferroelectric or antiferroelectric materials, the dielectric constants of which rapidly increase or decrease according to electric fields. In this case, there exist threshold values of intensities of the electric fields at which the dielectric constants of the particles or fluids rapidly change, and thus there also exist threshold values of intensities of the electric fields that critically affects the movement or behavior of the particles. Consequently, the particles may rapidly move at a specific threshold value.

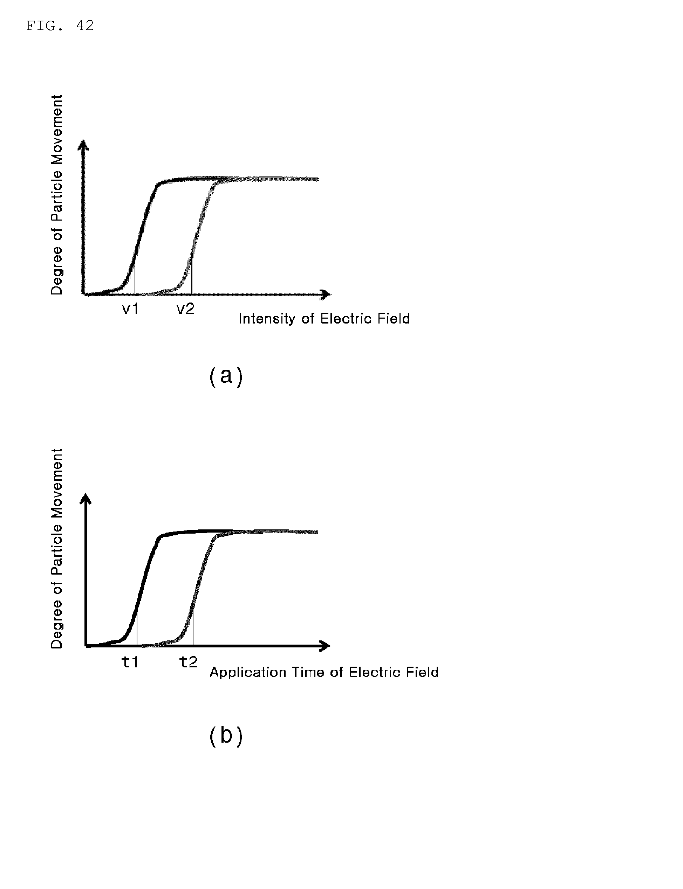

FIG. 42 illustratively shows threshold values of intensities and application times (i.e., response times) of electric fields for moving base particles and color particles included in a reflective display device according to yet another embodiment of the present invention.

With reference to (a) of FIG. 42, the intensities (i.e., threshold values) of electric fields required to move the base particles 4140 and color particles 4150 may be V₁ and V₂, respectively. Further, with reference to (b) of FIG. 42, the application times (i.e., response times) of the electric fields required to move the base particles 4140 and color particles 4150 may be t₁ and t₂, respectively.

### Operation of the reflective display device: Using the threshold values

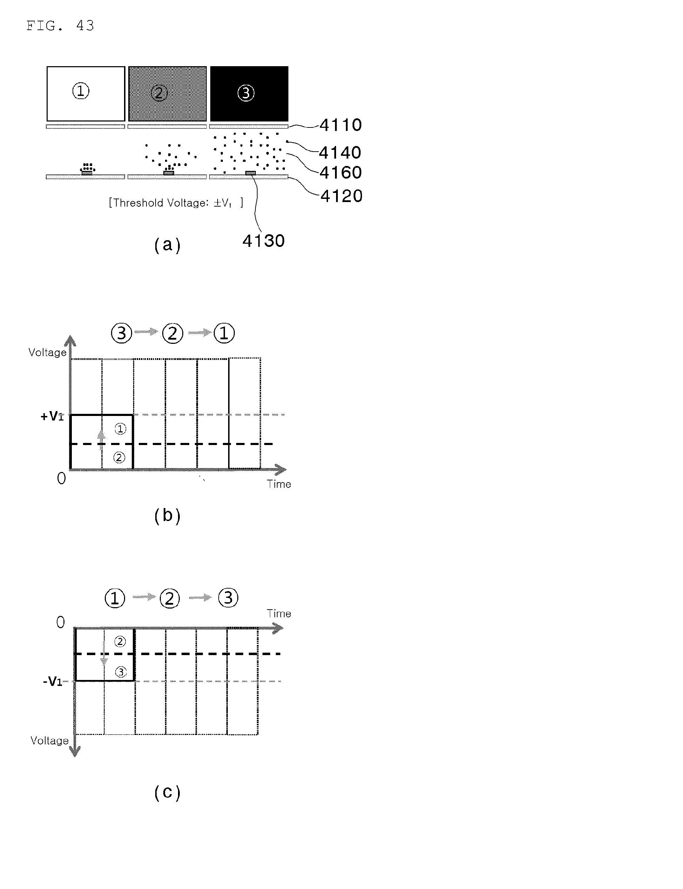

FIG. 43 illustratively shows configurations for controlling base particles by adjusting intensities of electric fields according to yet another embodiment of the present invention.

First, with reference to (a) and (b) of FIG. 43, when the negatively charged base particles 4140 are irregularly scattered (State 3 in FIG. 43), a positive electric field is applied to the base particles 4140 through the electrode 4130 so that an attractive electric force may act on the base particles 4140 to allow them to be located concentratively around the electrode 4130, thereby increasing the light transmittance of the reflective display device 4100. Specifically, as the intensity of the positive electric field is increased, the base particles 4140 gradually move toward the electrode 4130 so that the light transmittance may be medium (State 2 in FIG. 43). If the intensity of the electric field is equal to or higher than the threshold value (V₁) of the base particles 4140, the base particles 4140 move completely to the electrode 4130 and are located concentratively around the electrode 4130 so that the light transmittance may be high (State 1 in FIG. 43).

Next, with reference to (a) and (c) of FIG. 43, when the negatively charged base particles 4140 are located concentratively around the electrode (State 1 in FIG. 43), a negative electric field is applied to the base particles 4140 through the electrode 4130 so that a repulsive electric force may act on the base particles 4140 to allow them to be away from the electrode 4130 and irregularly scattered, thereby reducing the light transmittance of the reflective display device 4100. Specifically, as the intensity of the negative electric field is increased, the base particles 4140 gradually move away from the electrode 4130 so that the light transmittance may be medium (State 2 in FIG. 43). If the intensity of the electric field is equal to or higher than the threshold value V₁ of the base particles 4140, the base particles 4140 are irregularly scattered so that the light transmittance may be low (State 3 in FIG. 43).

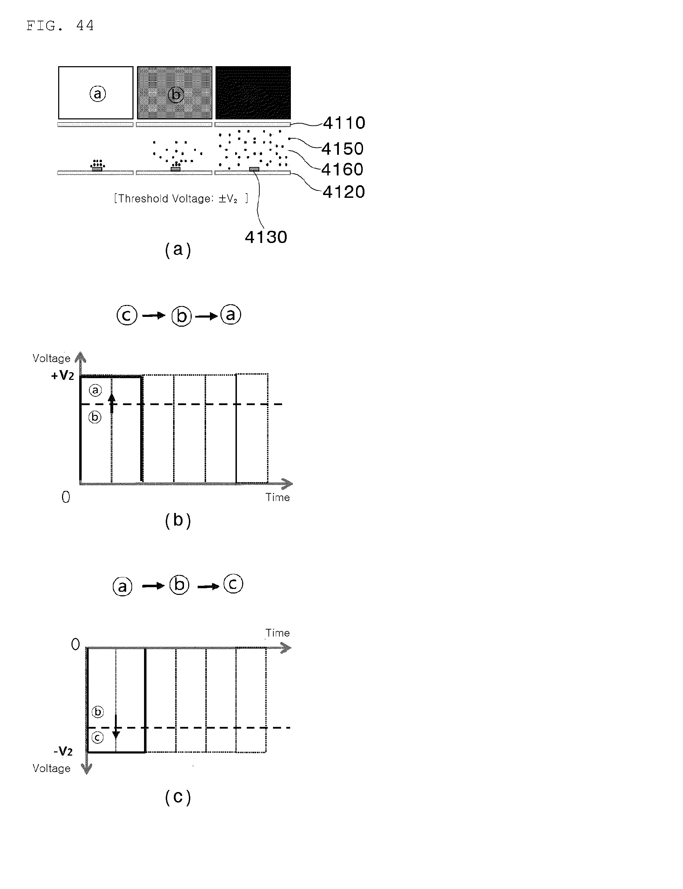

FIG. 44 illustratively shows configurations for controlling color particles by adjusting intensities of electric fields according to yet another embodiment of the present invention.

First, with reference to (a) and (b) FIG. 44, when the negatively charged color particles 4150 are irregularly scattered so that the color of the color particles 4150 is displayed to be deep (State C in FIG. 44), a positive electric field is applied to the color particles 4150 through the electrode 4130 so that an attractive electric force may act on the color particles 4150 to allow them to be located concentratively around the electrode 4130, thereby reducing the saturation of the color of the color particles 4150 displayed on the reflective display device 4100. Specifically, as the intensity of the positive electric field is increased, the color particles 4150 gradually move toward the electrode 4130 so that the color of the color particles 4150 may be displayed to be light (State B in FIG. 44). If the intensity of the electric field is equal to or higher than the threshold value V₂ of the color particles 4150, the color particles 4150 move completely to the electrode 4130 and located concentratively around the electrode 4130 so that the color of the color particles 4150 may be rarely displayed (State A in FIG. 44).

Next, with reference to (a) and (c) of FIG. 44, when the negatively charged color particles 4150 are located concentratively around the electrodes so that the color of the color particles 4150 is rarely displayed (State A in FIG. 44, a negative electric field is applied to the color particles 4150 through the electrode 4130 so that a repulsive electric force may act on the color particles 4150 to allow them to be away from the electrode 4130 and irregularly scattered, thereby increasing the saturation of the color of the color particles 4150 displayed on the reflective display device 4100. Specifically, as the intensity of the negative electric field is increased, the color particles 4150 gradually move away from the electrode 4130 so that the color of the color particles 4150 may be displayed to be light (State B in FIG. 44). If the intensity of the electric field is equal to or higher than the threshold value V₂ of the color particles 4150, the color particles 4150 are irregularly scattered so that the color of the color particles 4150 may be displayed to be deep (State C in FIG. 44).

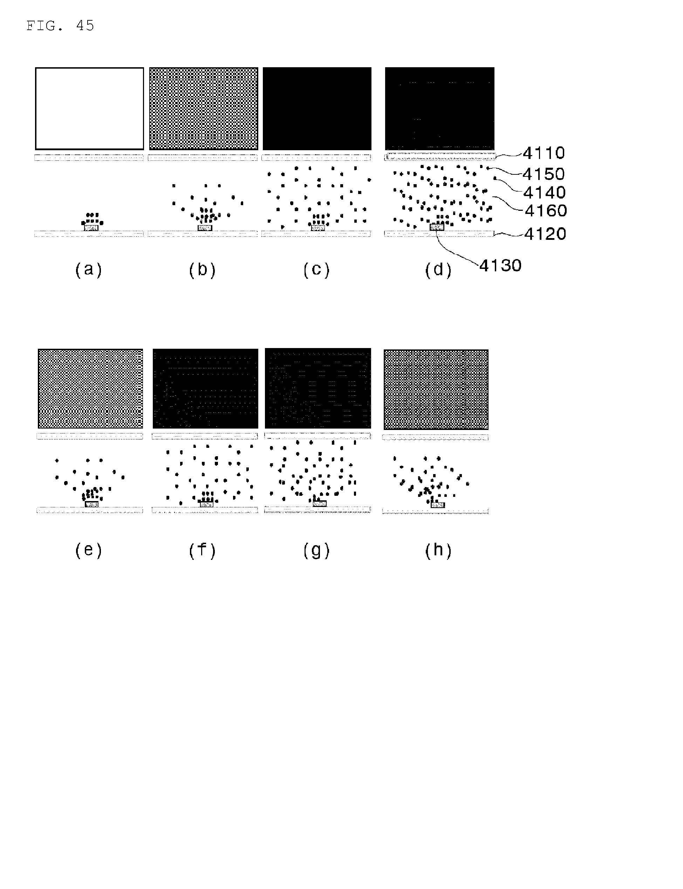

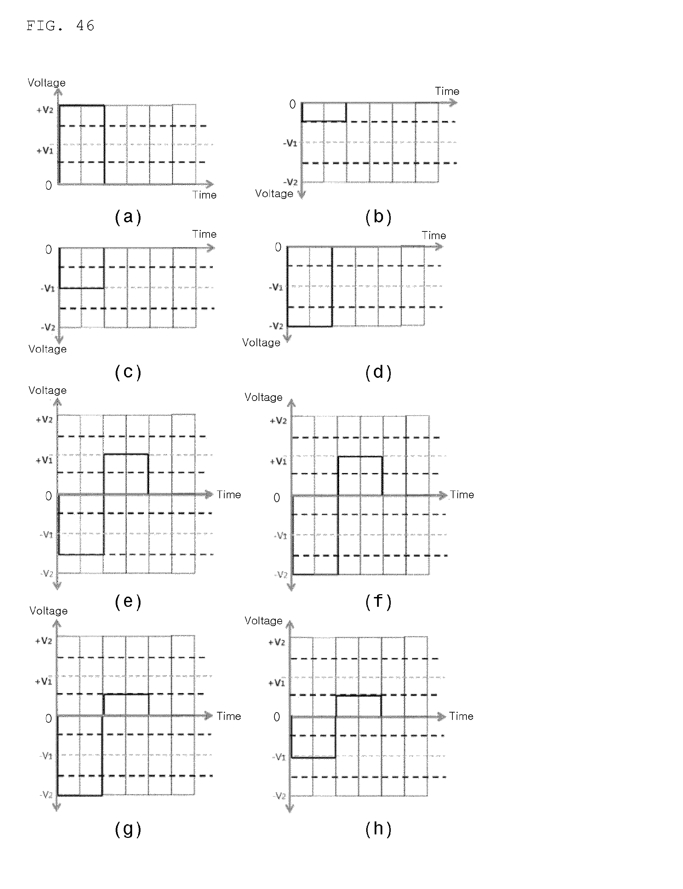

FIGs. 45 and 46 illustratively show configurations for applying various patterns of electric fields to a reflective display device according to yet another embodiment of the present invention.

In FIGs. 45 and 46, the threshold values of the intensities of electric fields required to move the negatively charged base particles 4140 and color particles 4150 may be V₁ and V₂, respectively (where V₁ < V₂). Further, the base particles 4140 may show black color, the color particles 4150 may show red color, and the base particles 4140 and color particles 4150 may be dispersed in the fluid 4160 consisted of a light transmitting material. According to yet another embodiment of the present invention, the light transmittance or the brightness or saturation of the color of the color particles 4150 may be adjusted by variously adjusting patterns (i.e., directions and intensities) of electric fields applied to the base particles 4140 and color particles 4150 of the reflective display device 4100.

First, with reference to FIG. 45 and (a) of FIG. 46, all of the base particles 4140 and color particles 4150 are moved by the electrophoresis and located concentratively at the electrode 4130 by applying an electric field to the base particles 4140 and color particles 4150 with an intensity equal to or higher than the threshold value V₂ of the color particles 4150. Accordingly, the light transmittance of the reflective display device 4100 according to yet another embodiment of the present invention is increased so that the reflective display device 4100 may be in a relatively transparent state (i.e., a state in which the light transmittance is high).

Next, with reference to FIG. 45 and (b) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity lower than the threshold value V₁ of the base particles 4140 so that the base particles 4140 may slightly move away from the electrode 4130 and the light transmittance of the reflective display device 4100 may be slightly lowered to be medium.

Next, with reference to FIG. 45 and (c) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity of the threshold value V₁ of the base particles 4140 so that the base particles 4140 may be irregularly scattered and the light transmittance of the reflective display device 4100 may be low.

Next, with reference to FIG. 45 and (d) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity of the threshold value V₂ of the color particles 4150 so that all of the base particles 4140 and color particles 4150 may be irregularly scattered and the reflective display device 4100 may display deep red color (i.e., the red color of which brightness is low and saturation is high) in the state in which the light transmittance is low.

Next, with reference to FIG. 45 and (e) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity between the threshold value V₁ of the base particles 4140 and the threshold value V₂ of the color particles 4150, and then an electric field in the same direction of the electric field applied in FIG. 45 and (a) of FIG. 46 is applied thereto with an intensity of the threshold value V₁ of the base particles 4140, so that the base particles 4140 may be located concentratively around the electrode 4130 while the color particles 4150 may slightly move away from the electrode 4130, and the reflective display device 4100 may display light red color (i.e., the red color of which brightness is high and saturation is low) in the state in which the light transmittance is high.

Next, with reference to FIG. 45 and (f) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity of the threshold value V₂ of the color particles 4150, and then an electric field in the same direction of the electric field applied in FIG. 45 and (a) of FIG. 46 is applied thereto with an intensity of the threshold value V₁ of the base particles 4140, so that the base particles 4140 may be located concentratively around the electrode 4130 while the color particles 4150 may be irregularly scattered, and the reflective display device 4100 may display deep red color (i.e., the red color of which brightness and saturation are all high) in the state in which the light transmittance is high.

Next, with reference to FIG. 45 and (g) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity of the threshold value V₂ of the color particles 4150, and then an electric field in the same direction of the electric field applied in FIG. 45 and (a) of FIG. 46 is applied thereto with an intensity less than the threshold value V₁ of the base particles 4140, so that the color particles 4150 may be irregularly scattered while the base particles 4140 may slightly move away from the electrode 4130, and the reflective display device 4100 may display deep red color (i.e., the red color of which brightness is medium and saturation is high) in the state in which the light transmittance is medium.

Next, with reference to FIG. 45 and (h) of FIG. 46, when all of the base particles 4140 and color particles 4150 are located concentratively at the electrode 4130 (i.e., in the state shown in FIG. 45 and (a) of FIG. 46), an electric field in the opposite direction of the electric field applied in FIG. 45 and (a) of FIG. 46 is applied to the base particles 4140 and color particles 4150 with an intensity of the threshold value V₁ of the base particles 4140, and then an electric field in the same direction of the electric field applied in FIG. 45 and (a) of FIG. 46 is applied thereto with an intensity less than the threshold value V₁ of the base particles 4140, so that all of the base particles 4140 and color particles 4150 may slightly move away from the electrode 4130 and the reflective display device 4100 may display light red color (i.e., the red color of which brightness is medium and saturation is low) in the state in which the light transmittance is medium.

### Operation of the reflective display device: Using the response times

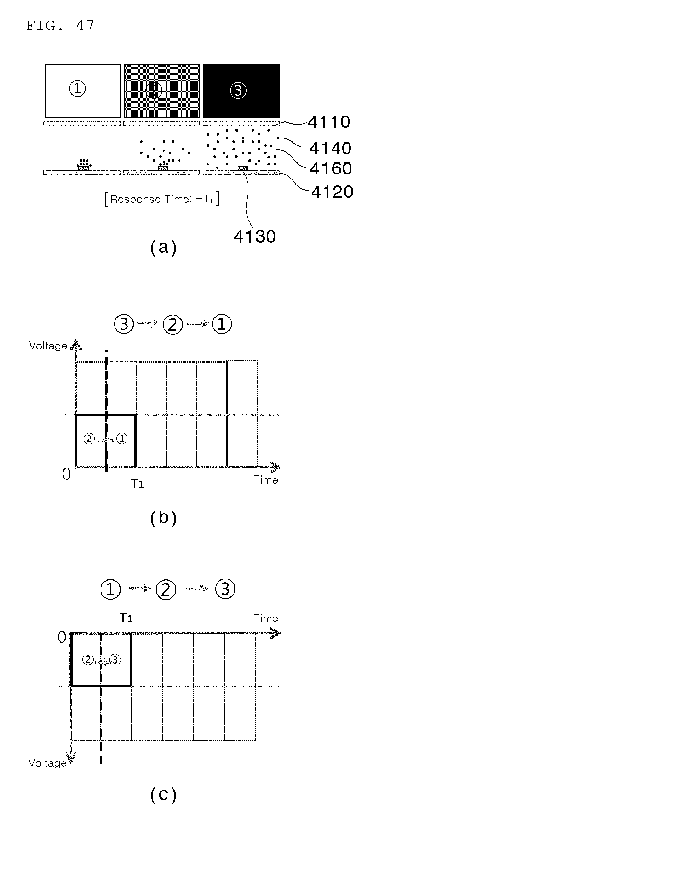

FIG. 47 illustratively shows configurations for controlling base particles by adjusting application times of electric fields according to yet another embodiment of the present invention.

First, with reference to (a) and (b) of FIG. 47, when the negatively charged base particles 4140 are irregularly scattered (State 3 in FIG. 47), a positive electric field is applied to the base particles 4140 through the electrode 4130 so that an attractive electric force may act on the base particles 4140 to allow them to be located concentratively around the electrode 4130, thereby increasing the light transmittance of the reflective display device 4100. Specifically, as the application time of the positive electric field is increased, the base particles 4140 gradually move toward the electrode 4130 so that the light transmittance may be medium (State 2 in FIG. 47). If the application time of the electric field is equal to or longer than the response time t₁ of the base particles 4140, the base particles 4140 move completely to the electrode 4130 and are located concentratively around the electrode 4130 so that the light transmittance may be high (State 1 in FIG. 47).

Next, with reference to (a) and (c) of FIG. 47, when the negatively charged base particles 4140 are located concentratively around the electrodes (State 1 in FIG. 47), a negative electric field is applied to the base particles 4140 through the electrode 4130 so that a repulsive electric force may act on the base particles 4140 to allow them to be away from the electrode 4130 and irregularly scattered, thereby reducing the light transmittance of the reflective display device 4100. Specifically, as the application time of the negative electric field is increased, the base particles 4140 gradually move away from the electrode 4130 so that the light transmittance may be medium (State 2 in FIG. 47). If the application time of the electric field is equal to or longer than the response time t₁ of the base particles 4140, the base particles 4140 are irregularly scattered so that the light transmittance may be low (State 3 in FIG. 47).

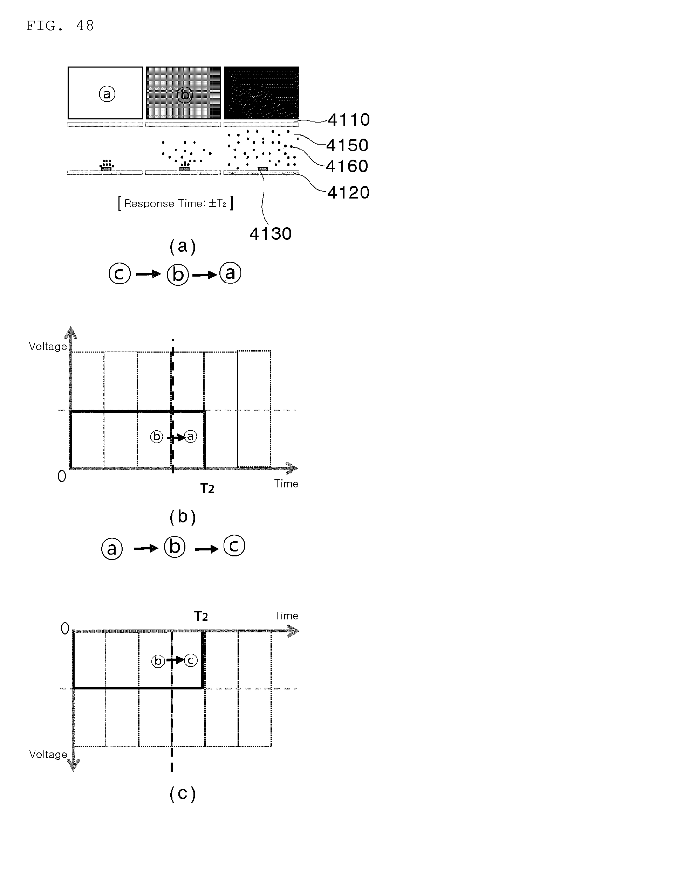

FIG. 48 illustratively shows configurations for controlling color particles by adjusting application times of electric fields according to yet another embodiment of the present invention.

First, with reference to (a) and (b) of FIG. 48, when the negatively charged color particles 4150 are irregularly scattered so that the color of the color particles 4150 is displayed to be deep (State C in FIG. 48), a positive electric field is applied to the color particles 4150 through the electrode 4130 so that an attractive electric force may act on the color particles 4150 to allow them to be located concentratively around the electrode 4130, thereby reducing the saturation of the color of the color particles 4150 displayed on the reflective display device 4100. Specifically, as the application time of the positive electric field is increased, the color particles 4150 gradually move toward the electrode 4130 so that the color of the color particles 4150 mat be displayed to be light (State B in FIG. 48). If the application time of the electric field is equal to or longer than the response time t₂ of the color particles 4150, the color particles 4150 move completely to the electrode 4130 and are located concentratively around the electrode 4130 so that the color of the color particles 4150 may be rarely displayed (State A in FIG. 48).

First, with reference to (a) and (c) of FIG. 48, when the negatively charged color particles 4150 are located concentratively around the electrode so that the color of the color particles 4150 is rarely displayed (State A in FIG. 48), a negative electric field is applied to the color particles 4150 through the electrode 4130 so that a repulsive electric force may act on the color particles 4150 to allow them to be away from the electrode 4130 and irregularly scattered, thereby increasing the saturation of the color of the color particles 4150 displayed on the reflective display device 4100. Specifically, as the application time of the negative electric field is increased, the color particles 4150 gradually move away from the electrode 4130 so that the color of the color particles 4150 may be displayed to be light (State B in FIG. 48). If the application time of the electric field is equal to or longer than the response time t₂ of the color particles 4150, the color particles 4150 are irregularly scattered so that the color of the color particles 4150 may be displayed to be deep (State C in FIG. 48).

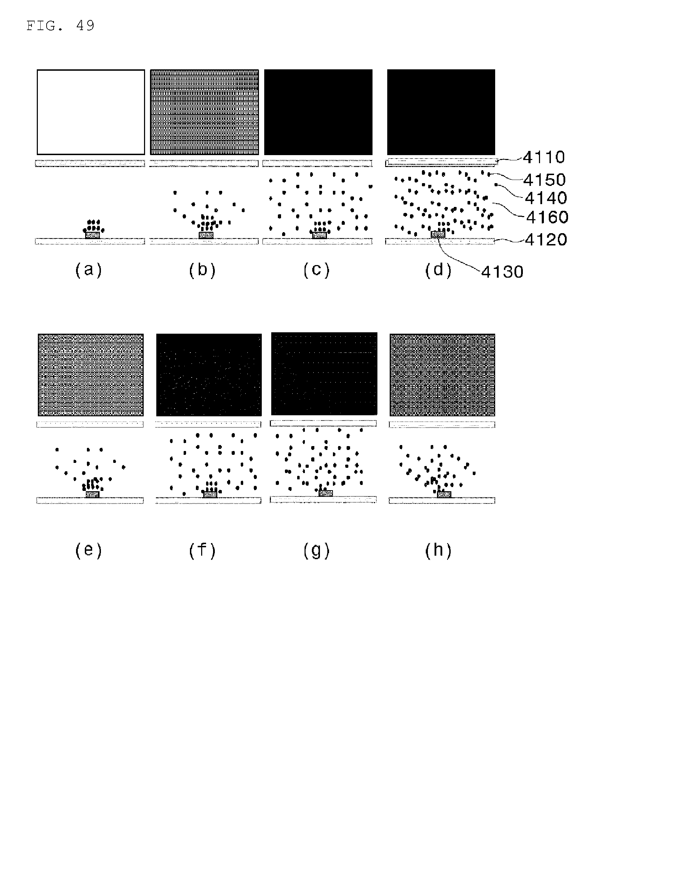

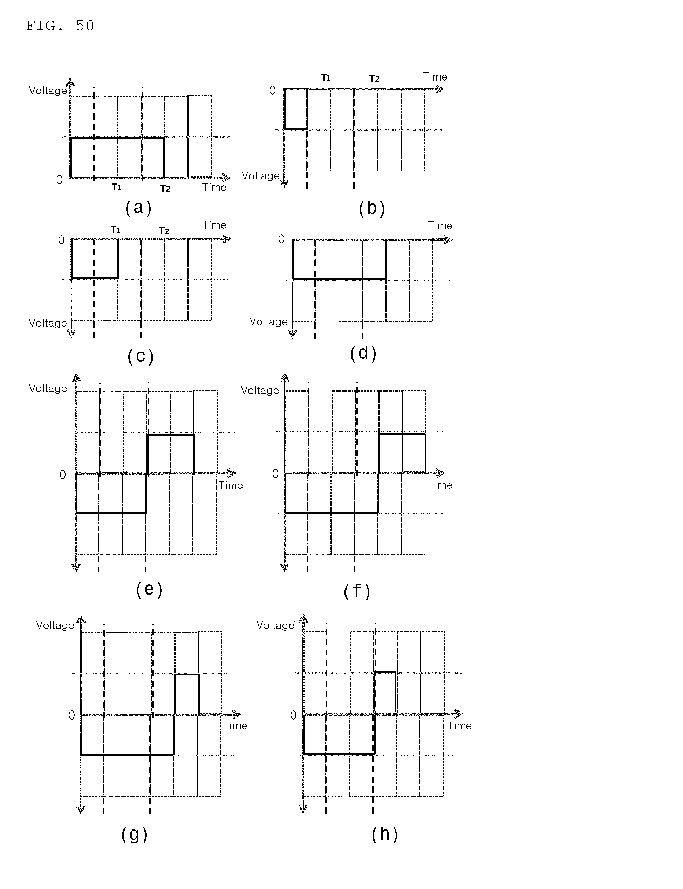

FIGs. 49 and 50 illustratively show configurations for applying various patterns of electric fields to a reflective display device according to yet another embodiment of the present invention.

In FIGs. 49 and 50, the application times (i.e., response times) of electric fields required to move the negatively charged base particles 4140 and color particles 4150 may be t₁ and t₂, respectively (where t₁ < t₂). Further, the base particles 4140 may show black color, the color particles 4150 may show red color, and the base particles 4140 and color particles 4150 may be dispersed in the fluid 4160 consisted of a light transmitting material. According to yet another embodiment of the present invention, the light transmittance or the brightness or saturation of the color of the color particles 4150 may be adjusted by variously adjusting patterns (i.e., directions and application times) of electric fields applied to the base particles 4140 and color particles 4150 of the reflective display device 4100.

First, with reference to FIG. 49 and (a) of FIG. 50, all of the base particles 4140 and color particles 4150 are moved by the electrophoresis and located concentratively at the electrode 4130 by applying an electric field to the base particles 4140 and color particles 4150 for a period of time equal to or longer than the response time t₂ of the color particles 4150. Accordingly, the light transmittance of the reflective display device 4100 according to yet another embodiment of the present invention is increased so that the reflective display device 4100 may be in a relatively transparent state (i.e., a state in which the light transmittance is high).

Next, with reference to FIG. 49 and (b) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time shorter than the response time t₁ of the base particles 4140 so that the base particles 4140 may slightly move away from the electrode 4130 and the light transmittance of the reflective display device 4100 may be slightly lowered to be medium.

Next, with reference to FIG. 49 and (c) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time corresponding to the response time t₁ of the base particles 4140 so that the base particles 4140 may be irregularly scattered and the light transmittance of the reflective display device 4100 may be low.

Next, with reference to FIG. 49 and (d) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time corresponding to the response time t₂ of the color particles 4150 so that all of the base particles 4140 and color particles 4150 may be irregularly scattered and the reflective display device 4100 may display deep red color (i.e., the red color of which brightness is low and saturation is high) in the state in which the light transmittance is low.

Next, with reference to FIG. 49 and (e) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time between the response time t₁ of the base particles 4140 and the response time t₂ of the color particles 4150, and then an electric field in the same direction of the electric field applied in FIG. 49 and (a) of FIG. 50 is applied thereto for a period of time corresponding to the response time t₁ of the base particles 4140, so that the base particles 4140 may be located concentratively around the electrode 4130 while the color particles 4150 may slightly move away from the electrode 4130, and the reflective display device 4100 may display light red color (i.e., the red color of which brightness is high and saturation is low) in the state in which the light transmittance is high.

Next, with reference to FIG. 49 and (f) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time corresponding to the response time t₂ of the color particles 4150, and then an electric field in the same direction of the electric field applied in FIG. 49 and (a) of FIG. 50 is applied thereto for a period of time corresponding to the response time t₁ of the base particles 4140, so that the base particles 4140 may be located concentratively around the electrode 4130 while the color particles 4150 may be irregularly scattered, and the reflective display device 4100 may display deep red color (i.e., the red color of which brightness and saturation are all high) in the state in which the light transmittance is high.

Next, with reference to FIG. 49 and (g) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time corresponding to the response time t₂ of the color particles 4150, and then an electric field in the same direction of the electric field applied in FIG. 49 and (a) of FIG. 50 is applied thereto for a period of time shorter than the response time t₁ of the base particles 4140, so that the color particles 4150 may be irregularly scattered while the base particles 4140 may slightly move away from the electrode 4130, and the reflective display device 4100 may display deep red color (i.e., the red color of which brightness is medium and saturation is high) in the state in which the light transmittance is medium.

Next, with reference to FIG. 49 and (h) of FIG. 50, when all of the base particles 4140 and color particles 4150 are located concentratively at the electrode 4130 (i.e., in the state shown in FIG. 49 and (a) of FIG. 50), an electric field in the opposite direction of the electric field applied in FIG. 49 and (a) of FIG. 50 is applied to the base particles 4140 and color particles 4150 for a period of time corresponding to the response time t₁ of the base particles 4140, and then an electric field in the same direction of the electric field applied in FIG. 49 and (a) of FIG. 50 is applied thereto for a period of time shorter than the response time t₁ of the base particles 4140, so that all of the base particles 4140 and color particles 4150 may slightly move away from the electrode 4130 and the reflective display device 4100 may display light red color (i.e., the red color of which brightness is medium and saturation is low) in the state in which the light transmittance is medium.

In the foregoing, the embodiments in which one type of base particles and one type of color particles are mixed have been mainly described. However, the configurations of the present invention are not necessarily limited to the above embodiments. It should be noted that the configurations of the present invention may also be applied to the embodiments in which multiple types of base particles and multiple types of color particles having different threshold values or response times are mixed.

Further, although the embodiments of the respective configurations for using the threshold values of particles and using the response times of particles have been mainly described, the configurations of the present invention are not necessarily limited to the above embodiments. It should be noted that there may naturally be assumed the embodiments in which both of the intensities and application times of electric fields applied to the base particles and color particles having different threshold values and response times are adjusted so that the light transmittance of the reflective display device and the brightness and saturation of colors displayed thereon may be adjusted using both of the threshold values and response times of the particles.

### Experiment examples

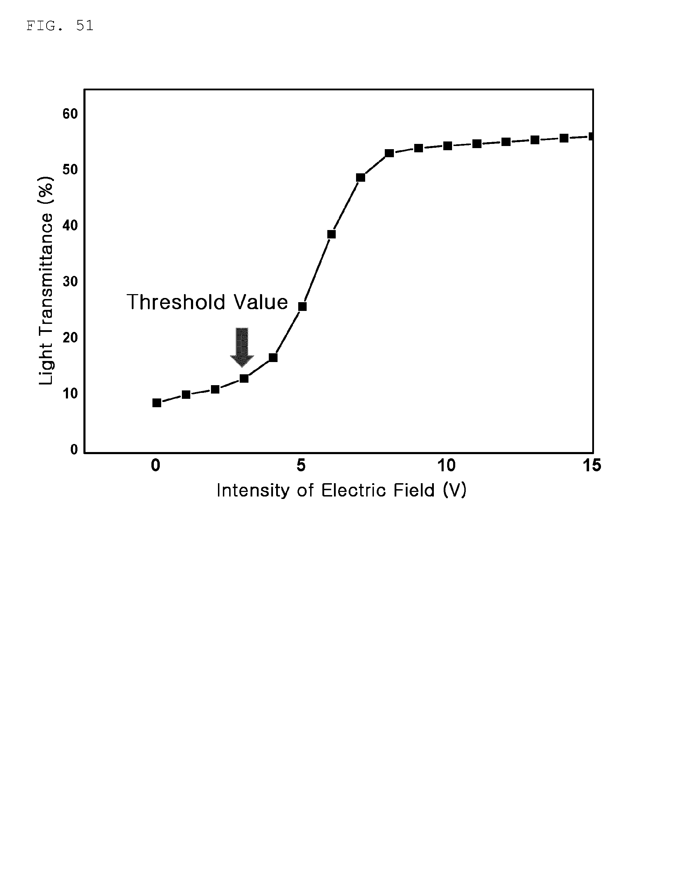

FIG. 51 illustratively shows an experiment result obtained by adjusting light transmittance of a reflective display device according to yet another embodiment of the present invention.

In the experiment example of FIG. 51, electric fields with intensities of 0 V to 15 V were applied through the electrode 4130 to the base particles 4140 dispersed and irregularly scattered in the fluid 4160, and the result was observed. With reference to FIG. 51, it can be seen that when electric fields with intensities between 0 V to 3 V were applied, the state of the base particles 4140 was rarely changed and thus the light transmittance was maintained as low as about 10%. On the contrary, it can be seen that when electric fields with intensities equal to or higher than 3 V (i.e., the electric fields with intensities equal to or higher than the threshold value of the base particles 4140) were applied, the base particles 4140 were moved and located concentratively around the electrode 4130 so that the light transmittance was rapidly increased to about 55%.

### Bistability of reflective display device

According to yet another embodiment of the present invention, even after the electric fields serving to control the movement of the particles (the base particles 4140 or color particles 4150) have been interrupted, the state of the particles 4140 and 4150 may be maintained as they have been controlled by the electric fields. That is, according to yet another embodiment of the present invention, the movement resistance of the particles 4140 and 4150 in the fluid 4160 is adjusted to restrict the movement of the particles 4140 and 4150 in the fluid 4160 so that the display state of the reflective display device 4100 may be continuously maintained even after the electric fields have been interrupted (so-called bistability or memory effect).

Specifically, according to yet another embodiment of the present invention, an additive that may cause a steric hindrance effect on the surfaces of the particles 4140 and 4150 is added into the fluid 4160 in which the particles 4140 and 4150 are dispersed, and the molecular weight or functional group of the added additive may be adjusted. Further, according to yet another embodiment of the present invention, the bistability or memory effect may be achieved by adjusting the coating thickness of the particles 4140 and 4150. Furthermore, according to yet another embodiment of the present invention, the viscosity of the fluid 4160 in which the particles 4140 and 4150 are dispersed may be adjusted to adjust the movement resistance of the particles 4140 and 4150 in the fluid 4160, thereby achieving the bistability or memory effect.

In connection with the more detailed description of the bistability or memory effect of the reflective display device 4100 according to the present invention, reference may be made to Korean Registered Patent No. 1,180,118, filed on July 18, 2011 and registered on August 30, 2012. In this regard, it should be understood that the disclosure of Korean Registered Patent No. 1,180,118 is incorporated herein by reference in its entirety.

### 3-2. Reflective display device according to still another embodiment of the present invention

### Configuration of the reflective display device

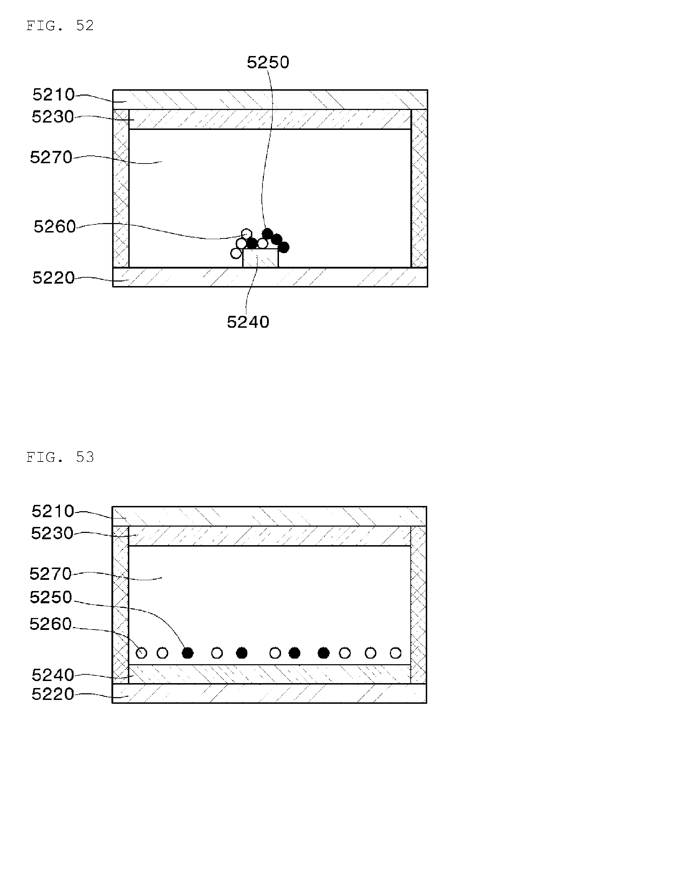

FIGs. 52 to 56 illustratively show configurations of a reflective display device according to still another embodiment of the present invention.

With reference to FIGs. 52 to 56, a reflective display device 5200 according to still another embodiment of the present invention may comprise an upper substrate 5210, a lower substrate 5220, an upper electrode 5230, and a lower electrode 5240. Further, according to still another embodiment of the present invention, first charged particles 5250 and second charged particles 5260 having different colors may be contained between the upper and lower electrodes 5230 and 5240 as dispersed in a fluid 5270. Here, the first particles 5250, second particles 5260, and fluid 5270 may be contained in unit cells (not shown) comprised of capsules, partitions, banks, and the like.

Further, according to still another embodiment of the present invention, at least one of the upper substrate 5210, lower substrate 5220, upper electrode 5230, lower electrode 5240, first particles 5250, second particles 5260, and fluid 5270 may have an inherent color or may be consisted of a light transmitting material. The colors of the upper substrate 5210, lower substrate 5220, upper electrode 5230, lower electrode 5240, first particles 5250, second particles 5260, and fluid 5270 may be set to be different from each other.

Furthermore, according to still another embodiment of the present invention, the first particles 5250 and the second particles 5260 may be charged with the same or different polarities. Therefore, the reflective display device 5200 may display various colors or adjust the saturation of the displayed colors by adjusting the intensities or application times of the electric fields applied to the first and second particles 5250 and 5260, as will be described below,.

According to still another embodiment of the present invention, minimum intensities (i.e., threshold values) or minimum application times (i.e., response times) of electric fields required to drive (i.e., move or electrophorese) the first and second particles 5250 and 5260 may be set to be different from each other.

Specifically, according to still another embodiment of the present invention, the first and second particles 5250 and 5260 do not move or rarely move when the intensities of the applied electric fields are less than each of the threshold values thereof. On the contrary, the first and second particles 5250 and 5260 may move enough to change the display state of the reflective display device 5200 only when the intensities of the applied electric fields are equal to or higher than each of the threshold values. Here, the threshold values of the first and second particles 5250 and 5260 may be set to be different from each other.

Further, according to still another embodiment of the present invention, the first and second particles 5250 and 5260 do not move or rarely move when the electric fields are applied for a period of time shorter than each of the response times thereof. On the contrary, the first and second particles 5250 and 5260 may move enough to change the display state of the reflective display device 5200 only when the electric fields are applied for a period of time equal to or longer than each of the response times. Here, the response times of the first and second particles 5250 and 5260 may be set to be different from each other.

According to still another embodiment of the present invention, a method for adjusting the threshold value or response time of the first or second particles 5250 or 5260 is provided, which may adjust surface charges, coating thickness, zeta potentials, dielectric constants, specific gravities, densities, sizes, shapes, and structures of the particles; dielectric constants, viscosities, and specific gravities of the fluids in which the particles are dispersed; additives added into the fluids in which the particles are dispersed; electrode patterns, electrode intervals, electrode sizes, and electrode materials of the electrodes for applying electric fields to the particles and fluids; electric fields substantially applied to the particles by the electrodes; and the like.

For another example, the particles or the fluids in which the particles are dispersed may include ferroelectric or antiferroelectric materials, the dielectric constants of which rapidly increase or decrease according to electric fields. In this case, there exist threshold values of intensities of the electric fields at which the dielectric constants of the particles or fluids rapidly change, and thus there also exist threshold values of intensities of the electric fields that critically affects the movement or behavior of the particles. Consequently, the particles may rapidly move at a specific threshold value.

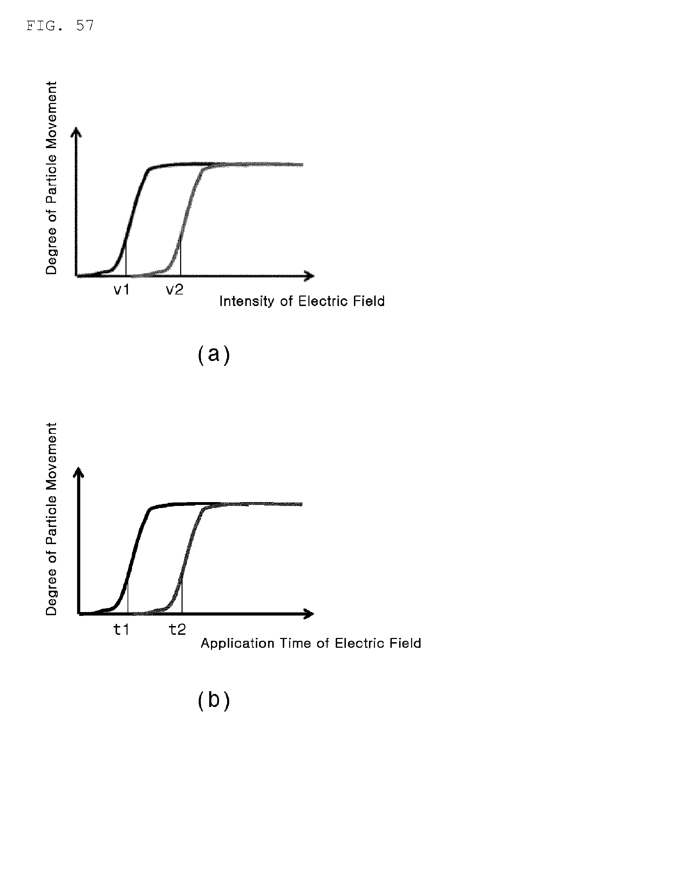

Meanwhile, FIG. 57 illustratively shows threshold values of intensities and application times (i.e., response times) of electric fields for moving first particles and second particles included in a reflective display device according to still another embodiment of the present invention.

With reference to (a) of FIG. 57, the intensities (i.e., threshold values) of electric fields required to move the first and second particles 5250 and 5260 may be V₁ and V₂, respectively. Further, with reference to (b) of FIG. 57, the application times (i.e., response times) of the electric fields required to move the first and second particles 5250 and 5260 may be t₁ and t₂, respectively.

Specifically, with reference to FIG. 52, the lower electrode 5240 (or the upper electrode 5230) may be configured to be formed only in a partial area of the display surface. Therefore, according to still another embodiment of the present invention, when an electric field in a predetermined direction is applied through the lower electrode 5240 formed to cover only a partial area of the display surface, the first or second particles 5250 or 5260 are concentrated around the lower electrode 5240 so that light that entering the reflective display device 5200 may be intactly transmitted or the color of the fluid 5270 or the lower substrate 5220 may be displayed. Further, when no electric field is applied or an electric field in the opposite direction is applied through the upper or lower electrode 5230 or 5240, the first or second particles 5250 or 5260 are concentrated around the upper electrode 5230 so that the color of the first or second particles 5250 or 5260 may be displayed.

Next, with reference to FIG. 53, the upper and lower electrodes 5230 and 5240 may be formed to cover the entire area of the display surface, respectively. Therefore, according to still another embodiment of the present invention, when an electric field in a predetermined direction is applied through the upper or lower electrode 5230 or 5240 formed on the entire area of the display surface, the first or second particles 5250 or 5260 are concentrated around the lower electrode 5240 so that the color of the fluid 5270 or the lower substrate 5220 may be displayed. Further, when an electric field in the opposite direction is applied through the upper or lower electrode 5230 or 5240, the first or second particles 5250 or 5260 are concentrated around the upper electrode 5230 so that the color of the first or second particles 5250 or 5260 may be displayed.

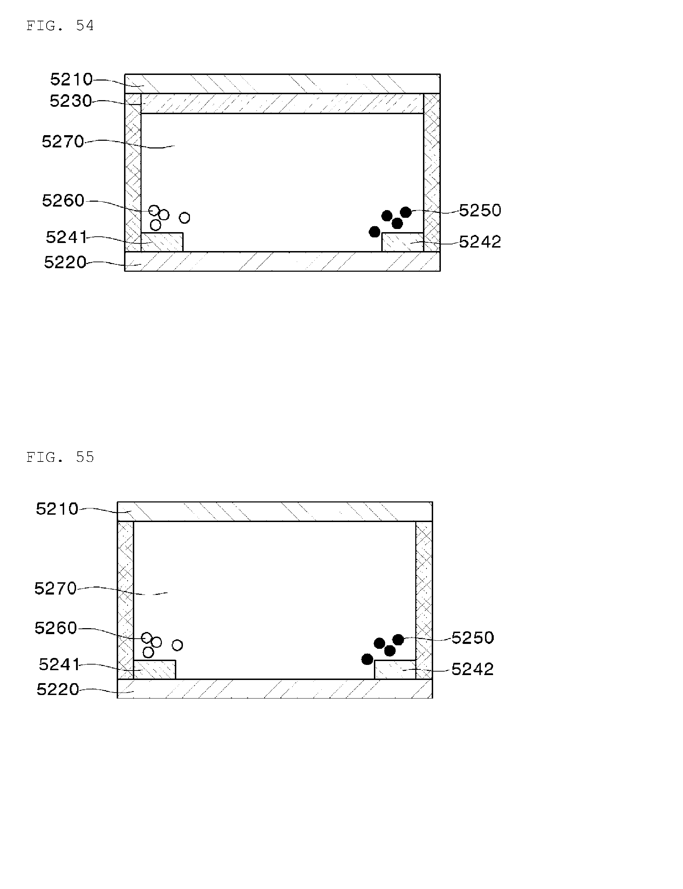

Next, with reference to FIG. 54, the lower electrode 5240 (or the upper electrode 5230) may be configured with a plurality of partial electrodes 5241 and 5242 formed to cover only partial areas of the display surface. Therefore, according to still another embodiment of the present invention, when an electric field in a predetermined direction is applied through the upper electrode 5230 and the lower electrode 5240 configured with two partial electrodes 5241 and 5242 formed to cover only partial areas of the display surface, the first or second particles 5250 or 5260 are concentrated around the lower electrode 5241, 5242 so light that entering the reflective display device 5200 may be intactly transmitted or the color of the fluid 5270 or the lower substrate 5220 may be displayed. Further, when no electric field is applied or an electric field in the opposite direction is applied through the upper or lower electrode 5230 or 5240, the first or second particles 5250 or 5260 are concentrated around the upper electrode 5230 so that the color of the first or second particles 5250 or 5260 may be displayed.

Next, with reference to FIG. 55, the reflective display device 5200 according to still another embodiment of the present invention does not comprise the upper electrode 5230 but may only comprise the lower electrode 5240 configured with a plurality of partial electrodes 5241 and 5242 formed to cover only partial areas of the display surface, and an electric field may be applied between the plurality of partial electrodes 5241 and 5242 constituting the lower electrode 5240. Therefore, according to still another embodiment of the present invention, when an electric field in a predetermined direction is applied between the first and second partial electrodes 5241 and 5242 through the first and second partial electrodes 5241 and 5242, the first or second particles 5250 or 5260 are concentrated around the first or second partial electrode 5241 or 5242 so that light entering the reflective display device 5200 may be intactly transmitted or the color of the fluid 5270 or the lower substrate 5220 may be displayed. Further, when no electric field is applied or an electric field in the opposite direction is applied between the first and second partial electrode 5241 and 5242, the first or second particles 5250 or 5260 are concentrated around the upper substrate 5210 so that the color of the first or second particles 5250 or 5260 may be displayed.

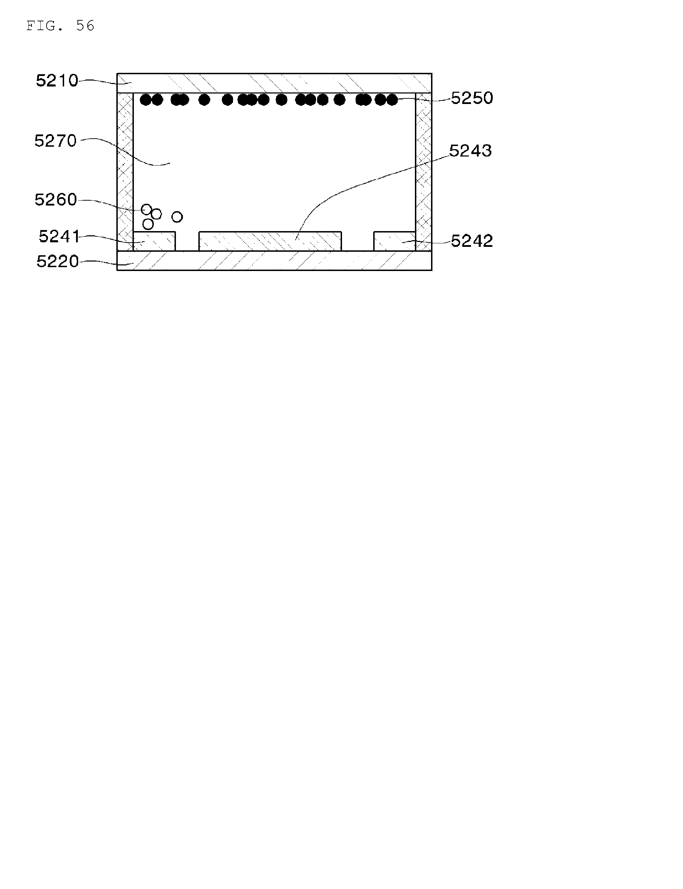

Next, with reference to FIG. 56, the reflective display device 5200 according to still another embodiment of the present invention does not comprise the upper electrode 5230 but may only comprise the lower electrode 5240 configured with a plurality of partial electrodes 5241, 5242, and 5243 formed to cover only partial areas of the display surface, and an electric field may be applied between the plurality of partial electrodes 5241, 5242, and 5243 constituting the lower electrode 5240. Therefore, according to still another embodiment of the present invention, when an electric field in a predetermined direction is applied between the first and second partial electrodes 5241 and 5242 and the third partial electrode 5243 through the first, second and third partial electrodes 5241, 5242 and 5243, the first or second particles 5250 or 5260 are concentrated around the first and second partial electrodes 5241 and 5242 or around the third partial electrode 5243 so that light entering the reflective display device 5200 may be intactly transmitted or the color of the fluid 5270 or the lower substrate 5220 may be displayed. Further, when no electric field is applied or an electric field in the opposite direction is applied between the first and second partial electrodes 5241 and 5242 and the third partial electrode 5243, the first or second particles 5250 or 5260 are concentrated around the upper substrate 5210 so that the color of the first or second particles 5250 or 5260 may be displayed.

### Operation of the reflective display device

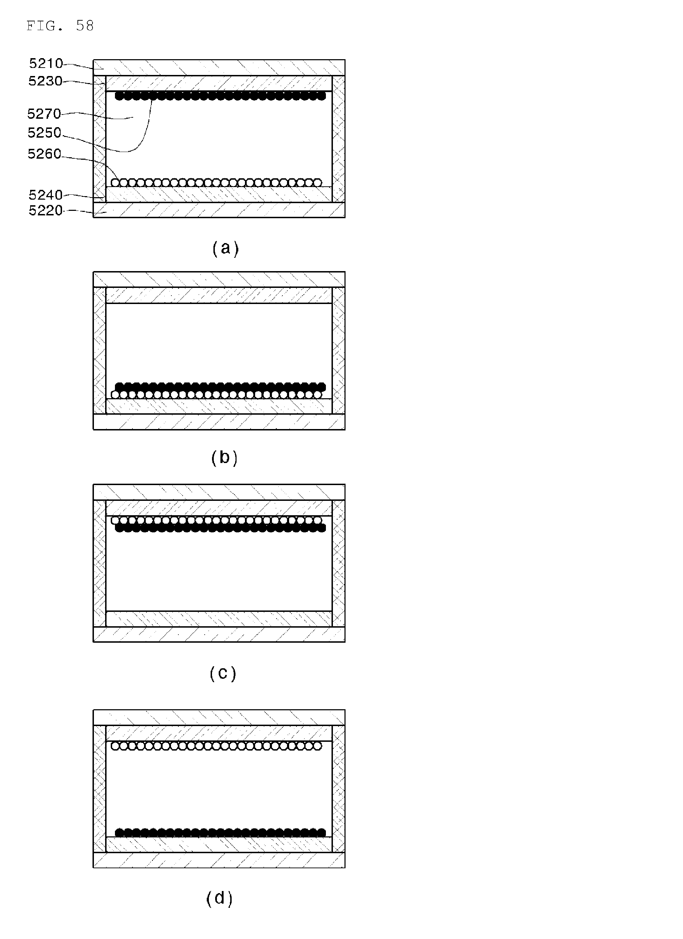

FIG. 58 illustratively shows configurations for controlling a display state of a reflective display device according to still another embodiment of the present invention by adjusting intensities or application times of electric fields.

In the embodiment of FIG. 58, it may be assumed that all of the first and second particles 5250 and 5260 are positively charged, and the threshold value of the second particles 5260 is larger than that of the first particles 5250.

In this case, first, with reference to (a) of FIG. 58, when all of the first and second particles 5250 and 5260 are concentrated around the lower electrode 5240, an electric field with an intensity higher than the threshold value of the first particles 5250 and lower than that of the second particles 5260 is applied to the first and second particles 5250 and 5260 in a direction in which the potential of the upper electrode 5230 is lower than that of the lower electrode 5240, so that only the first particles 5250 are moved by electrophoresis and located concentratively at the upper electrode 5230 while the second particles 5260 do not move and are located concentratively at the lower electrode 5240. Accordingly, the reflective display device 5200 according to still another embodiment of the present invention may display the inherent color of the first particles 5250.

Next, with reference to (b) of FIG. 58, in the state shown in (a) of FIG. 58, an electric field with an intensity higher than the threshold value of the first particles 5250 and lower than that of the second particles 5260 is applied to the first and second particles 5250 and 5260 in a direction in which the potential of the upper electrode 5230 is higher than that of the lower electrode 5240, so that only the first particles 5250 are moved by electrophoresis and located concentratively at the lower electrode 5240 while the second particles 5260 do not move and are located concentratively at the lower electrode 5240. Accordingly, the reflective display device 5200 according to still another embodiment of the present invention may display the inherent color of the fluid 5270 or the light transmittance may be increased.

Next, with reference to (c) of FIG. 58, in the state show in (b) of FIG. 58, an electric field with an intensity higher than the threshold value of the second particles 5260 is applied to the first and second particles 5250 and 5260 in a direction in which the potential of the upper electrode 5230 is lower than that of the lower electrode 5240, so that all of the first and second particles 5250 and 5260 are moved by electrophoresis and located concentratively at the upper electrode 5230. Accordingly, the reflective display device 5200 according to still another embodiment of the present invention may display the inherent colors of the first and second particles 5250 and 5260 in a mixed manner.

Next, with reference to (d) of FIG. 58, in the state shown in (c) of FIG. 58, an electric field with an intensity higher than the threshold value of the first particles 5250 and lower than that of the second particles 5260 is applied to the first and second particles 5250 and 5260 in a direction in which the potential of the upper electrode 5230 is higher than that of the lower electrode 5240, so that only the first particles 5250 are moved by electrophoresis and located concentratively at the lower electrode 5240 while the second particles 5260 do not move and are located concentratively at the upper electrode 5230. Accordingly, the reflective display device 5200 according to still another embodiment of the present invention may display the inherent color of the second particles 5260.

Meanwhile, in the embodiment of FIG. 58, it may be assumed that all of the first and second particles 5250 and 5260 are positively charged, and the response time of the second particles 5260 is longer than that of the first particles 5250.

In this case, first, with reference to (a) of FIG. 58, when all of the first and second particles 5250 and 5260 are concentrated around the lower electrode 5240, an electric field is applied to the first and second particles 5250 and 5260 for a period of time longer than the response time of the first particles 5250 and shorter than that of the second particles 5260 in a direction in which the potential of the upper electrode 5230 is lower than that of the lower electrode 5240, so that only the first particles 5250 are moved by electrophoresis and located concentratively at the upper electrode 5230 while the second particles 5260 do not move and are located concentratively at the lower electrode 5240. Accordingly, the reflective display device 5200 according to still another embodiment of the present invention may display the inherent color of the first particles 5250.

Next, with reference to (b) of FIG. 58, in the state shown in (a) of FIG. 58, an electric field is applied to the first and second particles 5250 and 5260 for a period of time longer than the response time of the first particles 5250 and shorter than that of the second particles 5260 in a direction in which the potential of the upper electrode 5230 is higher than that of the lower electrode 5240, so that only the first particles 5250 are moved by electrophoresis and located concentratively at the lower electrode 5240 while the second particles 5260 do not move and are located concentratively at the lower electrode 5240. Accordingly, the reflective display device 5200 according to still another embodiment of the present invention may display the inherent color of the fluid 5270 or the light transmittance may be increased.

Next, with reference to (c) of FIG. 58, in the state shown in (b) of FIG. 58, an electric field is applied to the first and second particles 5250 and 5260 for a period of time longer than the response time of the second particles 5260 in a direction in which the potential of the upper electrode 5230 is lower than that of the lower electrode 5240, so that all of the first and second particles 5250 and 5260 are moved by electrophoresis and located concentratively at the upper electrode 5230. Accordingly, the reflective display device 5200 according to still another embodiment of the present invention may display the inherent colors of the first and second particles 5250 and 5260 in a mixed manner.

Next, with reference to (d) of FIG. 58, in the state shown in (c) of FIG. 58, an electric field is applied to the first and second particles 5250 and 5260 for a period of time longer than the response time of the first particles 5250 and shorter than that of the second particles 5260 in a direction in which the potential of the upper electrode 5230 is higher than that of the lower electrode 5240, so that only the first particles 5250 are moved by electrophoresis and located concentratively at the lower electrode 5240 while the second particles 5260 do not move and are located concentratively at the upper electrode 5230. Accordingly, the reflective display device 5200 according to still another embodiment of the present invention may display the inherent color of the second particles 5260.

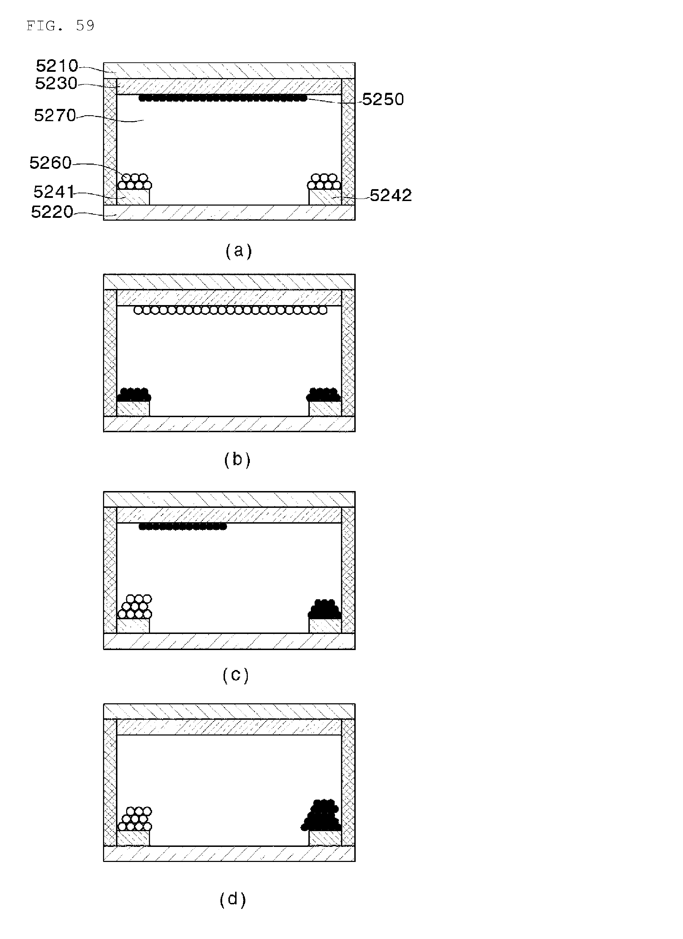

FIG. 59 illustratively shows configurations for controlling a display state of a reflective display device according to still another embodiment of the present invention by adjusting intensities of electric fields applied between an upper electrode and a lower electrode comprised of first and second partial electrodes.

In the embodiment of FIG. 59, it may be assumed that the first particles 5250 are positively charged while the second particles 5260 are negatively charged.

In this case, first, with reference to (a) of FIG. 59, an electric field is applied to the first and second particles 5250 and 5260 in a direction in which the potential of the upper electrode 5230 is lower than that of the lower electrode (i.e., the first and second partial electrodes 5241 and 5242), so that the positively charged first particles 5250 are moved upward by electrophoresis and located concentratively at the upper electrode 5230 while the negatively charged second particles 5260 are moved downward by electrophoresis and located concentratively at the first and second partial electrodes 5241 and 5242. Accordingly, the reflective display device 5200 according to still another embodiment of the present invention may display the inherent color of the first particles 5250.

Next, with reference to (b) of FIG. 59, in the state shown in (a) of FIG. 59, an electric field is applied to the first and second particles 5250 and 5260 in a direction in which the potential of the upper electrode 5230 is higher than that of the lower electrode (i.e., the first and second partial electrodes 5241 and 5242), so that the positively charged first particles 5250 are moved downward by electrophoresis and located concentratively at the first and second partial electrodes 5241 and 5242 while the negatively charged second particles 5260 are moved upward by electrophoresis and located concentratively at the upper electrode 5230. Accordingly, the reflective display device 5200 according to still another embodiment of the present invention may display the inherent color of the second particles 5260.

Next, with reference to (c) of FIG. 59, in the state shown in (b) of FIG. 59, an electric field is applied to the first and second particles 5250 and 5260 in a direction in which the potentials of the upper electrode 5230 and the second partial electrode 5242 are lower than that of the first partial electrode 5241, so that the positively charged first particles 5250 are moved by electrophoresis and located concentratively at the upper electrode 5230 or the second partial electrode 5242 while the negatively charged second particles 5260 are moved by electrophoresis and only located concentratively at the first partial electrode 5241. Accordingly, the reflective display device 5200 according to still another embodiment of the present invention may display the inherent colors of the first particles 5250 and the fluid 5270 (or the lower substrate 5220) in a mixed manner, or may display the inherent color of the first particles 5250 and the light transmittance may be increased.

Next, with reference to (d) of FIG. 59, in the state shown in (c) of FIG. 59, an electric field is applied to the first and second particles 5250 and 5260 in a direction in which the potential of the upper electrode 5230 is higher than that of the second or first partial electrode 5242 or 5241 while the potential of the first partial electrode 5241 is higher than that of the second partial electrode 5242, so that the positively charged first particles 5250 are moved by electrophoresis and only located concentratively at the second partial electrode 5242 while the negatively charged second particles 5260 are not moved by electrophoresis and only located concentratively at the first partial electrode 5241. Accordingly, the reflective display device 5200 according to still another embodiment of the present invention may display the inherent color of the fluid 5270 or the lower substrate 5220, or the light transmittance may be increased.

FIG. 60 illustratively shows configurations for controlling a display state of a reflective display device according to still another embodiment of the present invention by adjusting intensities of electric fields applied between first and second partial electrodes constituting a lower electrode without an upper electrode.

In the embodiment of FIG. 60, it may be assumed that all of the first and second particles 5250 and 5260 are positively charged, and the threshold value of the second particles 5260 is larger than that of the first particles 5250.

In this case, first, with reference to (a) of FIG. 60, a pulse electric field having a positive potential is periodically applied to the first and second particles 5250 and 5260 through the first or second partial electrode 5241 or 5242 with an intensity higher than the threshold value of the second particles 5260, so that the positively charged first and second particles 5250 and 5260 may be irregularly dispersed in the fluid 5270. Accordingly, the reflective display device 5200 according to still another embodiment of the present invention may display the inherent colors of the first particles 5250, the second particles 5260 and the fluid 5270 (or the lower substrate 5220) in a mixed manner.

Next, with reference to (b) of FIG. 60, in the state shown in (a) of FIG. 60, an electric field is applied to the first and second particles 5250 and 5260 with an intensity higher than the threshold value of the first particles 5250 and lower than that of the second particles 5260 in a direction in which the potential of the first partial electrode 5241 is lower than that of the second partial electrode 5242, so that only the first particles 5250 are moved by electrophoresis and located concentratively at the first partial electrode 5241 while the second particles 5260 are not moved by electrophoresis and maintained as irregularly dispersed in the fluid 5270. Accordingly, the reflective display device 5200 according to still another embodiment of the present invention may display the inherent colors of the second particles 5260 and the fluid 5270 (or the lower substrate 5220) in a mixed manner, or may display the inherent color of the second particles 5260 and the light transmittance may be increased.

Next, with reference to (c) of FIG. 60, in the state shown in (b) of FIG. 60, an electric field having a negative potential is applied to the first and second particles 5250 and 5260 through the first or second partial electrode 5241 or 5242 with an intensity higher than the threshold value of the second particles 5260, so that all of the first and second particles 5250 and 5260 are moved by electrophoresis and located concentratively at the first or second partial electrode 5241 or 5242. Accordingly, the reflective display device 5200 according to still another embodiment of the present invention may display the inherent color of the fluid 5270 or the lower substrate 5220, or the light transmittance may be increased.

Next, with reference to (d) of FIG. 60, in the state shown in (c) of FIG. 60, a pulse electric field having a positive potential is periodically applied to the first and second particles 5250 and 5260 through the first or second partial electrode 5241 or 5242 with an intensity lower than the threshold value of the first particles 5250 and higher than that of the second particles 5260, so that the second particles 5260 are not moved by electrophoresis and still located concentratively at the first or second partial electrode 5241 or 5242 while the first particles 5250 are moved by electrophoresis and irregularly dispersed in the fluid 5270. Accordingly, the reflective display device 5200 according to still another embodiment of the present invention may display the inherent colors of the first particles 5250 and the fluid 5270 (or the lower substrate 5220) in a mixed manner, or may display the inherent color of the first particles 5250 and the light transmittance may be increased.

In the foregoing, the embodiments in which the first and second particles are mixed have been mainly described. However, the configurations of the present invention are not necessarily limited to the above embodiments. It should be noted that the configurations of the present invention may also be applied to the embodiments in which three or more types of particles having different threshold values or response times are mixed.

Further, in the foregoing, the embodiments of the respective configurations for using the threshold values of particles and using the response times of particles have been mainly described. However, the configurations of the present invention are not necessarily limited to the above embodiments. It should be noted that there may naturally be assumed the embodiments in which both of the intensities and application times of electric fields applied to the first and second particles having different threshold values and response times are adjusted so that the light transmittance of the reflective display device and the colors displayed by the reflective display device may be adjusted using both of the threshold values and response times of the particles.

Although the present invention has been described as above in terms of specific items such as detailed elements as well as the limited embodiments and drawings, they are only provided to help general understanding of the invention, and the present invention is not limited to the above embodiments. It will be appreciated by those skilled in the art that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A reflective display device, comprising:
a first unit cell containing a first fluid in which first charged particles are dispersed;
a second unit cell containing a second fluid in which second charged particles are dispersed;
an electric field applying unit for applying an electric field to the first and second unit cells; and
a control unit for controlling colors displayed from the first and second unit cells by adjusting at least one of an intensity and an application time of the applied electric field,
wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and
wherein the threshold values of the first and second particles are set to be different from each other, and the response times of the first and second particles are set to be different from each other.

2. A reflective display device, comprising:
first charged particles having a light transmittance equal to or lower than a predetermined value;
second charged particles having an inherent color;
an electric field applying unit for applying an electric field to the first and second particles; and
a control unit for controlling at least one of a light transmittance of incident light to be blocked by the first particles and a color displayed by the second particles, by adjusting at least one of an intensity and an application time of the applied electric field,
wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and
wherein the threshold values of the first and second particles are set to be different from each other, and the response times of the first and second particles are set to be different from each other.

3. A reflective display device, comprising:
an upper substrate and a lower substrate;
an electrode disposed on at least one of the upper and lower substrates;
first charged particles and second charged particles positioned between the upper and lower substrates;
a fluid positioned between the upper and lower substrates, in which the first and second particles are dispersed; and
a control unit for controlling colors displayed from at least one of the first particles, second particles, fluid, electrode, upper substrate, and lower substrate, by adjusting at least one of an intensity and an application time of an electric field applied to the first particles, second particles, and fluid,
wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and
wherein the threshold values of the first and second particles are set to be different from each other, and the response times of the first and second particles are set to be different from each other.

4. The reflective display device according to any one of Claims 1 to 3, wherein at least one of the threshold values and the response times of the first and second particles are set by adjusting at least one of surface charges, zeta potentials, dielectric constants, specific gravities, densities, sizes, shapes, and structures of the first and second particles; a dielectric constant, viscosity, and specific gravity of the fluid in which the first and second particles are dispersed; additives added into the fluid in which the first and second particles are dispersed; an electrode pattern, electrode interval, electrode size, and electrode material of the electric field applying unit; and an electric field substantially applied to the first or second particles by the electric field applying unit.

5. The reflective display device according to any one of Claims 1 to 3, wherein if the threshold value of the second particles is set to be higher than that of the first particles,
none of the first and second particles are moved when the electric field is applied with an intensity lower than the threshold value of the first particles;
the first particles are moved by means of an electric force caused by the electric field when the electric field is applied with an intensity equal to or higher than the threshold value of the first particles and lower than that of the second particles; and
both of the first and second particles are moved by means of an electric force caused by the electric field when the electric field is applied with an intensity equal to or higher than the threshold value of the second particles.

6. The reflective display device according to any one of Claims 1 to 3, wherein if the response time of the second particles is set to be longer than that of the first particles,
none of the first and second particles are moved when the electric field is applied for a period of time shorter than the response time of the first particles;
the first particles are moved by means of an electric force caused by the electric field when the electric field is applied for a period of time equal to or longer than the response time of the first particles and shorter than that of the second particles; and
both of the first and second particles are moved by means of an electric force caused by the electric field when the electric field is applied for a period of time equal to or longer than the response time of the second particles.

7. The reflective display device according to any one of Claims 1 to 3, wherein if the threshold value of the second particles is set to be higher than that of the first particles, and the response time of the first particles is set to be longer than that of the second particles,
none of the first and second particles are moved when the electric field is applied with an intensity lower than the threshold value of the first particles and for a period of time shorter than the response time of the second particles;
the second particles are moved by means of an electric force caused by the electric field when the electric field is applied with an intensity equal to or higher than the threshold value of the second particles and for a period of time equal to or longer than the response time of the second particles and shorter than that of the first particles;
the first particles are moved by means of an electric force caused by the electric field when the electric field is applied with an intensity equal to or higher than the threshold value of the first particles and lower than that of the second particles and for a period of time equal to or longer than the response time of the first particles; and
both of the first and second particles are moved by means of an electric force caused by the electric field when the electric field is applied with an intensity equal to or higher than the threshold value of the second particles and for a period of time equal to or longer than the response time of the first particles.

8. The reflective display device according to any one of Claims 1 to 3, wherein contrast of the displayed color is adjusted by adjusting at least one of the intensity, direction, application time, number of applications, and application interval of the applied electric field within a range not crossing the threshold value of the first or second particles.

9. The reflective display device according to any one of Claims 1 to 3, wherein contrast of the displayed color is adjusted by adjusting at least one of the intensity, direction, application time, number of applications, and application interval of the applied electric field within a range not crossing the response time of the first or second particles.

10. The reflective display device according to any one of Claims 1 to 3, wherein after a predetermined period of time has elapsed from when the electric field is applied, the control unit allows a refresh electric field to be applied to the first and second particles with an intensity lower than that of the above electric field or for an application time shorter than that of the above electric field.

11. The reflective display device according to Claim 1, wherein the first and second unit cells are defined by capsules comprised of light transmitting materials.

12. The reflective display device according to Claim 1, wherein the first and second unit cells are defined by partitions formed in the direction perpendicular to a display surface.

13. The reflective display device according to Claim 2, wherein light transmittance of the incident light is decreased as the first particles are more dispersed in the direction parallel to a display surface.

14. The reflective display device according to Claim 2, wherein brightness of the color displayed by the second particles is decreased as the first particles are more dispersed in the direction parallel to a display surface.

15. The reflective display device according to Claim 2, wherein saturation of the color displayed by the second particles is increased as the second particles are more dispersed in the direction parallel to a display surface.

16. The reflective display device according to Claim 2, further comprising at least one unit cell being defined by at least one of capsules comprised of light transmitting materials and partitions formed in the direction perpendicular to a display surface, and containing the first and second particles.

17. The reflective display device according to Claim 3, wherein at least two of the first particles, second particles, fluid, electrode, upper substrate, and lower substrate have colors different from each other.

18. The reflective display device according to Claim 3, wherein at least one of the first particles, second particles, fluid, electrode, upper substrate, and lower substrate is comprised of a light transmitting material.

19. The reflective display device according to Claim 3, wherein the electrode comprises an upper electrode, and a lower electrode configured with at least two partial electrodes.

20. The reflective display device according to Claim 19, wherein the electric field is applied to at least one of a location between the upper electrode and a first partial electrode of the lower electrode, a location between the upper electrode and a second partial electrode of the lower electrode, and a location between the first and second partial electrodes of the lower electrode.

21. The reflective display device according to Claim 3, wherein the electrode is formed to cover only a part of a display surface.

22. The reflective display device according to Claim 3, wherein the first and second particles are charged with polarities different from each other.

23. A method for controlling a reflective display device, comprising:
applying an electric field to a first unit cell containing a first fluid in which first charged particles are dispersed and a second unit cell containing a second fluid in which second charged particles are dispersed; and
controlling colors displayed from the first and second unit cells by adjusting at least one of an intensity and an application time of the applied electric field,
wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and
wherein the threshold values of the first and second particles are set to be different from each other, and the response times of the first and second particles are set to be different from each other.

24. A method for controlling a reflective display device, comprising:
applying an electric field to first charged particles having a light transmittance equal to or lower than a predetermined value and second charged particles having an inherent color; and
controlling at least one of a light transmittance of incident light to be blocked by the first particles and a color displayed by the second particles, by adjusting at least one of an intensity and an application time of the applied electric field,
wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and
wherein the threshold values of the first and second particles are set to be different from each other, and the response times of the first and second particles are set to be different from each other.

25. A method for controlling a reflective display device, comprising:
applying an electric field to first charged particles and second charged particles dispersed in a fluid positioned between an upper substrate and a lower substrate on which an electrode is disposed; and
controlling colors displayed from at least one of the first particles, second particles, fluid, electrode, upper substrate, and lower substrate, by adjusting at least one of an intensity and an application time of the electric field applied to the first particles, second particles and fluid,
wherein the first and second particles do not move when the electric field is applied with an intensity less than each of threshold values thereof or for a period of time shorter than each of response times thereof, and move when the electric field is applied with an intensity equal to or higher than each of the threshold values thereof and for a period of time equal to or longer than each of the response times thereof, and
wherein the threshold values of the first and second particles are set to be different from each other, and the response times of the first and second particles are set to be different from each other.
